# EUROPEAN PATENT APPLICATION

(11) **EP 4 789 801 A1**
(43) Date of publication of application: **12.08.2026**
(21) Application number: 26157708.4
(22) Date of filing: 10.02.2026
(51) Int. Cl.: B23K 9/04, B23K 31/12

(54) **APPARATUS AND METHOD FOR ADDITIVE MANUFACTURING**

(30) Priority: 11.02.2025 US 202563757268 P; 11.02.2025 US 202563757266 P; 11.02.2025 US 202563757264 P; 12.03.2025 US 202563770841 P; 19.03.2025 US 202563774640 P; 25.11.2025 US 202519401219; 26.11.2025 US 202519402577; 31.12.2025 US 202519438269
(71) Applicant: Relativity Space, Inc., Long Beach, CA 90807 (US)
(72) Inventor: LEDGETT, Tyler, Long Beach, 90807 (US); DIVERDI, Rocco, Long Beach, 90807 (US); WEISFELD, Alexander, Long Beach, 90807 (US); ISHIGO, Alyssa, Long Beach, 90807 (US); MOGILEVSKIY, Vladislav, Long Beach, 90807 (US); HALL, Michael Robert, Long Beach, 90807 (US); WRIGHT JR., Van Earl Bishop, Long Beach, 90807 (US)
(74) Representative: EIP

(57) **Abstract**

Systems and methods for additive manufacturing processes and structures formed thereby, and more particularly to automated deposition processes for additive manufacturing are provided.

## Description

### FIELD OF THE INVENTION

This disclosure generally refers to systems and methods for additive manufacturing processes and structures formed thereby, and more particularly to automated deposition processes for additive manufacturing.

### CROSS-REFERENCES TO RELATED APPLICATIONS

The current application claims priority to Provisional Patent Application No. 63/757,268, filed February 11, 2025, Provisional Application No. 63/770,841, filed March 12, 2025, U.S. Patent Application No. 19/438,269, filed December 31, 2025, Provisional Patent Application No. 63/757,266, filed February 11, 2025, Provisional Patent Application No. 63/774,640, filed March 19, 2025, U.S. Patent Application No. 19/402,557, filed November 26, 2025, Provisional Patent Application No. 63/757,264, filed February 11, 2025, and U.S. Patent Application No, 19/401,219, filed November 25, 2025 the disclosures of which are incorporated herein by reference.

### BACKGROUND

Additive manufacturing is a process by which a product or component is manufactured by adding one layer of material on top of another in a sequence or pattern that would result in a solid component being built. This method of manufacturing is commonly referred to as three dimensional or 3-D printing and can be done with different materials, including plastic and metal. There are many different processes available for implementing 3-D printing of articles, including, among others, direct energy deposition, powder bed fusion, cold spray, etc.

The raster patterns of an additive manufacturing process dictates the pattern in which the material is laid to form the solid component. The raster pattern geometry determines the shape and structure of the resulting component. Wire arc additive manufacturing is an additive manufacturing technique. In wire arc additive manufacturing, a material is melted by a welding arc and can be deposited in layers in a specific raster pattern.

A witness coupon, also referred to as a test coupon or process coupon, is a representative sample of material that undergoes the same manufacturing processes as the manufactured article or product. This coupon is often designed for the validation of, and controlling the quality of, the various production steps of the manufactured article, such as casting, forging, wrought plate rolling, coating, welding, heat treatment, and additive manufacturing techniques such as laser powder bed fusion (L-PBF). The coupon functions as a surrogate, enabling testing and monitoring of the process conditions while the final product can remain in its manufactured state. By employing such coupons, manufacturers can effectively assess production quality without compromising the usability of the end product.

### SUMMARY OF THE INVENTION

Systems and methods in accordance with some embodiments of the invention are directed to systems and methods for additive manufacturing processes and structures formed thereby, and more particularly to automated deposition processes for additive manufacturing.

In some embodiments, the techniques described herein relate to a method for depositing a layer pattern including: defining a perimeter pattern polygon, wherein the perimeter pattern polygon includes a first portion and a second portion; depositing the first portion of the perimeter pattern polygon, wherein depositing the first portion of the perimeter pattern polygon includes depositing a first tail portion outside the area defined by the perimeter pattern polygon, wherein the first tail portion extends from a start point on the first portion of the perimeter pattern polygon; depositing an in-fill pattern within an area defined by the perimeter pattern polygon, wherein depositing the in-fill pattern within the area defined by the perimeter pattern polygon ends near the start point; and depositing the second portion of the perimeter pattern polygon, wherein depositing the second portion of the perimeter pattern polygon includes depositing a second tail portion outside the area defined by the perimeter pattern polygon, wherein the second tail portion extends from an end point on the second portion of the perimeter pattern polygon.

In some embodiments, the techniques described herein relate to a method, further including depositing a second layer pattern on top of a first layer pattern, wherein depositing the first portion of the perimeter pattern polygon of the second layer pattern is different than a start point of the first layer pattern.

In some embodiments, the techniques described herein relate to a method, wherein depositing the first portion of the perimeter pattern polygon, depositing the in-fill pattern, and depositing the second portion of the perimeter pattern polygon includes depositing a material at a feed rate; wherein the feed rate is dynamically changed.

In some embodiments, the techniques described herein relate to a method, wherein the feed rate of depositing the in-fill pattern is greater than the feed rate of depositing the first portion and the second portion of the perimeter pattern polygon.

In some embodiments, the techniques described herein relate to a method, wherein the feed rate of depositing the in-fill pattern is less than the feed rate of depositing the first portion and the second portion of the perimeter pattern polygon.

In some embodiments, the techniques described herein relate to a method, wherein the perimeter pattern polygon includes a first corner and a second corner, wherein the step of deposition the first portion of the perimeter pattern polygon begins at the first corner.

In some embodiments, the techniques described herein relate to a method, further including depositing a second layer pattern including depositing the first portion of the perimeter polygon of the second layer pattern begins at the second corner.

In some embodiments, the techniques described herein relate to a method, wherein the in-fill lines are at an offset angle from the in-fill lines of the second layer pattern.

In some embodiments, the techniques described herein relate to a method, wherein the first corner and the second corner are adjacent corners within the perimeter pattern polygon, wherein the offset angle is equal to an interior angle of the perimeter pattern polygon.

In some embodiments, the techniques described herein relate to a system for weld path planning including: a controller including a processor and a memory, wherein the memory includes an application configured to direct the processor to perform a method for determining a layer pattern including: determining a perimeter pattern, including a first portion and a second portion; and determining an in-fill pattern within an area defined by the perimeter pattern; wherein the layer pattern is a portion of a weld path plan that runs continuously from the first portion into the in-fill pattern and from the in-fill pattern into the second portion.

In some embodiments, the techniques described herein relate to a system, wherein the first portion of the perimeter pattern further includes a first tail portion, wherein the first tail portion is outside the area defined by the perimeter pattern, wherein the second portion of the perimeter pattern further includes a second tail portion, wherein the second tail portion is outside the area defined by the perimeter pattern.

In some embodiments, the techniques described herein relate to a system, wherein the in-fill pattern includes a plurality of in-fill lines and a plurality of turn regions, and wherein the in-fill lines are approximately parallel.

In some embodiments, the techniques described herein relate to a system, wherein the first portion of the perimeter pattern includes a first side and a second side, wherein the second portion of the perimeter pattern includes a third side and a fourth side, and wherein the second side and the fourth side are approximately parallel to the in-fill lines.

In some embodiments, the techniques described herein relate to a system, wherein the in-fill lines are separated by an in-fill space, and wherein the turn region has a radius greater than the in-fill space.

In some embodiments, the techniques described herein relate to a system, wherein the in-fill pattern fills the area defined by the perimeter pattern.

In some embodiments, the techniques described herein relate to a system including: a controller including a processor and a memory, wherein the memory includes an application configured to direct the processor to perform a method, the method including: determining a plurality of layer patterns, wherein each layer pattern includes a continuous deposition, wherein each layer pattern includes: a perimeter pattern, including a first portion and a second portion; and an in-fill pattern within an area defined by the perimeter pattern, wherein the in-fill pattern includes a plurality of in-fill lines and a plurality of turn regions, and wherein the in-fill lines are approximately parallel; wherein the plurality of layer patterns are stacked, wherein a first layer pattern and a second layer pattern are adjacent in the stack, and wherein the in-fill lines of the first layer pattern are at an offset angle from the in-fill lines of the second layer pattern.

In some embodiments, the techniques described herein relate to a system, wherein each layer pattern includes a start point, wherein the start point is at a corner of the perimeter pattern.

In some embodiments, the techniques described herein relate to a system, wherein the start point of the first layer pattern is at a first corner of the perimeter pattern, wherein the start point of the second layer pattern is at a second corner of the perimeter pattern.

In some embodiments, the techniques described herein relate to a system, wherein the first corner and the second corner are adjacent corners within the perimeter pattern, wherein the offset angle is equal to an interior angle of the perimeter pattern.

In some embodiments, the techniques described herein relate to a system, wherein the first portion of the perimeter pattern of each layer pattern in the plurality of layer patterns includes a first side and a second side; wherein the second portion of the perimeter pattern includes a third side and a fourth side; and wherein the at least one of the first side, the second side, the third side, or the fourth side of the perimeter pattern of the first layer pattern is different than at least one of the first side, the second side, the third side, or the fourth side of the perimeter pattern of the second layer pattern.

In some embodiments, the techniques described herein relate to a process of additive manufacturing including: providing a geometry of a component to be printed; providing a substrate; acquiring a surface geometry of the substrate; determining a series of individual deposition layers; printing the component according to the series of individual deposition layers; pausing the printing of the component with remaining unprinted individual deposition layers in the series; evaluating a physical characteristics of the component; and adjusting the remaining unprinted individual deposition layers based on the evaluated physical characteristics.

In some embodiments, the techniques described herein relate to a process, wherein the step of evaluating the physical characteristics includes comparing the physical characteristics with the geometry of the component.

In some embodiments, the techniques described herein relate to a process, further including saving adjustments to the individual deposition layers.

In some embodiments, the techniques described herein relate to a process, wherein the step of saving is performed after the step of pausing.

In some embodiments, the techniques described herein relate to a process, wherein the step of determining the series of individual deposition layers includes adjusting the geometry of the component based on a previous step of saving adjustments to the individual deposition layers.

In some embodiments, the techniques described herein relate to a process, wherein the step of determining the series of individual deposition layers includes adjusting the geometry of the component based on the surface geometry of the substrate.

In some embodiments, the techniques described herein relate to a process of additive manufacturing including: providing one or more component geometries; printing one or more articles based on the one or more component geometries; adjusting one or more print parameters; recording the adjusted one or more print parameters; and incorporating the recorded adjusted one or more print parameters into the one or more component geometries.

In some embodiments, the techniques described herein relate to a process, wherein the step of adjusting one or more print parameters occurs during the step of printing.

In some embodiments, the techniques described herein relate to a process, wherein adjusting one or more print parameters includes evaluating a physical characteristic of the one or more articles.

In some embodiments, the techniques described herein relate to a process, further including pausing printing one or more articles to evaluate the physical characteristic of the one or more articles.

In some embodiments, the techniques described herein relate to a process, further including saving the recorded adjusted one or more print parameters.

In some embodiments, the techniques described herein relate to a process of additive manufacturing including: providing a part; providing one or more component geometries to be incorporated on the part; determining a series of individual deposition patterns for each component geometry; determine a plurality of depositions, wherein each deposition includes the series of the deposition patterns, wherein the plurality of depositions incorporates a coordinated movement between a weld torch and the part; and printing one or more components on the part by switching between components according to the plurality of depositions.

In some embodiments, the techniques described herein relate to a process, further including pausing the printing of one or more components to evaluate a physical characteristic of each component.

In some embodiments, the techniques described herein relate to a process, further including evaluating the physical characteristic each component to adjust one or more print parameters for each component.

In some embodiments, the techniques described herein relate to a process, wherein the physical characteristic of each component is saved.

In some embodiments, the techniques described herein relate to a process, wherein the saved physical characteristic of each component is compiled to form a print file for each component.

In some embodiments, the techniques described herein relate to a process, wherein the print file is incorporated into the component geometry.

In some embodiments, the techniques described herein relate to a process, wherein the print file is appended alongside the component geometry.

In some embodiments, the techniques described herein relate to a process, wherein the coordinated movement includes tilting the substrate.

In some embodiments, the techniques described herein relate to a process, wherein the coordinated movement includes tilting the weld torch.

In some embodiments, the techniques described herein relate to a method of additively manufacturing a witness coupon, the method including: determining a build volume of a witness coupon; determining an orientation of the witness coupon to replicate a property of a part; preparing a build plate for additive manufacturing the witness coupon; securing a fixture to an additive manufacturing system; electrically coupling and grounding the fixture and the additive manufacturing system; depositing a first layer of a material on the build plate; depositing a layer of the material on the part; depositing additional sequential layers of the material on the first layer of a material on the build plate forming the witness coupon; manufacturing the witness coupon concurrently layer by layer with the part; wherein the sequential layers are configured to be representative of at least one property of the concurrently manufactured part.

In some embodiments, the techniques described herein relate to a method further including, post-processing the witness coupon to match post-processing conditions of the part.

In some embodiments, the techniques described herein relate to a method further including, extracting at least one test sample from the witness coupon.

In some embodiments, the techniques described herein relate to a method further including, subjecting the at least one test sample to a quality assurance test selected from the group consisting of non-destructive evaluation, destructive testing, statistical analysis to validate the additive manufacturing process.

In some embodiments, the techniques described herein relate to a method wherein, the build volume of the witness coupon is configured for a testing standard.

In some embodiments, the techniques described herein relate to a method wherein, wherein the at least one property is selected from the group consisting of grain structure and stress orientations.

In some embodiments, the techniques described herein relate to a method wherein, depositing the first layer of the material onto the build plate forms an interaction zone of the coupons and an interface between the witness coupon and the build plate.

In some embodiments, the techniques described herein relate to a method wherein, the additional sequential layers are deposited with a process parameter representative of the part the process parameter is selected from the group consisting of heat input, deposition rate, and cooling.

In some embodiments, the techniques described herein relate to an apparatus for additively manufacturing a witness coupon, the apparatus including: a fixture secured to an additive manufacturing system, the fixture being electrically coupled and grounded to the additive manufacturing system; wherein the fixture includes a build plate configured to support the deposition of a material for a witness coupon; a material deposition system configured to deposit a first layer of the material onto the build plate and additional sequential layers of the material onto the first layer; wherein the material deposition system sequentially print layers of the coupon and the part and is configured so that the layers of the coupon are representative of a property of the part; and wherein the witness coupon and the part are manufactured concurrently.

In some embodiments, the techniques described herein relate to an apparatus wherein, the property of the part is selected from the group consisting of heat input, deposition rate, cooling, grain structure and stress orientations.

In some embodiments, the techniques described herein relate to an apparatus wherein, an orientation of the witness coupon is optimized for printing and configured to replicate properties of a concurrently printed part.

In some embodiments, the techniques described herein relate to an apparatus wherein, the witness coupon is disposed at an electrical extremity from a grounding point.

In some embodiments, the techniques described herein relate to an apparatus wherein, the fixture is configured so that the witness coupon is located proximal to the part.

In some embodiments, the techniques described herein relate to an apparatus wherein, the fixture location is further configured to decrease a distance between the part and the coupon.

In some embodiments, the techniques described herein relate to a method of additively manufacturing a witness coupon, the method including: mounting a part to a build plate of an additive manufacturing system, wherein the part is mechanically coupled to the build plate and electrically coupled to the build plate; mounting a coupon fixture to the part, wherein the coupon fixture is mechanically coupled to the part and electrically coupled to the part; depositing, by the additive manufacturing system, a layer of a feature component on the part by melting a material onto the part using an electrical current flowing through the material, the part, and the build plate; and depositing, by the additive manufacturing system, a layer of a witness coupon on the coupon fixture by melting the material onto the coupon fixture using an electrical current flowing through the material, the coupon fixture, the part, and the build plate.

In some embodiments, the techniques described herein relate to a method, further including repeating the steps of the depositing the layer of the feature component and of the depositing the layer of the witness coupon until the feature component has been additively manufactured and the witness coupon has been additively manufactured.

In some embodiments, the techniques described herein relate to a method, further including cooling the witness coupon on the coupon fixture by cooling the coupon fixture using coolant flowing through the coupon fixture, the part, and the build plate.

In some embodiments, the techniques described herein relate to a method, further including: mounting a second coupon fixture to the build plate, wherein the second coupon fixture is mechanically coupled to the build plate and electrically coupled to the build plate; and depositing, by the additive manufacturing system, a layer of a second witness coupon on the second coupon fixture by melting the material onto the second coupon fixture using an electrical current flowing through the material, the second coupon fixture, and the build plate.

In some embodiments, the techniques described herein relate to a method, further including: mounting a second coupon fixture to an external support, wherein the second coupon fixture is mechanically coupled to the external support; and depositing, by the additive manufacturing system, a layer of a second witness coupon on the second coupon fixture by melting the material onto the second coupon fixture using an electrical current flowing through the material and the second coupon fixture.

In some embodiments, the techniques described herein relate to a method, further including: depositing, by the additive manufacturing system, a layer of a second witness coupon on the build plate by melting the material onto the build plate using an electrical current flowing through the material and the build plate.

Additional embodiments and features are set forth in component in the description that follows, and in component will become apparent to those skilled in the art upon examination of the specification or may be learned by the practice of the disclosure. A further understanding of the nature and advantages of the present disclosure may be realized by reference to the remaining portions of the specification and the drawings, which forms a component of this disclosure.

### BRIEF DESCRIPTION OF THE DRAWINGS

The description will be more fully understood with reference to the following figures, which are presented as embodiments of the invention and should not be construed as a complete recitation of the scope of the invention, wherein:
Figures 1A and 1B illustrate an example of a component formed with conventional wire arc additive manufacturing.
Figures 1C and 1D illustrate an example of a component formed in accordance with an embodiment.
Figure 2 schematically illustrates a deposition pattern.
Figure 3 illustrates a process for printing a layer pattern.
Figure 4 schematically illustrates a deposition pattern with a sacrificial start tail and a sacrificial end tail.
Figures 5A and 5B schematically illustrate reorientation of the start point for deposition of layer patterns in successive layers.
Figures 6 and 7 schematically illustrate a deposition pattern with substantially uniform extended turn regions.
Figure 8 schematically illustrates a deposition pattern with a last turn region extended beyond the previous turn regions.
Figures 9A and 9B illustrate a component printed in accordance with various embodiments.
Figures 10 and 11 schematically illustrates a deposition pattern with varied weld torch speed.
Figure 12A schematically illustrates a side view of a weld path plan for a printed component with curved sides.
Figures 12B and 12C schematically illustrate layer patterns for a printed component with curved sides.
Figure 13A schematically illustrates a side view of a weld path plan for a printed component in the shape of an arch.
Figures 13B and 13C schematically illustrate layer patterns for a printed component arch.
Figure 14 illustrates a process for determining a plurality of layer patterns for a printed component.
Figure 15 illustrates a plurality of layer patterns for a printed component.
Figure 16 illustrates a process diagram of an iterative additive manufacturing system in accordance with an embodiment.
Figure 17 illustrates a method of additive manufacturing in accordance with an embodiment.
Figure 18 illustrates a process of additive manufacturing in accordance with an embodiment.
Figure 19 illustrates an example of additive manufactured components printed in accordance with an embodiment.
Figure 20 schematically illustrates a system for printing multiple components on multiple build plates.
Figures 21A to 21H illustrate an example of an additive manufacturing in accordance with an embodiment.
Figure 22 shows a schematic of the ASTM E8 standard.
Figure 23 shows a schematic of a witness coupon additively manufactured in accordance with some embodiments of the disclosure.
Figure 24 shows a cross-section of a witness coupon additively manufactured on a build plate in accordance with some embodiments of the disclosure.
Figure 25A shows a schematic of an additive manufacturing apparatus in accordance with some embodiments of the disclosure.
Figure 25B shows an additive manufacturing apparatus in accordance with some embodiments of the disclosure.
Figures 26A and 26B show example witness coupon fixtures in accordance with some embodiments of the disclosure.
Figures 27 and 28 depict flow charts for methods of additively manufacturing witness coupons in accordance with some embodiments of the disclosure.
Figure 29 depicts a flow chart for a method of path planning to additively manufacture a witness coupon and components in accordance with some embodiments of the disclosure.

### DETAILED DESCRIPTION OF THE INVENTION

It will be understood that the components of the embodiments, as generally described herein and illustrated in the appended figures, may be arranged and designed in a variety of different configurations. Thus, the following more detailed description of various embodiments, as represented in the figures, is not intended to limit the scope of the present disclosure but is merely representative of various embodiments. While various aspects of the embodiments are presented in drawings, the drawings are not necessarily drawn to scale unless specifically indicated.

The present invention may be embodied in other specific forms without departing from its spirit or essential characteristics. The described embodiments are to be considered in all respects only as illustrative and not restrictive.

Reference throughout this specification to features, advantages, or similar language does not imply that all of the features and advantages that may be realized with the present invention should be or are in any single embodiment of the invention. Rather, language referring to the features and advantages is understood to mean that a specific feature, advantage, or characteristic described in connection with an embodiment is included in at least one embodiment of the present invention. Thus, discussions of the features and advantages and similar language throughout this specification may, but do not necessarily, refer to the same embodiment.

Furthermore, the described features, advantages, and characteristics of the invention may be combined in any suitable manner in one or more embodiments. One skilled in the relevant art will recognize, in light of the description herein, that the invention can be practiced without one or more of the specific features or advantages of a particular embodiment. In other instances, additional features and advantages may be recognized in certain embodiments that may not be present in all embodiments of the invention.

Reference throughout this specification to "one embodiment," "an embodiment," or similar language means that a particular feature, structure, or characteristic described in connection with the indicated embodiment is included in at least one embodiment. Thus, the phrases "in one embodiment," "in an embodiment," and similar language throughout this specification may but do not necessarily, all refer to the same embodiment.

Additive manufacturing (AM) is the process of creating an object by building one layer at a time. This process can be contrasted with conventional molding or casting techniques, in which components of an object are created via a premade mold or cast of the object and then assembled together.

Although it may have some benefits compared to conventional techniques, additive manufacturing creates challenges in ensuring that the final component has adequate engineering properties. Further, additive manufacturing is a genus term that actually references a number of different techniques, including, for example, binder jetting (BJT), cold spray additive manufacturing (CS), directed energy deposition (DED), wire arc additive manufacturing (WAAM) or directed energy deposition-arc (DED-arc), material extrusion, and powder bed fusion (PBF), and sheet lamination, including laminated object manufacturing (LOM) and ultrasonic additive manufacturing (UAM), among others. Each of these species of the additive manufacturing genus has different capabilities in terms of material limitations, overall component size attainable, individual feature size available, etc.; each has unique challenges related to engineering properties.

In AM techniques, deposition patterns may be pre-determined, and deposition layers may be deposited based on the deposition patterns. Aspects of this disclosure provide for deposition layer sequencing techniques directed towards WAAM, however, it should be understood that the automated deposition AM techniques disclosed herein are applicable to various AM techniques. WAAM specifically is a process in which a metal wire is provided from a tip of a welding torch while energy is applied to the metal wire and the resulting arc melts the wire to allow deposition to be layered in the desired shape of the component being manufactured. The material is deposited in a series of patterned layers, wherein the stacked layers results in the desired three-dimensional shape. The pattern of each layer may be consistent across the entire shape. The pattern of each layer may change across the entire shape. The material is deposited in the desired pattern based on the specific directions the welding torch is directed to move in. The specific directions may be designed in a computer program that directs the welding torch to apply heat, move, and remove heat as depicted in the programmed pattern.

Distortions and non-planar depositions are often unavoidable in any given AM process. Distortions and non-planar depositions may result from process excursions, such as changes in the movement of the system relative to itself, equipment calibration, wear on the system that may result in unknowable changes in process parameters, and/or manual process intervention such as changes in feedstock, consumables, environment, and/or instabilities in the process.

In WAAM processes, material is deposited starting with the initial arc. The start point of each deposition layer is when the heat is applied to the material to begin the deposition of the material. The start of a WAAM process deposition layer can result in component discontinuity. Non-planar deposition includes high profiles in the component structure caused by excess material pooling during the initial heating of the material. Non-planar deposition also includes low profiles in the component structure formed through undeposited material, wherein the welding torch began moving according to the pattern before the material was sufficiently heated to be deposited. Similarly, in WAAM processes, the end point is when heat is removed from the material to end the deposition of the material. As with the start point, the end point can also result in component defects due to the excess pooling and/or inadequate deposition of material when the heat source is removed. In a WAAM process a single layer may consist of multiple start points and stop points, due to the deposition of a perimeter pattern and a separate deposition of an in-fill pattern. Furthermore, pooling or cavities within each layer can result in the finished component having an irregular or bumpy outer surface. The layer defects can accumulate within the successive layers resulting in a distorted finished component. The start point and end point of each layer may result in a pooling and/or cavity of material. Additionally, defects and distortions can result from the fusion between deposition layers. Newly deposited deposition layers adhere to previous deposition layers through the molten material deposited and the molten material of the previous layer. As the molten material is deposited, it heats the previous layer resulting in the deposition layers fusing together. As the previous layer and deposited layer are melted together, uneven heating across the component can result in sagging and/or bumping. When the previous layer has been recently heated, sagging may occur when reheated during the deposition of the next layer. When the previous layer has cooled, bumping may occur due to lack of adequate melting of the previous layer.

AM techniques as described herein can be used to fabricate independent objects such as parts and/or components. AM techniques can manufacture components as a whole such that the component is a complete part. A component can be later integrated with another part, or it can remain independent. AM techniques can be used to fabricate feature components directly on another part and/or component. Feature components can be integrated on cladded regions, meaning regions with WAAM layers formed on a non-WAAM manufactured substrate, or a WAAM manufactured substrate made of a different metal than the cladded material, or a WAAM manufactured substrate made at an earlier time. Aspects of this disclosure are directed to AM techniques for components and/or feature components. Components and feature components can be fabricated according to various aspects of this disclosure depending on the application. It should be understood that aspects of this disclosure that reference components can be applied to feature components and reference feature components can be applied to components.

### Layer Patterns

Aspects of this disclosure provide for patterning techniques directed towards WAAM, however, it should be understood that patterning techniques disclosed herein are applicable to various AM techniques. The deposition layer is the deposited material within a single layer of the AM component. The material is layered in the desired shape based on a specific layer pattern in which the welding torch is directed to move. A deposition layer is deposited according to a layer pattern. The layer pattern is the portion of the weld path plan provided for a deposition head in an AM process of a single layer within an AM component. The layer pattern may be designed by a computer program that directs the welding torch to begin depositing material, move, and stop depositing material as depicted in the layer pattern. Each layer is deposited in a layer pattern with successive layer patterns each layered upon the previous layer. Each layer pattern may consist of a perimeter pattern and an in-fill pattern. The perimeter pattern is the perimeter portion of the layer pattern based on the portion of the weld path plan provided for the perimeter of a single layer of the AM component. The perimeter pattern is generally the outermost region of the layer pattern. The perimeter pattern and/or the in-fill pattern may form areas of the exterior surface of the finished component. The in-fill pattern is the interior portion of the layer pattern within the perimeter pattern and based on the portion of the weld path plan provided for the interior of a single layer of the AM component. The in-fill pattern is the interior area of the pattern within the perimeter pattern. The in-fill pattern may deposit material within the entire area defined by the perimeter pattern, or it may partially deposit material within the area within the perimeter pattern based on the desired shape and structure of the finished component. As described herein, deposition layers can be understood as physical objects resulting from a deposition process, while layer patterns can be understood as constructs, such as portions of a weld path plan stored in a computer memory. However, for the sake of convenience, layer patterns may also be discussed as though they were themselves physical objects, i.e., layer pattern may occasionally be synonymous with deposition layer, as will be clear from the context.

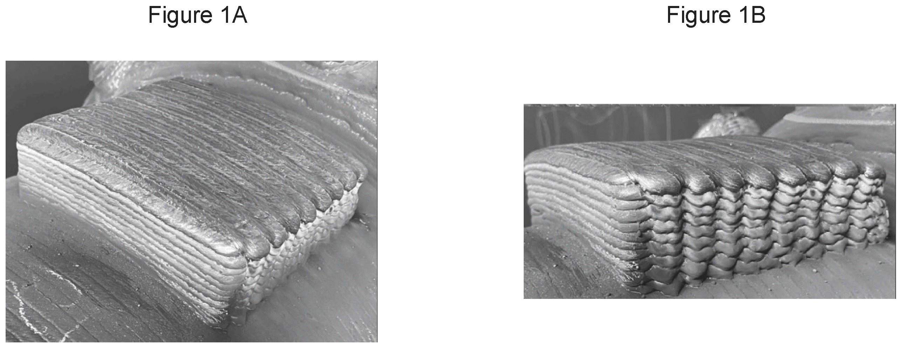

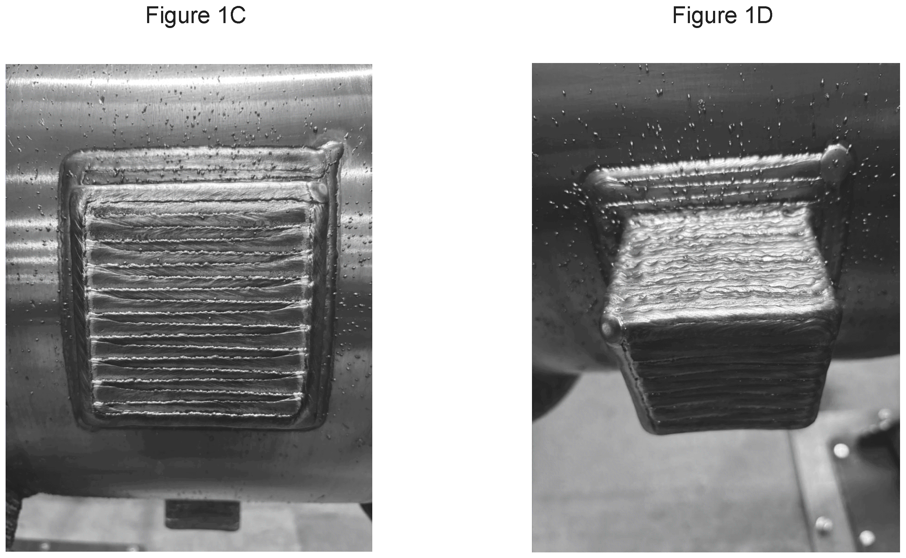

Aspects of this disclosure minimize component defects and are directed to techniques to manufacture finished components with a near-net shape, having a substantially level outer surface and/or generally sharp corners. Various embodiments described herein can be utilized to manufacture feature components integrated on cladded regions, meaning regions with WAAM layers formed on a non-WAAM manufactured substrate, or a WAAM manufactured substrate made of a different metal than the cladded material, or a WAAM manufactured substrate made at an earlier time. Various embodiments described herein can also be utilized to manufacture feature components integrated on a non-WAAM or WAAM manufactured substrate directly. In some embodiments the components may have one, some, or all of the following advantages. The substantially level feature component structures and/or sharp corners of many embodiments produce very near-net shape components due to the reduced waste from defects compared to structures manufactured without the techniques described herein. Components manufactured in accordance with several embodiments result in decreased defects and resulting component distortions compared to components manufactured without the techniques described herein. The reduction in defects comparatively reduces the waste included in the finished component. In some embodiments, the substantially level outer surface has comparatively reduced deviation from the designed component, such as a substantially planar surface or a substantially curved surface wherein the length and/or width of the layer patterns is modulated over the course of the build. In many embodiments, the substantially level outer surface is an external surface lacking-large scale irregularities. WAAM clad dual-curvature base surfaces are non-flat, however, can be substantially level when quantified by the variable roughness and dual curvature. The variable roughness is the input specifications from the component's modeled geometry measured against the surface of the printed feature component. Variable roughness may be quantified by the measured difference between the printed component and the modeled component at designated call out dimensions. The difference measured is the overprint. In various embodiments a component is level when the overprint is approximately 0.25 inches at the callout dimensions. In many embodiments a component is level when the overprint is approximately 0.225 inches. In several embodiments a component is level when the overprint is approximately 1 millimeter. The dual curvature measures the deposition pattern curvature against the desired curvature of the component. In many embodiments, the component has a level outer surface with dual curvature of approximately 0.1°. In several embodiments, the component has a level outer surface with a dual curvature of less than 0.1°. A component printed with conventional WAAM techniques may have significant dual curvature and variable roughness, as shown in Figures 1A and 1B respectively. In contrast, a component printed in accordance with the disclosure herein has reduced dual curvature and variable roughness, as shown in Figures 1C and 1D respectively.

In many embodiments, the perimeter pattern resembles a polygon. Aspects of this disclosure are directed towards a rectangular or square perimeter pattern. However, it should be understood that any perimeter pattern resembling a polygon is disclosed herein, including but not limited to a triangle, a pentagon, a hexagon, an octagon, and any other polygon. In many embodiments the sides of each perimeter pattern polygon are equal. In certain embodiments, two or more sides of the perimeter patten polygon may be unequal. A corner is formed where two sides of the perimeter pattern polygon meet and defines an interior angle. In some embodiments, the interior angle of every corner of the perimeter pattern polygon is equal. In many embodiments, the interior angle of two or more corners within the perimeter pattern polygon are unequal.

In some embodiments, within a single layer pattern, one or more perimeter pattern sides will be deposited initially, followed by an in-fill pattern, followed by one or more remaining perimeter pattern sides. In several embodiments, approximately half of the number of sides of the perimeter pattern polygon are initially deposited. After half of the initial perimeter pattern polygon sides are deposited, the in-fill pattern can be deposited. For example, the in-fill pattern can be a raster pattern, where the raster pattern is a scanning motion, wherein an in-fill pattern line is deposited in a line in a first linear direction, turns, and another in-fill pattern line is deposited in the opposite linear direction. In many embodiments, the turn is at or near the perimeter pattern. Though a raster pattern is described, any pattern shape can be utilized to form the in-fill pattern. After the in-fill pattern is fully deposited, the remaining perimeter pattern polygon sides are deposited.

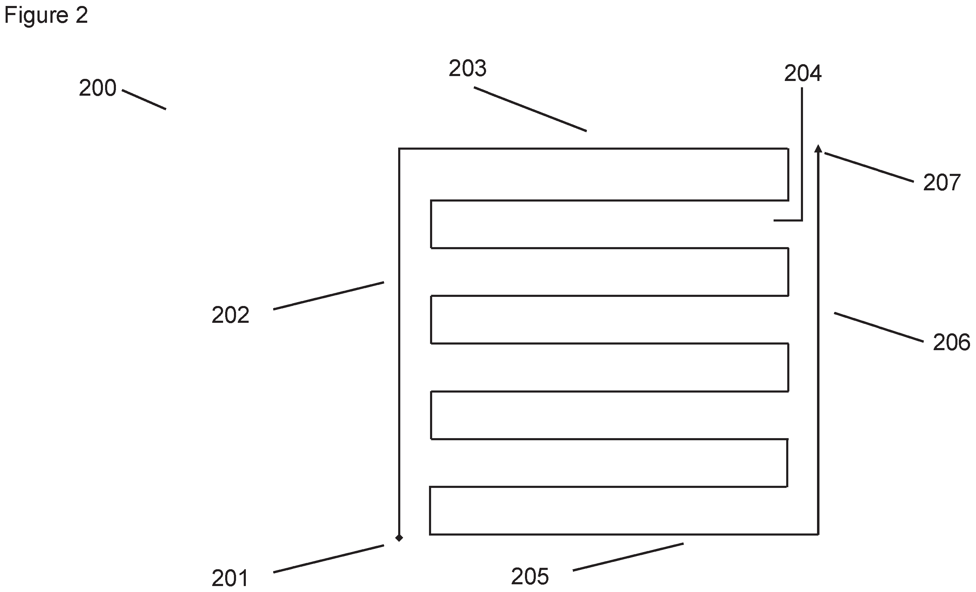

In some embodiments one or more adjacent perimeter pattern sides are deposited initially, then the in-fill pattern, and then the remaining adjacent perimeter pattern sides are deposited. In some embodiments, the perimeter pattern is a square shape with four 90° corners. In several embodiments, the perimeter of the component is a polygon with equal interior corner angles. In many embodiments, each layer pattern begins and ends at a corner of the component polygon. In several embodiments, the start and end of the layer pattern are at opposite corners. Figure 2 depicts a rectangular layer pattern in accordance with an embodiment. The layer pattern 200 starts at a corner 201 of the perimeter pattern and prints a first 202 perimeter pattern side and an adjacent second 203 perimeter pattern side. The layer pattern 200 then continues printing the in-fill pattern in a raster pattern 204, finishing the in-fill raster pattern 204 at or near the start point 201. In a continuous print, the layer pattern 200 then prints a third 205 perimeter pattern side and an adjacent fourth 206 perimeter pattern side. The layer pattern 200 ends the continuous print at an end corner 207 opposite the start corner 201. The resulting layer pattern 200 has a perimeter pattern start at the corner 201 formed by adjacent first 202 and third 205 perimeter pattern sides and ends at the corner 207 formed by adjacent second 203 and fourth 206 perimeter pattern sides. This perimeter pattern, in-fill pattern, perimeter pattern sequence allows continuous deposition of a single layer within the weld path plan. In many embodiments, the perimeter pattern and the in-fill pattern are deposited with a single start point and a single end point. As such, the number of defects is comparatively reduced to those inherent in WAAM processes. The comparatively reduced number of defects within each deposition layer improves the resulting in a substantially level exterior surface of the finished component.

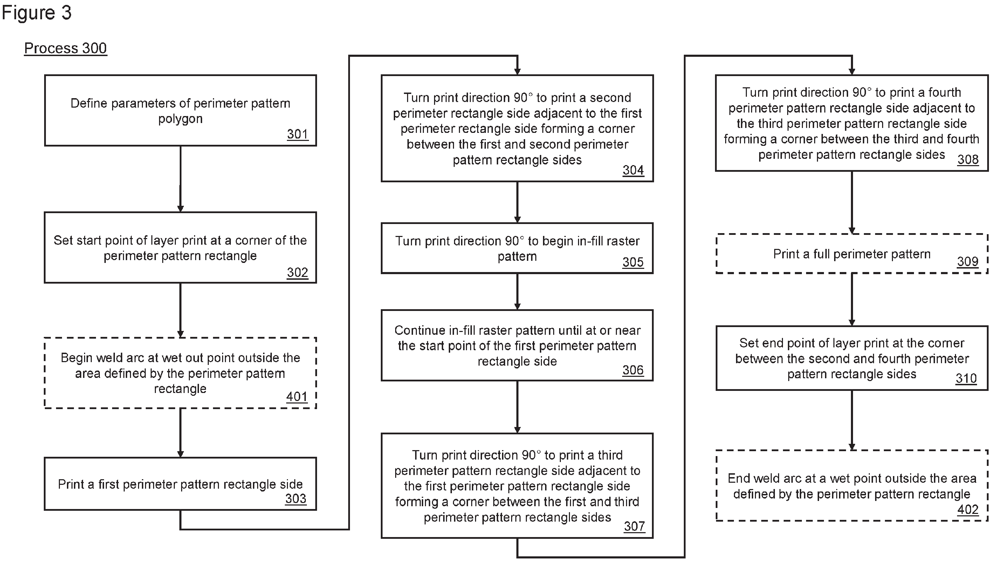

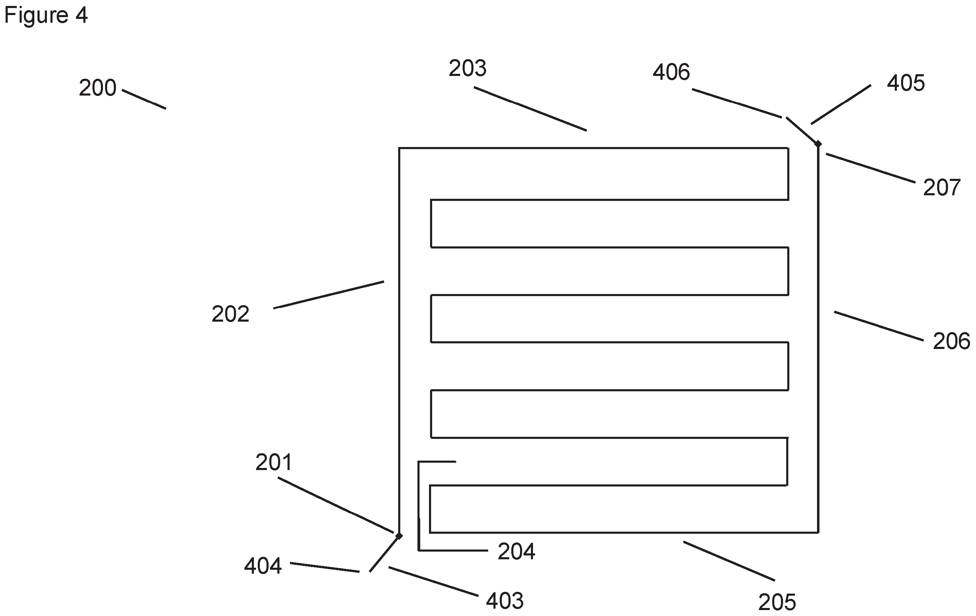

Figure 3 depicts Process 300, a printing process of a WAAM layer pattern of a rectangular perimeter pattern polygon in accordance with an embodiment. The parameters and geometry of a desired component are (301) defined in a computer program capable of programming the movement of a WAAM weld torch. A start point is (302) determined at a corner of the perimeter polygon where material deposition begins according to the layer pattern. Optional step 401 is discussed in the context of Figure 4 below. In some embodiments, the perimeter pattern polygon is a rectangle. A first perimeter pattern rectangle side is (303) printed. A second corner is formed by (304) turning the print direction 90° to begin printing a second perimeter pattern rectangle side. Turning the print direction 90° (305) to begin the in-fill pattern at or near the designed third corner. The in-fill pattern deposits material in a scanning pattern within the defined perimeter pattern, turning approximately 180° each time. The in-fill pattern may be designed to completely fill the area defined by (306) the perimeter pattern with the last in-fill line ending at or near the start corner. Without halting the material deposition, the print direction is (307) turned 180° to print a third perimeter pattern rectangle side. This third perimeter pattern rectangle side is adjacent to the first perimeter pattern side and forms a third corner of the perimeter pattern at or near the start point. The print direction then (308) turns 90° to print a fourth perimeter pattern rectangle side. The fourth perimeter pattern rectangle side is adjacent to the second perimeter pattern rectangle side and forms a fourth corner opposite the start corner. In a continued deposition, the layer pattern may optionally comprise a (309) full perimeter pattern deposition, starting and ending at the fourth corner to compensate for decreased material deposition at the edges of layer pattern. There may be decreased material deposition at the edges because the raster pattern is designed to have each weld bead either cover or be covered by half of an adjacent weld bead. Since the outer half of the perimeter pattern weld beads cannot be covered by the adjacent in-fill pattern weld beads, the outer edge of the perimeter pattern may lack material deposition over the course of multiple deposition layers. In some embodiments, the lack of material deposition is compensated for by depositing a full extra set of perimeter edges through the additional perimeter pattern deposition. In some embodiments, the optional additional perimeter pattern deposition may be included on a pre-determined interval. For example, an additional perimeter pattern deposition may be included on every third layer pattern depositions. The layer pattern is programmed to (310) end the layer pattern at or near the end corner opposite the start corner. Optional step 402 is discussed in the context of Figure 4 below.

In several embodiments, the start point of each deposition layer is at or near the corner of the perimeter pattern. Each deposition layer begins at or near a perimeter pattern to localize defect risks at or proximate to the perimeter. The localized defects facilitate detection by non-destructive evaluation and improve the likelihood that the defects can be cleaned or removed in later processing of AM components compared to defects that are deeper within the printed component or structure.

In many embodiments, the layer pattern begins beyond the area of the desired component. The distance from the area of the defined component to the programed start point is the tail in distance. The tail in distance creates a sacrificial tail that can be removed after the print is completed through machining, sanding, or another processing application. In some embodiments, the tail in distance is determined by the size of the melt spread of the material when it is initially heated at the start point. In many embodiments, the wet out point is the melt spread of the material, radially from the center of the wire, when the initial arc is applied to material. In some embodiments, the tail in distance will utilize additional material than necessary to print the deposition layer. The length of additional material may be less than the distance to the tail in distance. This difference prevents buildup or pooling of additional material when the wire is initially heated.

As discussed above, certain embodiments include the inventive realization that defects and distortions in the finished component can be caused by end points within the deposition layer. Aspects of this disclosure are directed towards techniques to improve a finished component with a substantially level exterior surface by minimizing defects caused by the end point of material deposition within a layer pattern. In various embodiments the layer pattern ends beyond the area of the desired component. In many embodiments, the end point is at or near the corner of the perimeter pattern. As discussed above, the localized end point allows for sharper corners because sides of the perimeter pattern comprise a continuous weld line. In various embodiments, the last perimeter pattern polygon side deposited ends past the corner of the perimeter pattern polygon such that a sacrificial tail is formed outside the defined area of the finished component. In various embodiments, the end point sacrificial tail may be removed in post-print processing techniques. The layer pattern can be designed to continue applying the weld arc to the material after the perimeter pattern side connects with the adjacent perimeter pattern sides. In many embodiments, the end point sacrificial tail prevents pooling and/or valleys within the layer pattern. The resulting end point sacrificial tail comprises the reduced material output as the heat source is removed from the material. By pulling the reducing material output away from the layer pattern, the effect of excess pooling of material as the heat source is removed is reduced. In many embodiments, the end point sacrificial tail allows for the WAAM process to ramp down and pull excess material away from the layer pattern. This prevents the accumulation of excess material across multiple deposition layers as the component is printed.

Figure 4 depicts a rectangular layer pattern in accordance with an embodiment having a sacrificial start tail 403 and a sacrificial end tail 405. It should be understood, in accordance with various embodiments, that a layer pattern may have one or more sacrificial tails. The sacrificial start tail 403 extends from the start corner 201 and is at an angle to the first perimeter pattern side 202. The layer pattern comprises a starting tail in distance 404, a distance from the start corner 201 where heat is applied to the feed material to begin material deposition, according to the weld path plan, outside the area defined by the perimeter pattern. The sacrificial end tail 405 extends from the end corner 207 at an angle to the fourth perimeter pattern side 206. The layer pattern comprises an ending wet out point at a stopping tail out distance 406, a distance from the end corner 207 where heat is removed from the feed material to stop material deposition, according to the weld path plan, outside the area defined by the perimeter pattern. One or more sacrificial tails may be included in a layer pattern as described in Figure 300 with optional steps included. The layer pattern 200 may be programmed to 401 begin depositing material at the tail in distance 404 outside the area defined by the perimeter pattern, such that a sacrificial tail is formed from the tail in distance 404 to the start corner 201 prior to the first perimeter pattern side 202. The layer pattern 200 may further be programmed to 402 remove the weld arc from the weld material at a tail out distance 406 outside the area defined by the perimeter pattern, such that a sacrificial end tail 405 extends from the end point to the tail out distance 406.

Aspects of this disclosure are directed towards techniques to produce components with a substantially level outer surface, with reduced variable roughness, through rotating the orientation of successive layer patterns. As described above, aspects of this disclosure are directed towards components manufactured through WAAM processes. In WAAM processes, a component is formed through successive layering of patterned deposition of a material. Distortions in a finished component can result from excess pooling and/or caving in individual deposition layers that are successively stacked. In WAAM processes, a defect can accumulate as the layer pattern is printed in successive layers resulting in distortions in the finished component in the area of the stacked defect.

In various embodiments, a subsequent layer pattern is orientated to begin at a different location than the previous layer pattern. In AM processes, each layer pattern within the weld path plan for deposition has a start point and an end point. The start point of the layer pattern is where the material deposition begins. The end point of the layer pattern is where the material deposition finishes. In many embodiments, each layer pattern begins and ends at a corner of the perimeter pattern. A first layer pattern can begin at or near a first corner of the perimeter pattern and end at or near a corner opposite the first corner of the perimeter pattern. The next layer pattern can begin at or near a second corner of the perimeter pattern and end at a corner opposite the second corner. The reorientation of the start point can be through the rotation of the component on a fixture or platform wherein the platform is rotated by approximately an angle supplementary to the interior angle of the perimeter pattern polygon. In various embodiments, the torch head or weld point of the AM process may be rotated while the component being printed remains fixed. The weld torch may be rotated to begin the next deposition layer by approximately an angle supplementary to the interior angle of the perimeter pattern polygon. The weld torch may be configured to deposit layer patterns according to a computer program. In some embodiments, the weld torch may be programmed to begin deposition layer at a different start point than the previous deposition layer. The component may remain fixed while the weld torch is configured to be repositioned and begin a subsequent deposition layer in a different location than the previous deposition layer start point. In some embodiments, the weld point and the component may be configured to move the orientation of the weld according to a pre-determined computer program to rotate the start point of subsequent deposition layers. Aspects of this disclosure are directed towards a square perimeter pattern polygon comprising four interior angles of 90°. In an example embodiment, a first layer pattern is deposited at a first corner and ends at a corner opposite the first corner. The weld head reorientates 90° to begin depositing the next layer pattern at a second corner and end at a corner opposite the second corner. Several embodiments are directed towards triangle, hexagon, and octagon perimeter pattern polygons with reorientation rotations between each layer approximately 120°, 30°, and 22.5° respectively. In some embodiments, the subsequent layer pattern begins depositing material at the next corner in a clockwise direction from the previous layer pattern start point. In some embodiments, the subsequent layer pattern begins depositing material at the next corner in a counterclockwise direction from the previous layer pattern start point. In several embodiments, the direction of rotation switches for each subsequent layer pattern, wherein the layer pattern is repeated but with an inverse printing direction. For example, with a rectangular perimeter pattern, the perimeter pattern sides are printed in a clockwise direction from the start point. After the start point has returned to the initial start point, the next perimeter pattern sides will be printed in a counterclockwise direction from the start point. By changing the start and end point of each layer pattern, variations in material deposition can be distributed evenly, negating uneven accumulation of material resulting in a substantially level exterior finished component. The layer patterns may accumulate slightly more material in some sections than others, irrespective of potential defects. The purpose of rotating the orientation and position of the start point is to prevent depositing excess material in the same spit in every deposition layer, but rather spread it out evenly and preventing uneven build up.

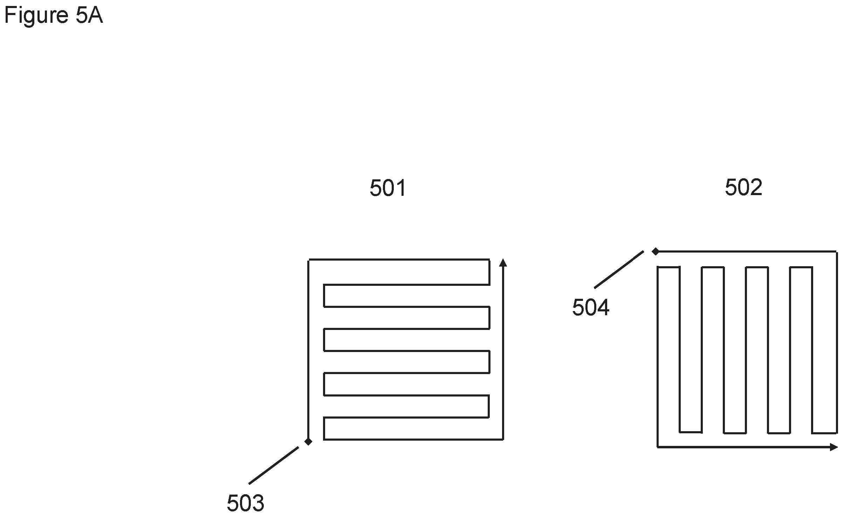

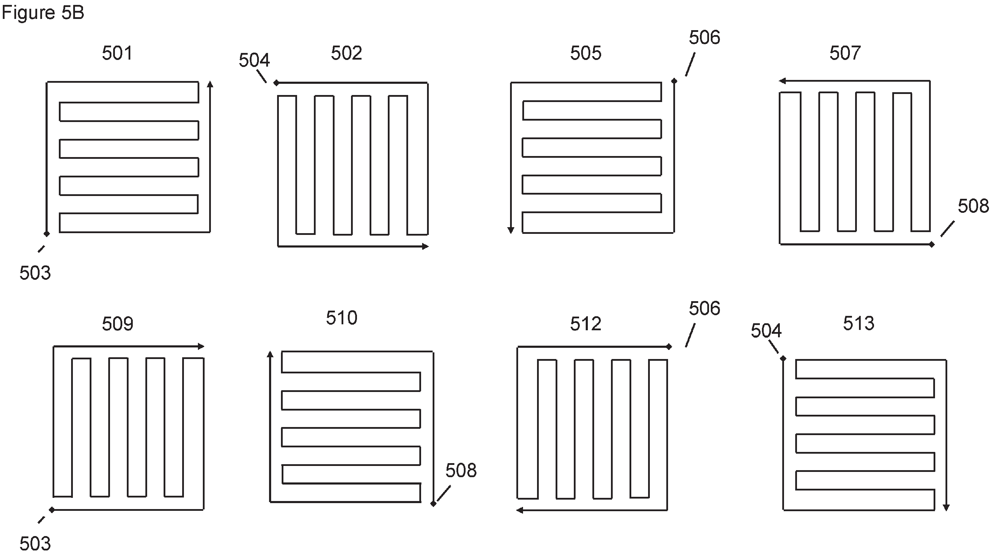

Figures 5A and 5B depict a series of layer patterns within a weld path plan wherein the start point of subsequent layer patterns is rotated. It should be understood that the rotation of the start point between layer patterns may be due to the repositioning of the component, the repositioning of the weld torch, the repositioning of the programed weld point, or in any other manner consistent with this disclosure. Figure 5A depicts a first layer pattern 501 and a second layer pattern 502 wherein the start point of the second layer pattern 504 is deposited on a different corner than the start point of the first layer pattern 503. Figure 5B depicts the inverse printing process, wherein the layer pattern is printed and rotated in a clockwise direction 501, 502, 505, 507 and then printed and rotated in a counterclockwise direction 509, 510, 512, 513. It should be understood that the inverse printing may also continue to be rotated in the same direction, even if the print direction is different.

Aspects of this invention are directed towards in-fill patterns comprising a raster pattern and/or a scanning pattern, wherein the in-fill pattern consists of a back and forth deposition pattern to incrementally fill the area defined by the perimeter pattern. In several embodiments, the in-fill pattern is deposited in the entire area defined by the perimeter pattern. In some embodiments, the in-fill pattern is deposited in a zig zag pattern, wherein the material is deposited in a back-and-forth motion. In various embodiments, the in-fill pattern comprises a series of lines that may be approximately parallel. The in-fill pattern is deposited in a scanning motion within the perimeter pattern in continuous lines, depositing a first line, turning at or near the perimeter pattern, and depositing a second line approximately parallel to the first line. The in-fill pattern may comprise sufficient repeated lines to substantially fill the entire area defined by the perimeter pattern, deposited in opposite linear directions. In some embodiments, the turn region can form a rounded arc, wherein the in-fill pattern has designated turn radius less than a 180° in-fill pattern turn around. In some embodiments, the turn region can comprise a square motion, wherein the turn region reaches the end of a line the in-fill pattern turns in two successive approximately perpendicular directions and continues depositing a line in the opposite direction as the previous line.

Various deposition techniques may be utilized for the deposition of the perimeter and in-fill patterns. WAAM techniques described herein comprise stringer deposition and weave deposition. However, any suitable deposition technique may be utilized. In stringer deposition, a weld line is deposited in a substantially linear single deposition. In weave deposition, a weld line is deposited through a substantially zig-zag pattern, wherein the weld line is thicker based on the amplitude of the zig-zag motion.

In stringer deposition techniques, a square turn region can result in lack of fusion through inadequate weld line overlap. This can result in structural defects in the finished component. The layer patterns with insufficient in-fill patterning at or near the perimeter pattern result in decreased fusion between deposition layers. Additionally, the presence of cavities is common at or near the perimeter pattern sides due to inadequate weld bead layering as described above.

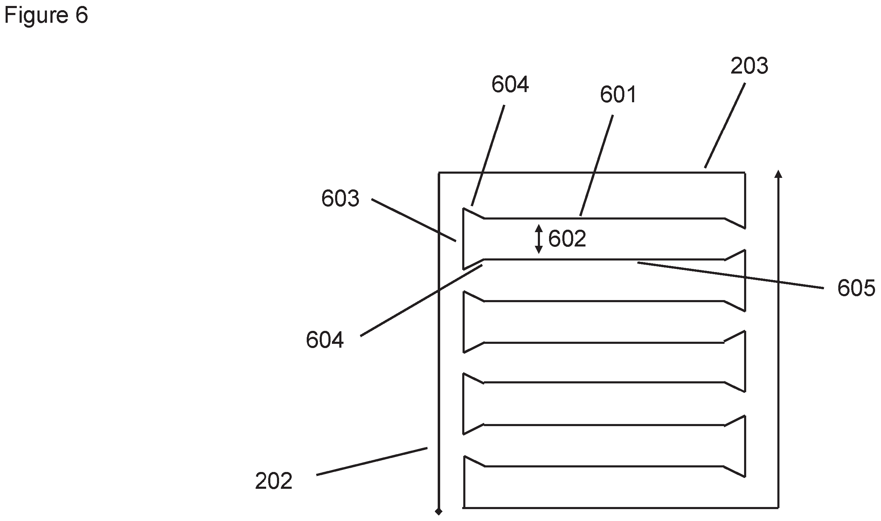

Aspects of this disclosure are directed towards the turn region of the in-fill pattern having an extended turn region, wherein instead of a series of perpendicular turns at or near the perimeter pattern, the turn region extends towards the previous line before making the turn. When the in-fill pattern line approaches the perimeter pattern, the in-fill pattern line extends at an angle towards the previous in-fill pattern line and away from the next in-fill pattern line. The extended in-fill pattern line turns towards the next in-fill pattern line past the deposited in-fill pattern line and beyond the line of the next in-fill pattern line, such that when the extended in-fill pattern line turns towards depositing the next in-fill pattern line, approaching at an angle. In various embodiments, the extended turn region may resemble a trapezoid as depicted in Figure 6. The extended turn region 603 is wider than the space between the in-fill pattern lines 602. The first in-fill pattern line 601 extends parallel to a perimeter pattern side 203. When the first in-fill pattern line approaches an adjacent perimeter pattern side 202, the layer pattern is programmed to extend the in-fill pattern line of the turn region 604 towards the previous pattern line 203. After extending the in-fill pattern line the layer pattern is programmed to turn the print direction to create an extended turn region 603. The extended turn region 603 extends beyond the second in-fill pattern line 605. The layer pattern is programmed to turn the print direction to extend the in-fill pattern line 604 to connect the second in-fill pattern line 605.

In prior weave depositions during a WAAM process, the in-fill pattern may not turn at or near the perimeter pattern. Such weave deposition of the in-fill pattern lines may arbitrarily turn early resulting in significant deformations in the finished component due to irregular valleys and bumps in individual layer patterns. In contrast, in various embodiments, during weave deposition of the in-fill pattern, the layer pattern is programed to switch from weave deposition to stringer deposition at a defined spot as the in-fill pattern line approaches the perimeter pattern. The programmed switch between deposition techniques forces the weld torch to deposit material within the entire area defined by the perimeter pattern. When the in-fill pattern switches to stringer deposition, the stringer deposition may be programmed as an extended turn region. As described above, the extended turn region extends the in-fill pattern line towards the previous in-fill pattern line before turning at or near the perimeter pattern. This extended turn region angle extension length may have approximately the same length as the amplitude of the weave deposition. The extended turn region extends beyond the next in-fill pattern line and turns again to deposit material in the next direction creating a second angled turn region extension. The turn region extends beyond the next in-fill pattern line such that the return angled extension is approximately equal to the weave amplitude. Upon return to the linear region of the next in-fill pattern line the deposition may return to weave deposition techniques.

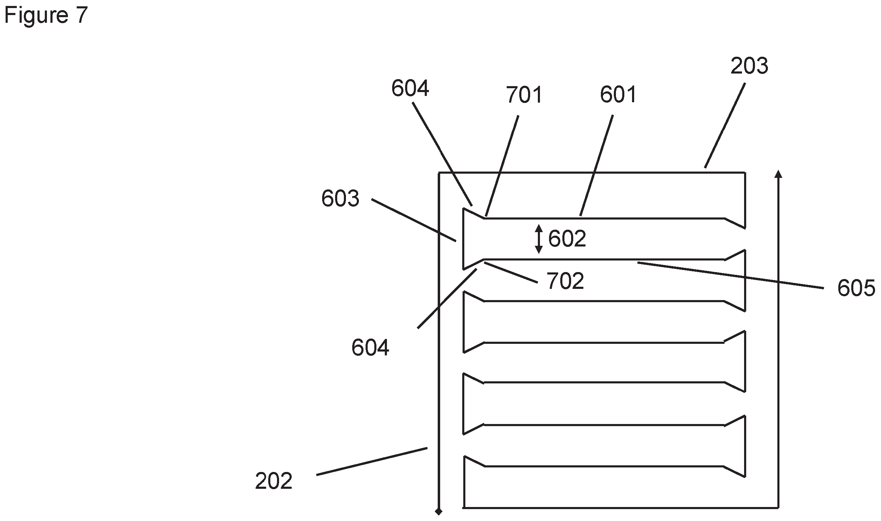

Figure 7 depicts an extended turn region in accordance with an embodiment. The extended turn region 603 is wider than the space between the in-fill pattern lines 602. The first in-fill pattern line 601 extends parallel to a perimeter pattern side 203. When the first in-fill pattern line approaches an adjacent perimeter pattern side 202, the layer pattern switches from weave deposition to stringer deposition at a designated point 701. At the designated point 701, the layer pattern is programmed to extend the in-fill pattern line of the turn region 604 towards the previous pattern line 203 utilizing stringer deposition techniques. After extending the in-fill pattern line the layer pattern is programmed to turn the print direction to create an extended turn region 6003. The extended turn region 603 extends beyond the second in-fill pattern line 605. The layer pattern is programmed to turn the print direction to extend the in-fill pattern line 604 to connect the second in-fill pattern line 605. The layer pattern is designed to switch from stringer deposition to weave deposition at a designated point 702 after the extended in-fill pattern line 604 connects to the second in-fill pattern line 605.

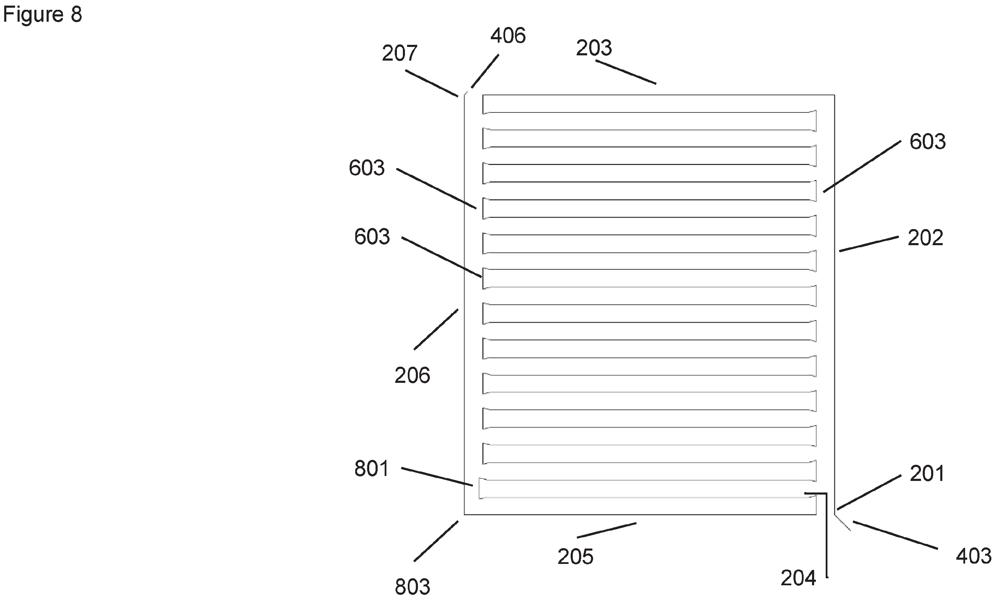

In WAAM processes, the deposition layers adhere through the fusion of molten material from the input and the previously deposited layer. As described above, the layer pattern deposition may be a single continuous deposition beginning and ending with adjacent perimeter patterns. In various embodiments, the last adjacent corner deposited in the perimeter pattern may be the last corner patterned during the in-fill patterning. In many embodiments last in-fill pattern is deposited near a perimeter pattern corner. As a result of the continuous deposition the component has been heated significantly during the layer patterning and may result in uniform material deposition profiles within the layer patterns and a consequent decrease in material accumulation in the build direction as heat accumulates. Some embodiments are directed towards the last turn region in the in-fill pattern being extended in comparison to the previous turn regions. The comparatively larger turn region deposits additional material near the heated perimeter corner. The deposition of the additional material allows for additional buildup where material would otherwise have insufficient buildup relative to the rest of the layer such that the decreased material deposition is counteracted. As a result, as the deposition layers are continuously layered, the decreased deposition in the build direction does not propagate because the extended last turn region in the same layer pattern fills the later printed corner where heat would otherwise lead to decreased vertical material build. In some embodiments, the in-fill pattern turn region may be extended to be larger than the previous turn regions, such that the last extended turn region extends closer to the perimeter pattern comparatively to the other turn regions. In some embodiments, the last in-fill turn region may be the only extended turn region. In many embodiments, all the in-fill turn regions are extended and the last in-fill turn region is comparatively larger. Figure 8 depicts a layer pattern in accordance with various embodiments of continuous layer pattern deposition wherein the last turn region is larger than the previous turn regions. The last in-fill turn region 801 is larger than the previous in-fill extended turn regions 603. The last in-fill turn region 801 is near the corner 803 formed by the last two adjacent perimeter pattern sides deposited 205, 206. This is as compared to Figure 7 where all the in-fill extended turn regions are substantially uniform in size.

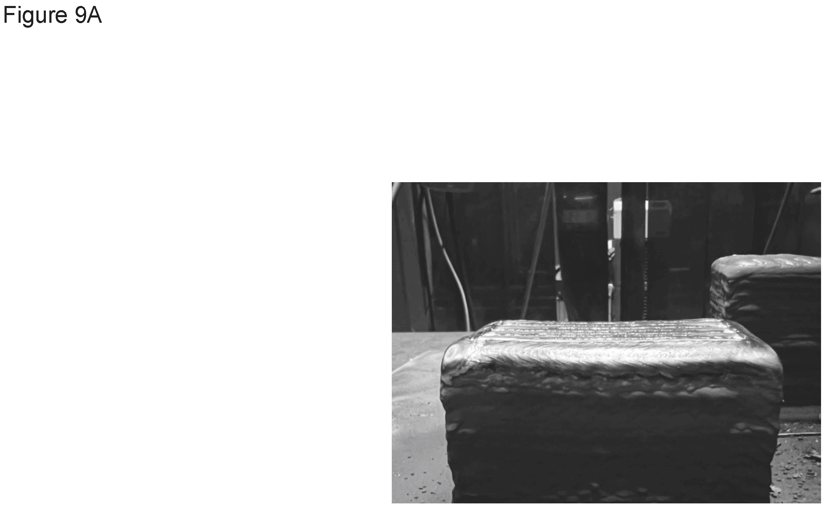

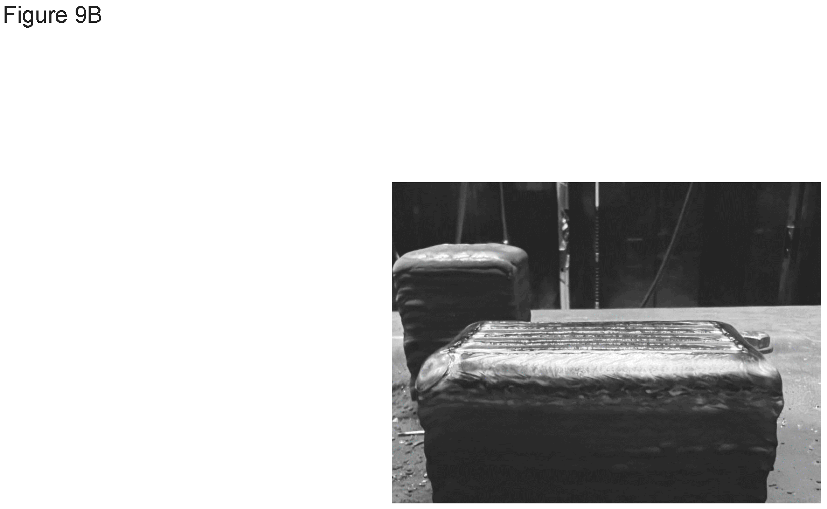

In WAAM processes, the finished component may have a different final geometry than that of the modeled component. The finished component may have a different height than the modeled component. The finished component may have distortions such as concavities and convexities. The layer patterns of various embodiments may incorporate logic into the layer patterns. The logic incorporated may adjust various parameters of the layer pattern deposition process. In AM, various parameters within the deposition process are described herein, including but not limited to the speed of the movement of the weld arm through the layer pattern, the direction of movement of the weld arm through the layer pattern, and the temperature of the printed component and/or the feed stock material. In particular, if the feed rate of the feed stock remains constant, the speed of the movement of the weld torch can affect the resulting geometry of the layer pattern. The slower the weld torch moves through the layer pattern; the more material may be deposited as compared to the weld torch moving at a faster speed through the layer pattern. The longer the weld torch takes to move through a section of the layer pattern, the more material may be deposited. A slower weld torch speed can result in a thicker deposition due to the increased material deposited. The logic incorporated may adjust the speed of the movement of the weld torch to adjust the amount of material deposited. The increased speed of the weld torch decreases the amount of material deposited. The decreased speed of the weld torch increases the amount of material deposited. Figure 9A provides an example of a component printed without logic for speed adjustment incorporated in the layer patterns. Figure 9B provides an example of a component printed with logic for speed adjustments incorporated in the layer patterns, resulting in a finished component with a flatter geometry.

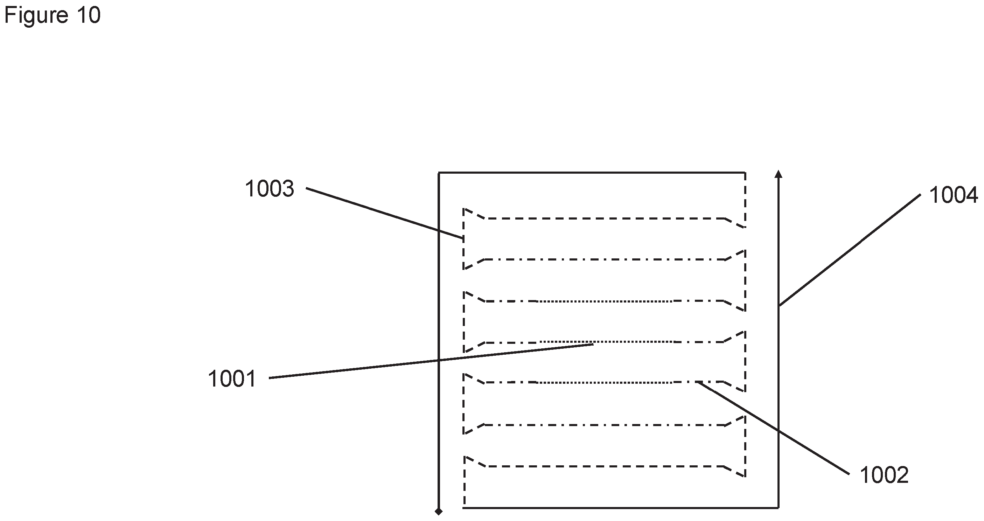

A printed component may be evaluated after printing to determine areas of concavity and convexity in the finished component. In subsequent prints of the same or similar component, the layer patterns may be adjusted by adjusting the speed of the weld torch along the layer pattern to account for these defects. Adjusting the speed of the weld torch allows for increased control over the height of deposition layers. As the speed of the weld torch speed is decreased and the feed rate remains consistent, the material deposited will pool more such that the deposition accumulates. In comparison, as the speed of the weld torch is increased and the feed rate remains consistent, the material deposited will pool less due to elongated deposition of the material as the weld torch moves through the weld path plan. The increased control over deposition layer height provides increased control and stabilization of the finished component height and cross section of each layer pattern. Figure 10 provides a schematic of a layer pattern with varied speed within a deposition layer. In the example of Figure 10, the dotted line sections 1001 along the center of the in-fill pattern represent nominal weld torch speed. While keeping the feed stock rate consistent, in one embodiment, or while keeping one or more parameter sets (whether or not these each include a feed stock rate parameter) consistent, in another embodiment, the dashed-and-dotted line sections 1002, dashed line sections 1003, and solid line sections 1004 regions of the layer pattern represent areas of (respectively) increasing weld torch speed as compared to the nominal dotted line sections. In areas of concavity, the layer pattern of one or more deposition layers may incorporate logic to decrease the weld torch speed, such as the dotted line sections 1001, to promote deposition of additional material to counteract the previously printed component's concavity. In areas of convexity, the layer pattern of one or more layers may incorporate logic to increase the weld torch speed, such as the dashed-and-dotted line sections 1002, dashed line sections 1003, and solid line sections 1004 regions, to decrease material deposition to counteract the previously printed component's convexity. In some embodiments, the print of a component may be paused as distortions appear. The subsequent layer patterns may incorporate speed changes in the later deposition layers to counteract and prevent distortions observed during the printing process. Though Figure 10 depicts sectional speed changes, it should be understood the logic speed changes can be applied using gradient speed changes.

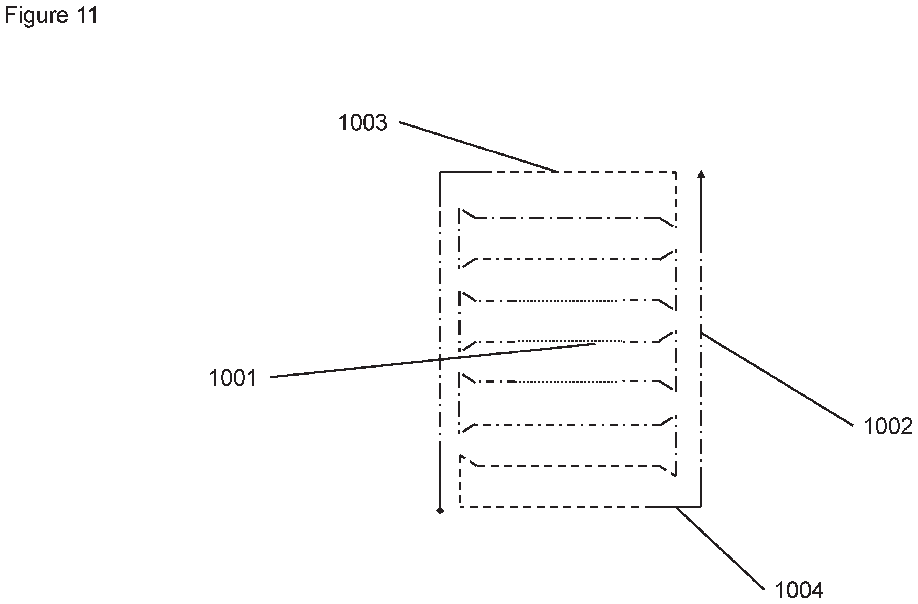

The logic of the speed adjustment within a layer pattern may vary depending on the distance of the weld torch from a reference point. Figure 10 depicts the logic of the speed adjustment within a layer pattern based on the distance of the weld torch from the perimeter of the component. As described above, the solid line sections 1004 represent an increased weld torch speed as compared to the nominal speed of the dotted line sections 1001 near the center of the component. Figure 11 depicts the logic of the speed adjustment within many layer patterns within a component based on the distance of the weld torch from the center of the component. The same line type sections of Figure 10 applies to Figure 11, such that the dotted line sections 1001 near the center of the component are a nominal speed and the dashed-and-dotted line sections 1002 along the long ends of each component, dashed line sections 1003 along the short ends of each component, and solid line sections 1004 along the two opposing corners of the perimeter pattern representing respectively increased weld torch speed as compared to the nominal speed of the dotted line sections 1001. Though Figure 11 depicts sectional speed changes, it should be understood that the speed changes can be applied as gradient adjustments.

In many embodiments, the layer pattern may comprise a point map. During the printing process, the logic for the speed of the weld torch may be adjusted at each point in the point map. The representative point map of a layer pattern may have a point density, the number of points within the area of the layer pattern. In some embodiments, the point density of a layer pattern may be consistent. In some embodiments, the point density of a layer pattern may vary across the layer pattern. The logic of the speed adjustments within a layer pattern may maintain a consistent speed at one or more consecutive points. The logic of the speed adjustments within a layer pattern may adjust the weld torch speed at one or more consecutive points. In many embodiments, the logic of the speed adjustments is a gradient, such that the speed of the weld torch is incrementally adjusted at consecutive points. The representative point map of individual layer patterns may vary between layer patterns within a printed component. In some embodiments, the point density between individual layer patterns may be the same within a printed component. In some embodiments, the point density between individual layer patterns may vary based on the geometry of the finished component. In some embodiments, the point density between individual layer patterns may vary based on the increased heat of the previous deposition layers. As more layer patterns are deposited, the component's temperature may increase. To account for the increased wet out of deposited material on the heated component, the logic of speed adjustments may be controlled by the representative point map. In some embodiments, the weld torch speed may be increased through the inclusion of additional points in the point map, such that the speed of the weld torch is incrementally increased at a higher rate than a decreased point density. In some embodiments, the weld torch speed may be increased through increased speed adjustments between consecutive points, such that the degree the speed is adjusted at each point is at a higher rate than a previous layer pattern. Different regions of an individual layer pattern may have various point densities. In some embodiments, the in-fill pattern of a layer pattern may have a higher point density than the perimeter pattern. In various embodiments, the degree of speed adjustment between consecutive points may vary across a layer pattern. In some embodiments, the speed adjustment may vary depending on the region of the point map within the individual layer pattern. The point map in regions of the layer pattern located near the center of the component may incorporate different speed changes than a point map in regions of the layer pattern located near the exterior of the component.

Various parameters, as described herein, including but not limited to layer pattern orientation and/or direction, feed stock rates, shielding gas flow rates, welding voltages and currents, and so on individually or organized as parameter sets, may be adjusted to control total printed component geometry and material properties. The various parameters may be adjusted to remove defects and distortions in subsequently printed components, and to otherwise improve final geometry and material properties, but may still result in concavities and convexities, and other variations in geometry, including variations in final height. The logic of adjusting the speed of the weld torch as described herein, while holding other parameters substantially unchanged, may be incorporated to further remove these lingering defects and distortions in subsequently printed components. The cross section of the individual layer patterns may be further fine-tuned by incorporating the logic of speed adjustments to maintain uniform height of the individual deposition layers.

In some embodiments, the dimensions of the individual layer patterns can vary between deposition layers. The dimensional differences between the varied individual layer patterns may result in a printed component with a complex and/or irregular geometry. Each layer pattern can have a size, defined by the length and width of the sides of the layer pattern. The size of the individual layer patterns may change between layer patterns within a printed component. In some embodiments, the surface area between one or more layer patterns can change across the printed component. In many embodiments, the change in size between layer patterns provides a change in size in at least one direction of the printed component. During printing, the xy-plane can be parallel to the build plate such that the printed component extends along the z-axis. In some embodiments, the size of the layer patterns can change along the x-axis as compared to a previous layer pattern. In various embodiments, the size of the layer patterns can change along the y-axis as compared to a previous layer pattern. In certain embodiments, the size of the layer patterns can change along the x-axis and the y-axis as compared to a previous layer pattern. The size of the layer patterns can simultaneously change along the x-axis and the y-axis such that each side of the layer patterns changes as compared to a previous layer pattern. The individual layer patterns can be configured to change the size in one or more directions across the printed component, such that the size along the x-axis and y-axis changes in different ways. For example, across a printed component, the layer patterns can simultaneously decrease along the x-axis and y-axis as compared to the previous layer pattern to form a pyramid. Across a printed component, the layer patterns can initially decrease along the x-axis as compared to a previous layer pattern. At a certain point along the z-axis, the layer patterns can increase along the x-axis as compared to the previous layer pattern such that a rectangular hourglass is printed. One having ordinary skill in the art would understand a printed component can be designed by adjusting the size of the individual layer patterns across the printed component.

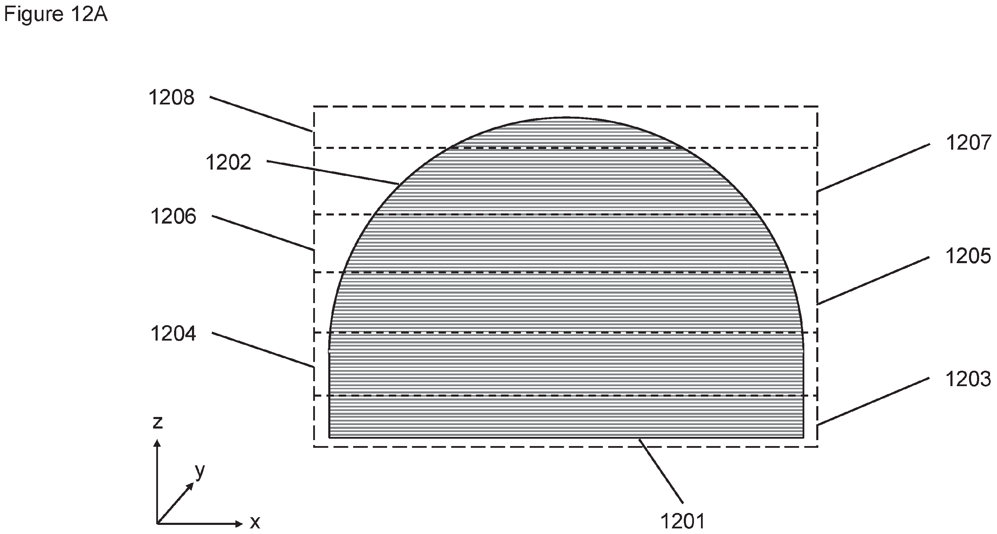

As the sizes of the layer patterns change, the printed component can exhibit curved sides along the direction the layer patterns change. Figure 12A schematically provides an example of a printed component with a rectangular base (1201) and curved sides (1202). The individual layer patterns within the printed component change in length across the print such that the printed component exhibits curved sides. As shown in Figure 12A, the printed component curves to form a half-circle because the length of individual layer patterns decreases, along the z-axis. The length of the individual layer pattern can be different in different regions 1203-1208 of the printed component. Figure 12A provides a non-limiting example of layer patterns having different lengths along the height of the printed component.

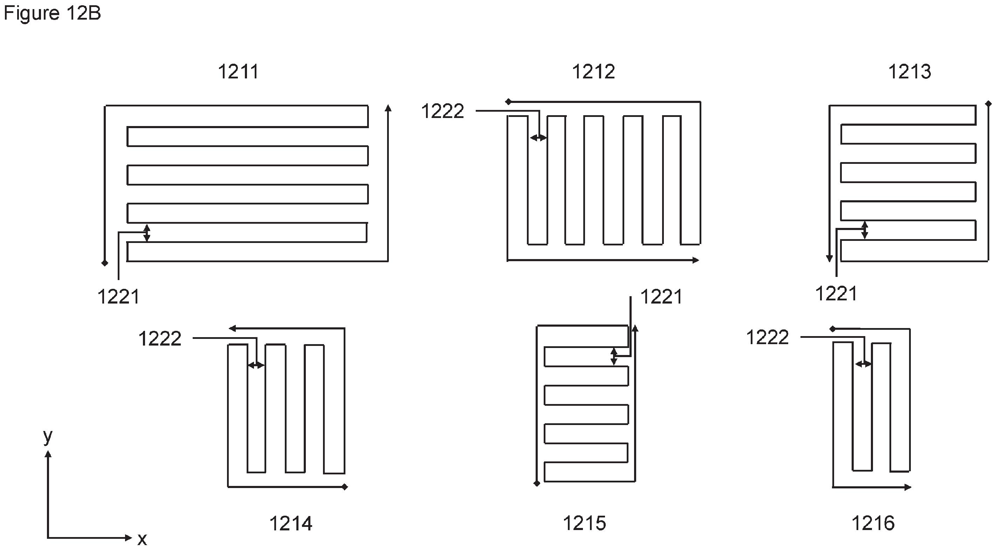

Cross sections of the printed component in the xy-plane reduce in area along the z-axis. Figure 12B provides an example of some of the layer patterns 1211-1216 within the printed component of Figure 12A. The length of the layer patterns reduces along the x-axis because the individual layer patterns decrease in size. The layer patterns 1211-1216 schematically represent examples of layer patterns within different regions 1203-1208 of the printed component in Figure 12A. Layer pattern 1211 schematically shows an example of a layer pattern within region 1203 of the printed component. Layer pattern 1212 schematically shows an example of a layer pattern within region 1204 of the printed component. Layer pattern 1213 schematically shows an example of a layer pattern within region 1205 of the printed component. Layer pattern 1214 schematically shows an example of a layer pattern within region 1206 of the printed component. Layer pattern 1215 schematically shows an example of a layer pattern within region 1207 of the printed component. Layer pattern 1216 schematically shows an example of a layer pattern within region 1208 of the printed component. Though layer patterns 1211-1216 are shown to have clocked start points in the sense of Figures 5A and 5B, each exemplary layer pattern may not necessarily be adjacent within regions 1203-1208. For example, in one embodiment layer pattern 1211 within region 1203 may be adjacent to layer pattern 1212 within region 1204, while in another embodiment these same layer patterns may be separated by a number of intervening deposition layers consistent with a clocking scheme.

As the layer patterns change sizes, the area within the in-fill pattern can change. As the layer pattern changes size in a direction perpendicular to the in-fill pattern lines, the number of in-fill pattern lines can change. As shown in Figure 12B, the length of different layer patterns changes along the x-axis while the spacing of the in-fill pattern (1221) remains approximately consistent across layer patterns with parallel in-fill pattern lines. The spacing of the in-fill pattern (1222) remains approximately consistent across layer patterns with in-fill pattern lines perpendicular to the x-axis as the number of in-fill pattern lines changes.

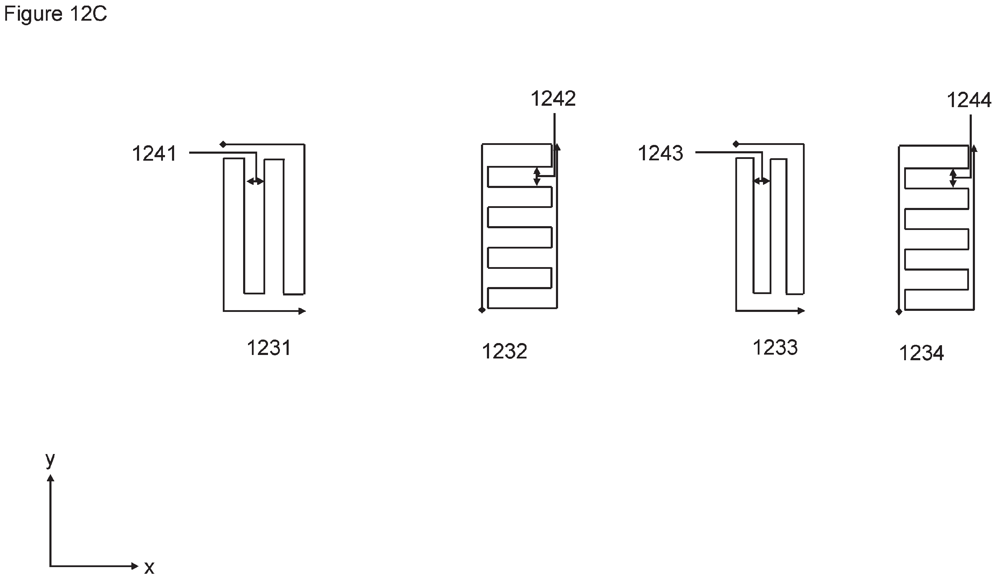

In-fill pattern lines across different layer patterns can have a target spacing. In many embodiments, the layer pattern can define a range of allowable spacing between in-fill pattern lines, such that the in-fill pattern lines can have a distance within an allowable range. For example, the target spacing can be 7.0 mm with an allowable range between 6.9 mm and 7.1 mm. Any allowable range can be applied based on the deposition process and/or desired application. For example, the allowable range can be ± 0.1 mm, ± 0.3 mm, ± 0.5 mm. ± 0.7 mm, ± 0.9 mm, or ± 1.1 mm from the target spacing. In numerous embodiments, as the area of the layer pattern changes, the number of passes within the in-fill pattern can increase or decrease. The number of passes can be determined by dividing the dimensions of the layer pattern by the target spacing. If the dimension of the layer pattern is divisible by the target spacing, the result can determine the number of passes. If the dimension of the layer pattern is not divisible by the target spacing, the target spacing can be adjusted within the allowable range to determine a number of passes. Figure 12C provides a non-limiting example of consecutive layer patterns 1231, 1232, 1233, and 1234 having varied spacing between the in-fill pattern lines. The layer patterns 1231 and 1233 decrease in length along the x-axis without reducing the number of in-fill pattern lines perpendicular to the x-axis. Instead, the spacing 1243 between the in-fill pattern lines is reduced as compared to spacing 1241, although both are still within the allowable range. In contrast, although the layer patterns 1232 and 1234 also decrease in length along the x-axis, the spacing between in-fill lines 1242 and 1244 can remain equal to each other.

Although a half circle upon a base is provided for in Figures 12A to 12C, it should be understood that any geometry can be printed using the disclosed techniques, based on the desired application. In many embodiments, the size of the layer pattern can change in one or more directions or in two or more directions. In various embodiments the area of the layer patterns can decrease across the printed component. In numerous embodiments, the area of the layer patterns can increase across the printed component. In certain embodiments, the area of the layer pattern can increase and decrease across the printed component. For example, the layer patterns can vary size parameters to create an hourglass shaped printed component.

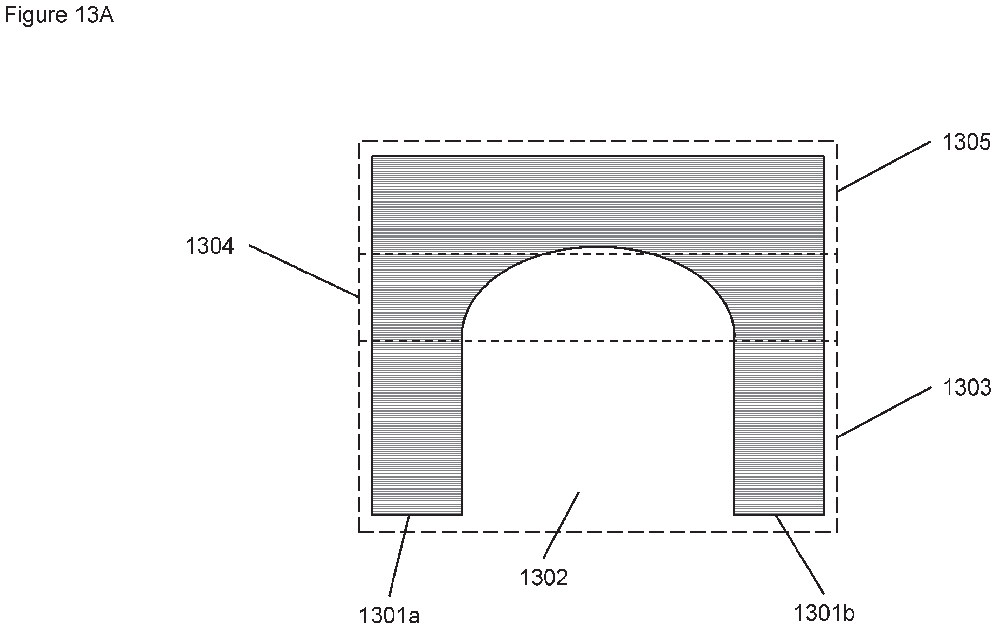

In some embodiments, the dimensions of the layer patterns can be configured to increase to print flared components or even to create negative space within the printed component. The dimensions of the layer patterns can be configured to print components with holes or depressions such that there is space within the printed component without material. For example, the dimensions of the layer patterns can be configured to print an arch, such that the layer patterns allow for negative space between the legs of the arch. Figure 13A schematically provides an example of a printed arch. The legs 1301a, 1301b of the printed arch can be separated by negative space 1302 by printing separate layer patterns in parallel along the z-axis. The size of the layer patterns within the printed component can change across and/or within different regions 1303-1305. The size of the layer patterns of each leg can change parallel to the xy-plane such that the separate legs come into contact in region 1305. The printed component can transition to print a single layer pattern that spans the distance between the separate legs 1301a, 1301b.

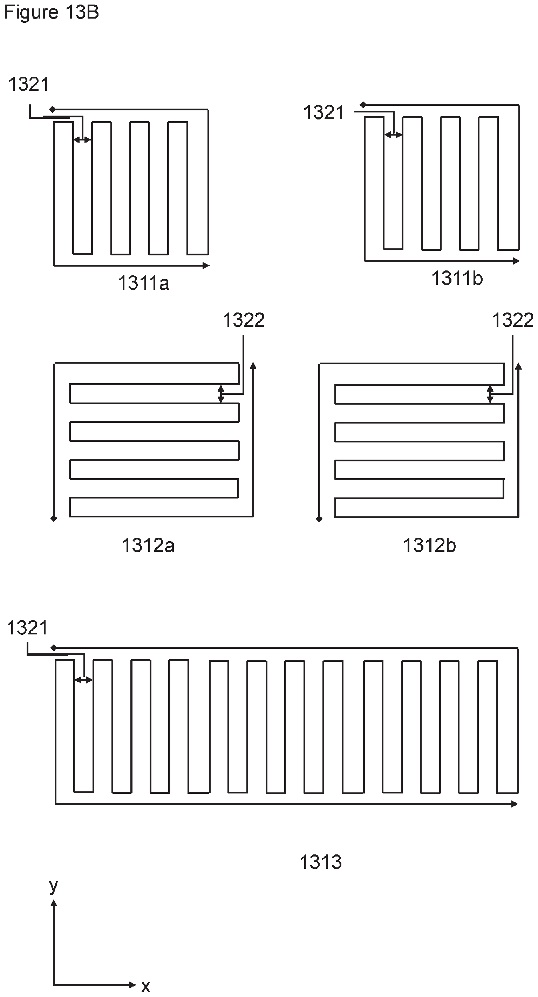

Figure 13B provides a non-limiting example of various layer patterns at different cross sections of the printed arch depicted in Figure 13A. Layer patterns 1311a, 1311b schematically illustrate examples of layer patterns within region 1303 forming spatially separated legs of the arch. Layer patterns 1312a, 1312b schematically illustrate spatially separated layer patterns of the arch legs within region 1304. Layer pattern 1313 schematically illustrates a single layer pattern across both legs of the arch within region 1305. The dimensions of the layer patterns can be configured to provide a single layer pattern when the separate arch legs merge, wherein the lengths of the two layer patterns exceed half the total length of the arch along the x-axis. In some embodiments, the layer pattern dimensions can be configured to diverge at a designated z-axis, such that two or more legs are formed after the base has been printed. As the layer pattern increases in size in a direction perpendicular to the in-fill pattern lines, the number of in-fill pattern lines can increase. As shown in Figure 13B, the length of different layer patterns increases along the x-axis while the spacing of the in-fill pattern 1321, 1320 remains approximately consistent across layer patterns with parallel in-fill pattern lines. For example, the layer patterns 1311a, 1311b at the arch leg bases have 7 in-fill pattern lines, while the layer pattern 1313 near the top of the arch has 23 in-fill pattern lines.

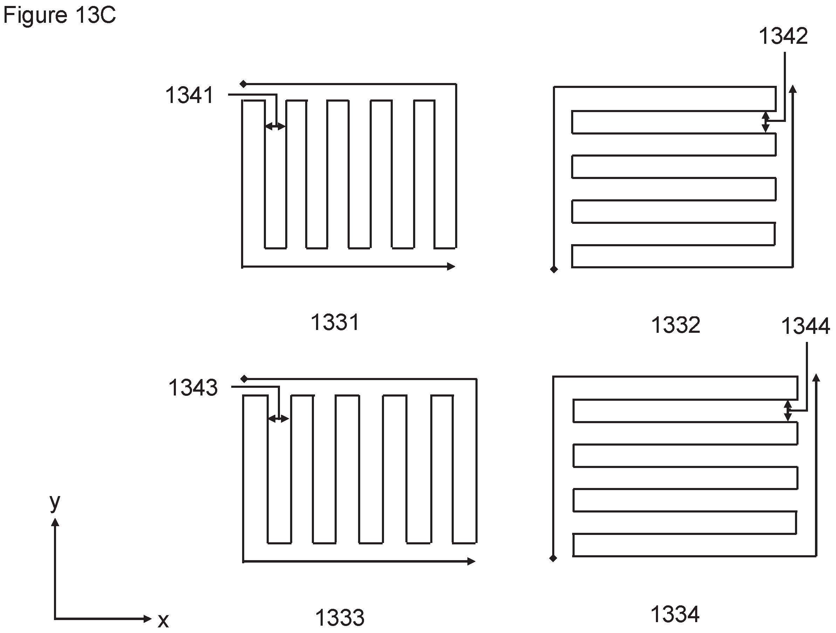

As described above, the spacing between in-fill pattern lines can change within an allowable range as the layer patterns change dimensions in one or more directions. Figure 13C provides a non-limiting example of consecutive layer patterns 1331, 1332, 1333, and 1334 having varied spacing between the in-fill pattern lines. The layer patterns 1331 and 1333 increase in length along the x-axis without increasing the number of in-fill pattern lines perpendicular to the x-axis. Instead, the spacing 1343 between the in-fill pattern lines is increased as compared to spacing 1341, although both are still within the allowable range. In contrast, although the layer patterns 1332 and 1334 also increase in length along the x-axis, the spacing between in-fill lines 1342 and 1344 can remain equal to each other.

Though Figures 12A-12C and 13A-13C schematically illustrate inverse printed components, it should be understood any geometry is contemplated as described herein. A printed component can have varied curvature and/or surface conformity. For example, a printed component can be a pyramid shape, a cone shape, a wave shape, an hourglass shape, a wedge shape, a truss shape, a bridge shape, an x-shape, a v-shape, and/or a hollowed shape.

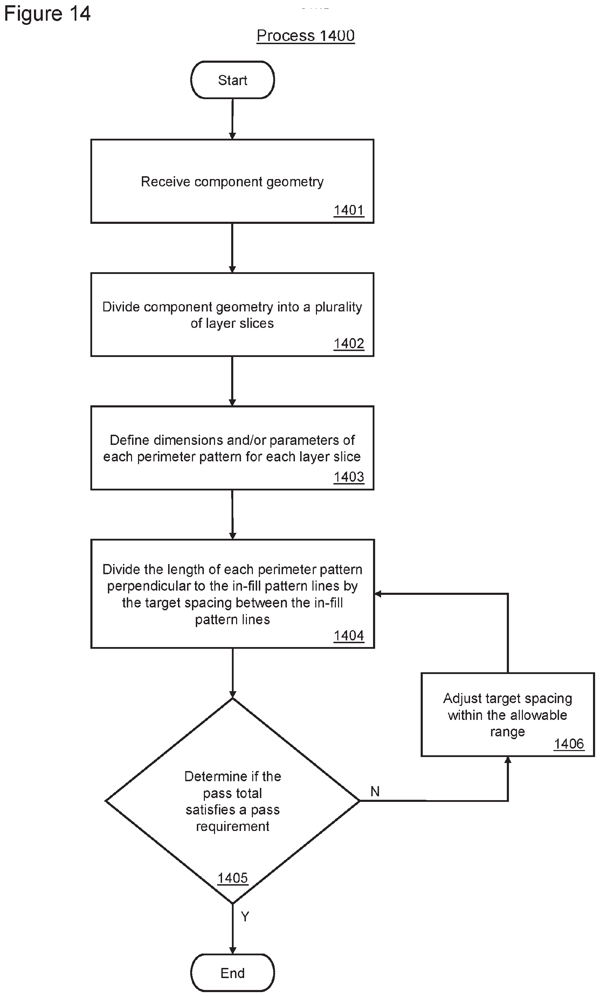

Process 1400 in Figure 14 determines a plurality of layer patterns to print a component. Process 1400 receives (1401) the desired geometry for the printed component, for example as a CAD file. The desired geometry for the printed component can be curved, contain negative space, and so on. Process 1400 divides (1402) the component geometry into a plurality of layer slices, for example by using a geometry slicer. Process 1400 defines (1403) the dimensions and/or parameters of each layer pattern for each layer slice within the printed component. Each layer pattern can have dimensions and/or parameters as described herein, comprising perimeter pattern dimensions, perimeter pattern shapes, in-fill pattern configuration, and/or start point orientation. In several embodiments, each layer pattern within the printed component has unique dimensions and/or parameters. In some embodiments, one or more layer patterns within the printed component have the same dimensions and/or parameters of another layer pattern within the printed component. In many embodiments, each layer pattern within the plurality of layer patterns incrementally changes in one or more dimensions. For example, the base of the component geometry can have a first length with each successive layer pattern added having a length less than the previous layer pattern. For each layer pattern within the component, process 1400 divides (1404) the length of the perimeter pattern perpendicular to the in-fill pattern lines by the target spacing between the in-fill pattern lines. The target spacing can be the distance between parallel in-fill pattern lines. The result of the division provides a pass total. The pass total can determine the number of passes within the in-fill pattern needed to sufficiently fill the area defined by the perimeter pattern of a specific layer pattern. Process 1400 determines (1405) if the pass total satisfies a pass requirement. The pass requirement can be an allowable rounding amount to reach a whole number of passes for the in-fill pattern. The pass requirement can require a whole number with no rounding The pass requirement can have rounding parameters, such that the rounded number is within the target spacing or allowable range. If the pass total does not satisfy the pass requirement, process 1400 adjusts (1406) the target spacing within an allowable range. As described herein, the allowable range is a parameter surrounding the initial target spacing. The target spacing can be modified to be increased or decreased up to the allowable range. For example, a target spacing can initially be 7 mm with an allowable range of ± 0.1 mm, wherein the pass requirement is a whole number without rounding. If a perimeter pattern length is 84 mm, the number result is 12 providing for 12 passes within the in-fill layer pattern. If a perimeter pattern length is 85 mm, the number result is 12.14 which fails the whole number condition. The target spacing can be adjusted within the allowable range of ± 0.1 mm to 7.08 mm, such that the number result is 12. The layer pattern with a perimeter pattern length of 85 mm would exhibit an in-fill pattern with 7.08 mm spacing between the in-fill pattern lines. The target spacing can continually be adjusted within the allowable range until the pass total satisfies the pass requirement. Thus, as process 1400 operates across multiple sliced layers to define layer patterns, for curving geometry it will be seen that inter-pass distance increases (for curves making each layer larger) or decreases (for curves making each layer smaller) within a permitted window between pairs of layers subject to the curve (e.g., 1231 and 1233, or 1331 and 1333) separated by an intervening layer not subject to the curve (e.g., 1232 and 1234, or 1332 and 1334), until the number of passes must change accompanied by a respective decrease or increase in inter-pass distance. In many embodiments, a plurality of layer patterns determined by process 1400 can be utilized in process 300 to print a component with the desired geometry.

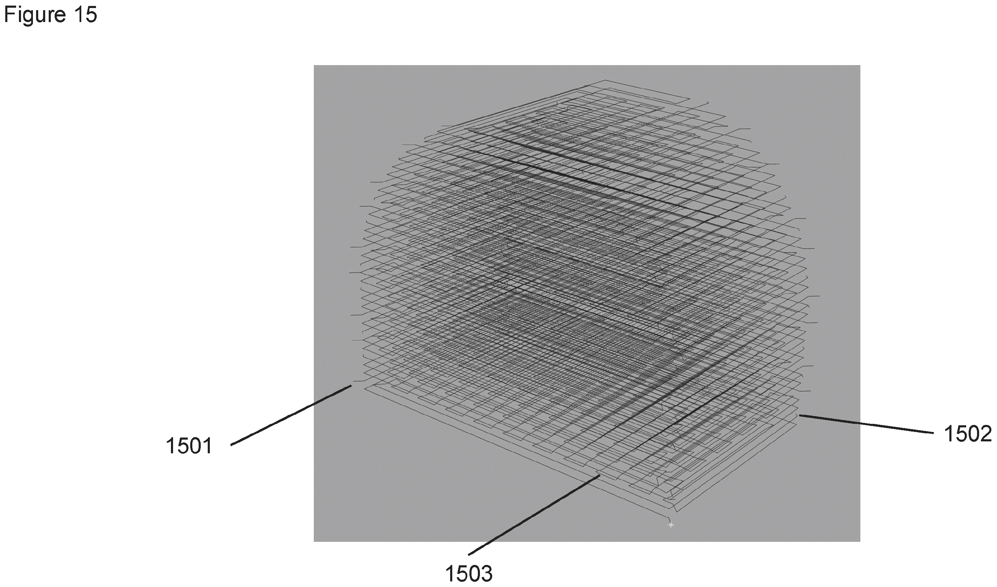

Figure 15 provides an example of a plurality of layer patterns in accordance with an embodiment. Figure 15 illustrates a weld path plan for a half-circle component having a rectangular base. The length of the layer pattern changes in one direction as additional layer patterns are stacked. Each layer pattern may comprise a sacrificial start tail 1501 and a sacrificial end tail 1502. Based on the location of each sacrificial start tail 1501 and sacrificial end tail 1502, each layer pattern may have a different start point with respect to the start point of the prior layer pattern. The in-fill pattern of each layer pattern may comprise an extended turn region 1503.

### Weld Path Planning

Aspects of this disclosure are directed to weld path planning techniques. In some embodiments, weld path planning of one or more components stores one or more print parameters to be executed by an AM printing process. Adjustments to the AM print process may be made in response to defects and distortions during the printing process. These adjustments may be manually decided on and entered by a technician. As such, each resulting AM component is in a sense uniquely handmade, and may contain unique deviations from CAD that must be quantified for the sake of reproducibility. Automation of adjustments during a printing process in accordance with various embodiments of the disclosure allows for reproducibility of AM components. In various embodiments, processes incorporating such automated adjustments improves the speed at which the AM components may be produced, and even reproduced. The automated AM system in accordance with many embodiments also allows for the quality of the components to continually be improved. In many embodiments the printing process data of each print can be continually saved and fed back into the printing process of subsequent prints. As a result, the automated AM system in accordance with such embodiments continues to improve the quality of each subsequent component through iteratively, or cumulatively, altering the print (e.g., through adjustments to the pattern, the parameters, and so on) to incorporate adjustments to account for defects and distortions. In some embodiments, the layer pattern techniques described above can incorporate weld path planning techniques. The AM system according to such embodiments also allows for subsequent prints to account for defects and distortions of previous prints and removes them in the subsequent prints by accounting for the previous adjustment made. As more components are printed, the AM system in accordance with various embodiments reduces the number of defects and the severity of distortion as the defects and distortions are progressively accounted for. The AM system in accordance with many embodiments further improves quality control of AM components. AM components produced by manual adjustments for each print must be individually subjected to quality control. In the automated AM system in accordance with embodiments where the quality of components is iteratively improved, the quality of subsequently printed components is at least the standard of the previous print. For example, in applications where a component must meet a quality control standard, such as flight qualification for a rocket launch vehicle, all components printed after a qualified component are expected to meet, if not exceed, the qualification standard.

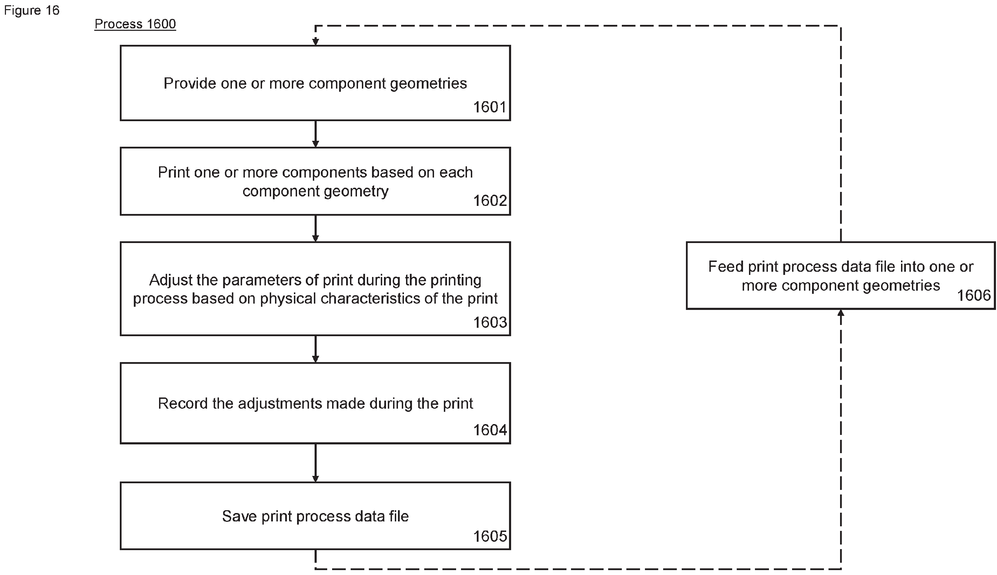

Aspects of this disclosure are directed towards an iterative AM system. An AM print may be configured to produce one or more components. After the one or more components have been printed defects and distortions may be identified as described above, as well as in "Additively Manufactured Combustion Chambers, Manifold Structures and Hybrid Additive Processes Related Thereto" U.S. Application No. 18/515,033, hereby incorporated by reference in its entirety. In a subsequent print of the same or similar components, adjustments to the printing process and parameters, including the coordinated movement of the build plate and weld torch, and including wire feed speed, welding voltage, welding current, and/or other parameters, may be adjusted to remove the defect and/or distortion. In various embodiments, parameter adjustments can relate to layer pattern logic such as speed of the weld torch, orientation of start and end points of successive layer patterns, and/or determination of in-fill pattern line spacing as described above. In some embodiments, the AM system may be configured to make adjustments during the printing process of the first print as defects and/or distortions are identified as described above. The AM system saves the entire printing process data file and incorporates the adjustments made into subsequent prints of the same or similar component configuration. As subsequent printing processes occur, the AM system iteratively collects the printing process data file and iteratively refines, or updates, the printing process and/or parameters, such as the coordinated movement, and such as the wire and/or welding details. This iterative process is described in Figure 16.

Process 1600 provides (1601) one or more component geometries. The component geometries, in many embodiments, are the individual geometries for each component when printed. The printed component can have a final geometry of the printed component. In some embodiments, the component geometry comprises a plurality of deposition layers to be printed to form the printed component. The component geometry can comprise the print parameters (for example, a first version of the print parameters) to be executed for each deposition layer.

Process 1600 prints (1602) the component based on the component geometry. AM techniques can be utilized to print the component such that each deposition layer is deposited according to the component geometry and print parameters. Print parameters can direct the deposition of material within the AM process. In some embodiments, the print parameters direct the deposition of material according to a layer pattern as described above. In many embodiments, print parameters can be the metal wire feed speed, the energy applied to the metal wire, the speed of the deposition head of the AM process, the direction of movement of the deposition head, and/or the rotation of the deposition head and/or component.

Process 1600 adjusts (1603) one or more print parameters during the printing process. In some embodiments, one or more print parameters are adjusted based on physical characteristics of the component during the printing process. The component can be evaluated during the printing process. In many embodiments, the print is paused to allow for the component to be evaluated. Evaluating the component can check whether the component is within dimensional tolerances and/or has suitable surface finishes. For example, the component can be assessed to determine if it is within the required dimensions of the component geometry. In various embodiments, adjustments to the print parameters can be made to bring a component within the required dimensional tolerances of the component geometry.

Process 1600 records (1604) the adjustments made to the print parameters during the printing process. The recorded adjustments keep track of adjustments made in the printing process, so the specific print parameters used for a specific printing process are known. In many embodiments, process 1600 saves (1605) the recorded adjustments in a print process data file. The print process data file keeps a record of the specific printing process that can be used to trace the component.

Process 1600 optionally feeds (1606) the saved print process data file into the component geometry. By feeding the print process data file into the component geometry, the component geometry can be updated to account for adjustments made to reduce the number of adjustments in future prints of the component. In many embodiments, reducing the number of adjustments can improve the efficiency of printing a component because less adjustments are being made during the printing process. Feeding the print process data file into the component geometry can refine the component geometry to improve the quality of subsequent printed components. In several embodiments, the record of the adjustments added to the component geometry tracks the changes in print parameters to allow for quality metrics to be tracked. In one embodiment, such feeding can involve incorporating the print process data file directly into print parameters stored in the component geometry (thus altering the original component geometry), while in another embodiment such feeding can involve appending the print process data file as a sidecar data file alongside the component geometry (thus leaving the original component geometry unchanged).

In some embodiments, the adjusted print parameters are incorporated into a series of layer patterns for a component. Adjustments to the layer pattern start and stop orientation, switching between stringer and weave deposition, the speed of the weld torch within regions of a layer pattern, and/or the spacing between in-fill pattern lines can be saved and incorporated into a print process data file for a printed component utilizing layer pattern techniques as described above. Though process 1600 can be applied to components utilizing layer patterns, it should be understood process 1600 does not require layer patterns.

Aspects of this disclosure are directed towards a process of AM comprising providing a build plate or a substrate, acquiring the build plate's or the substrate's surface geometry, determining a series of individual deposition layers, and printing a component according to the series of individual deposition layers. The disclosure herein may optionally incorporate printing the component in increments, wherein the print is paused after a number of layers and evaluated. Based on the physical characteristics of the partially printed component, the print parameters may be adjusted to prevent distortions and/or defects in the finished component. The process may further comprise saving the printing process data file such that subsequent print of a same or similar component configuration build on the printing process data learned from prior prints.

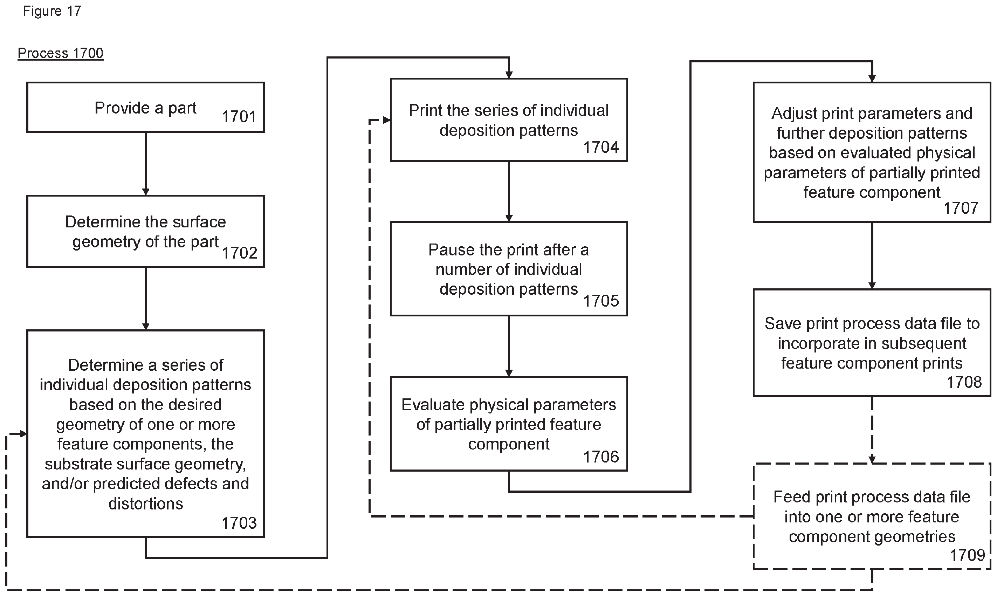

In some embodiments, the substrate provided may be another part or component. Figure 17 depicts process 1700 describing a process to print a feature component on a part in accordance with several embodiments. Process 1700 provides (1701) a part. The part provided can serve as the build plate for the feature component. In many embodiments, one or more feature components can be printed on the provided part.

Process 1700 determines (1702) the surface geometry of the part. The provided part may have a complex and/or irregular surface geometry. The provided part may be curved comprising a single curve or a series of curves. The part may have an angled surface geometry. The part may have a series of corners such as a zig zag. The part may have one or more surface geometries. The provided part may have a bumpy or rough surface texture.

Process 1700 determines (1703) a series of individual deposition patterns based on the desired geometry of each feature component. In many embodiments, process 1700 accounts for the surface geometry of the part at the location of the feature component. For example, if a location of the feature component is on a sloped surface of the part, but the feature component desired geometry is level, process 1700 determines the series of individual deposition patterns such that the resulting feature component is level. In several embodiments, process 1700 accounts for predicted defects and/or distortions within the feature component. Predicted defects and/or distortions can arise from previous in-print data for the feature component. In many embodiments, more than one feature component is printed on the part. Process 1700 can determine a series of deposition patterns of more than one feature component. Deposition patterns can refer to the path of a weld torch during an AM printing process. Layer pattern techniques as described above can be a specific deposition pattern in accordance with several embodiments. In various embodiments, the series of deposition patterns comprises deposition layers from more than one feature component such that each component is partially printed between deposition of another feature component. In some embodiments, the series of deposition patterns can incorporate layer pattern techniques as described above. For example, successive deposition patterns can change sizes according to layer pattern techniques described above to account for differences between the surface geometry and the feature component desired geometry.

Process 1700 prints (1704) a series of individual deposition layers. In many embodiments, the series of deposition layers are printed by an AM technique. The AM technique can print each deposition layer according to the deposition pattern determined within the series. In some embodiments, more than one feature component is printed such that each feature component is at least partially printed between another feature component. In many embodiments, process 1700 is configured to move the weld head of the AM technique between feature components according to the series of deposition layers.

Process 1700 pauses (1705) the print after a number of deposition layers have been printed. In some embodiments, process 1700 pauses the print after a set number of deposition layers have been deposited. In other embodiments, a technician can pause the print.

Process 1700 evaluates (1706) physical parameters of the partially printed feature component. The partially printed feature component can be evaluated while the print is paused. In some embodiments, the physical parameters of the partially printed feature component are evaluated to compare to the desired finished print geometry. Evaluating the feature component can check whether the feature component is within dimensional tolerances. For example, the feature component can be assessed to determine if it is within the required dimensions of the feature component geometry.

Process 1700 adjusts (1707) print parameters to bring the feature component within the required dimensional tolerances of the feature component geometry, or to otherwise improve a characteristic of the feature component. In many embodiments, print parameters to be adjusted can be the metal wire feed speed, the energy applied to the metal wire, the speed of the deposition head of the AM process, the direction of movement of the deposition head, and/or the rotation of the deposition head and/or component (or feature component). In some embodiments, process 1700 adjusts (1707) print parameters defined by layer pattern techniques. The orientation of start and end points of individual layer patterns, switching between stringer and weave deposition, the speed of the weld torch within regions of each layer pattern, and the spacing between in-fill pattern lines can be adjusted by process 1700.

Process 1700 saves (1708) the adjustments in a print process data file. The print process data file keeps a record of the specific printing process that can be used to trace the feature component. In many embodiments, the print process data file further comprises data related to the deposition layers of the printed component. The print process data file can be identified for each feature component, such that even though the feature component may be at least partially printed between the printing of another feature component, the entire data for the printed feature component can be saved. In certain embodiments, the entire print process data file for the feature component can be analyzed to assess the quality of the print of the feature component. Printing at least a portion of each feature component can form zones within the feature component, wherein each zone is printed between printing another feature component. Each zone within the feature component print process data file can be identified and assessed.

Process 1700 optionally feeds (1709) the print process data file into the feature component geometry for each feature component. In many embodiments, the print process data file comprises adjustments made to print parameters for each feature component. In one embodiment, such feeding can involve incorporating the print process data file directly into print parameters stored in the feature component geometry (thus altering the original feature component geometry), while in another embodiment such feeding can involve appending the print process data file as a sidecar data file alongside the feature component geometry (thus leaving the original feature component geometry unchanged). Process 1700 can feed (1709) the print process data file into the feature component geometry to determine (1703) the series of subsequent deposition layers. Alternately, or additionally, process 1700 can feed (1709) the print process data file into the feature component geometry to print (1704) the series of individual deposition patterns.

In some embodiments, the adjusted print parameters are incorporated into a series of layer patterns for each component and/or zone of each component. Adjustments to successive layer pattern start and stop orientation, switching between stringer and weave deposition, the speed of the weld torch within regions of each layer pattern, and/or the spacing between in-fill pattern lines can be saved and incorporated into a print process data file for a printed component utilizing layer pattern techniques as described above. In many embodiments, the new print process data file can modify the layer pattern parameters of each component. Though process 1700 can be applied to feature components utilizing layer patterns, it should be understood process 1700 does not require layer patterns.

Aspects of this disclosure are directed towards an AM process to print one or more components on a build plate, wherein a first component is partially printed before switching to one or more additional components and back again based on an order of interleaved deposition patterns for the plurality of components. In some embodiments, the AM process is used to print one or more feature components on a part. In many embodiments, a planning software may be used to print WAAM feature components on a part according to the order of interleaved deposition patterns. In many embodiments, the interleaved deposition patterns can comprise one or more layer patterns as described above. The components are constituted in the order of interleaved deposition patterns as a series of individual deposition patterns. The interleave series of individual deposition patterns from the one or more components can print at least a portion of a first component, then at least a portion of one or more additional components before returning to print at least a second portion of the first component. In many embodiments, planning the order of deposition patterns may interleave deposition patterns from the series of deposition patterns of multiple components to manage heat input so the entire set of components can be printed faster overall. Accordingly, while a portion of the layers from the individual deposition patterns of one component are cooling, layers from the deposition patterns of another component can be printed such that the other component being printed does not affect the cooling of the first component. In many embodiments, planning the order of deposition pattern compiles and sequences multiple individual deposition patterns of different components together. Accordingly, the individual components are not printed sequentially, wherein each component is printed in a continuous start to finish fashion. Planning the order of the deposition patterns thus incorporates complexity prior to the beginning of the printing process by sequencing the individual deposition patterns of each component as an individual deposition layer, wherein the sequence of deposition layers move from one component to another. In some embodiments, a deposition may comprise multiple deposition patterns of a single component to be printed together. In some embodiments, for a WAAM print, a first deposition comprises applying the arc, printing a series of deposition layers, removing the arc; then a second deposition comprising moving the weld torch to a second component, applying the arc, printing a series of deposition layers of a second component, and removing the arc. In some embodiments the individual depositions may have a different number of deposition patterns wherein the duration of the individual deposition varies. In some embodiments, an individual deposition may not be a unitary sequence, wherein the individual deposition does not have a "complete" instruction that turns off the control system. Traditionally, the end of each deposition ends with a "complete" instruction and a next deposition is manually determined. The process, in accordance with several embodiments, allows an individual deposition to be completed, the weld torch repositioned and/or retracted, and continue another path of a different component. Planning the order of deposition patterns, in several embodiments, includes logic about transitioning from one feature component to another that assumes part positioning. In some embodiments, the part may have a rotary-style positioner, and the weld torch is configured to retract to a height radially outwards to ensure clearance from the part during repositioning to a different feature component.

In various embodiments, one or more deposition patterns comprise layer patterns as described above. Interleaving layer patterns for one or more components can comprise logic for determining efficient start and stop orientation of successive layer patterns. When moving between components, logic can incorporate changes in temperature of components to adjust weld torch speed within regions of each layer pattern and/or determining a switch between stringer and weave deposition within the in-fill pattern. In certain embodiments, interleaving layer patterns across one or more components can adjust the size and spacing of the in-fill pattern lines of adjacent layer patterns within a component. Though interleaving deposition patterns can incorporate layer pattern techniques, it should be understood interleaving deposition patterns do not require layer pattern parameters.

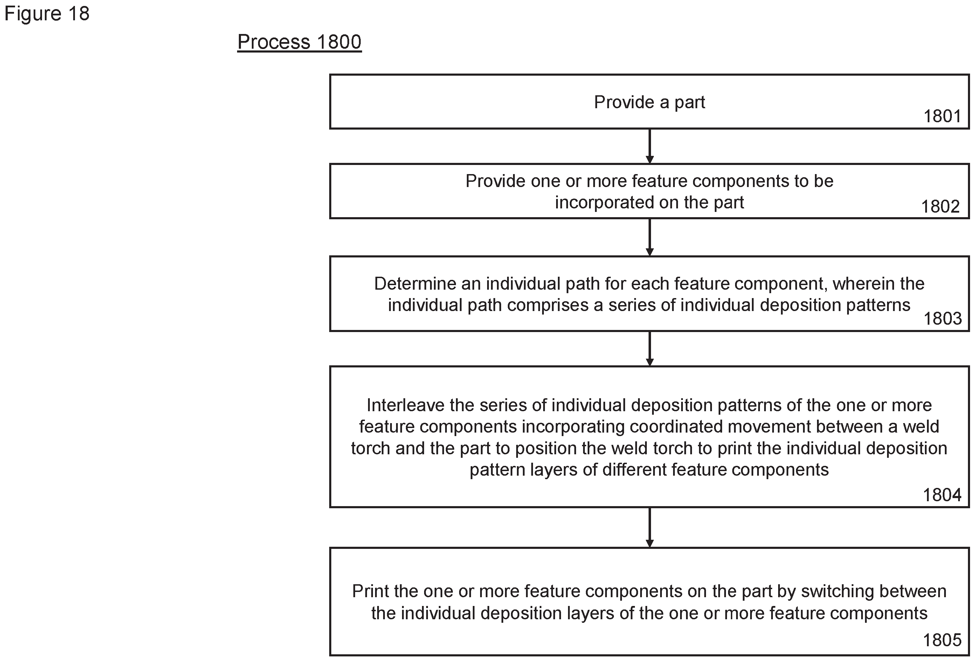

Figure 18 depicts a process diagram of a master path process. In many embodiments a master path process is a weld path planning process. Process 1800 provides (1801) a part and/or build plate. In many embodiments, one or more components are printed directly on another part. In some embodiments, the part can be configured as a build plate for one or more feature components. The part can be mounted on a movable robot arm to allow the part to be rotated and/or moved during the printing process.

Process 1800 provides (1802) one or more feature components to be incorporated on the part. The part can be manufactured separately for the one or more feature components to be subsequently incorporated. In some embodiments, the part is configured to support one or more feature components at different locations on the part.

Process 1800 determines (1803) a plurality of deposition patterns for each of the one or more feature components. In many embodiments, the plurality of deposition patterns can be serially deposited to form the feature component. Each feature component can have an individual plurality of deposition patterns. In some embodiments the plurality of deposition patterns can comprise one or more layer patterns.

Process 1800 interleaves (1804) the deposition patterns for each feature component. In several embodiments, process 1800 interleaves the deposition patterns of different feature components such that the deposition patterns of different feature components are configured to be in series. By interleaving, the series of deposition patterns can switch between one or more feature components during the printing process. In certain embodiments, interleaving the deposition patterns can interleave one or more layer patterns across one or more feature components. In some embodiments, interleaving deposition patterns can interleave between a first feature component incorporating layer patterns and a second feature component incorporating alternative deposition patterns. In many embodiments, process 1800 incorporates movement of the weld torch of the AM technique to allow movement between feature components according to the order of the deposition patterns. In some embodiments, process 1800 incorporates movement of the part to position the part with respect to the weld torch according to the order of deposition patterns. Process 1800 can coordinate movement of the weld torch and the part according to the order of deposition patterns. By determining an order of interleaved deposition patterns, the printing process can be planned prior to beginning the printing process. In many embodiments, planning the printing process can reduce technician intervention, such that the technician does not need to initiate the switch between printing feature components.

Process 1800 prints (1805) one or more feature components on the part according to the order of deposition patterns within the series. The weld torch can print each deposition layers according to the order of interleaved deposition patterns to print the one or more feature components on the part. In many embodiments, printing the one or more feature components comprises moving the part and/or weld torch to switch between printing each feature component according to the series of interleaved deposition patterns. By printing the feature components according to the order of interleaved deposition patterns, a technician does not need to select the next series of deposition layers for each feature component. Without a technician selecting each series of deposition layers, the time to print a plurality of feature components according to the order of interleaved deposition patterns can be reduced. In many embodiments, reducing the time can allow one or more feature components to be printed within technician shift schedules.

In WAAM processes, the feedstock wire is a consumable electrode and the electricity is transferred through the consumable feedstock wire to deposit the material. Further, in WAAM prints the parameter development for a given component geometry is not necessarily transferable to other component geometries. Accordingly, a process using ordered deposition patterns may load new parameters for each component, pattern, and/or deposition layer. In many embodiments, ordered deposition pattern processes may further incorporate heat management as different components are printed based on the sequenced paths. In certain embodiments, ordered deposition pattern processes can determine efficient switches between components. Efficient movement between components during printing can reduce the time of the printing process and/or thermal load. Ordered deposition patterns can account for the thermal load of the component and/or build plate to improve print quality. In some embodiments, efficient movement between components accounts for layer pattern parameters such as start and end point orientation of adjacent layer patterns, switching between stringer and weave deposition, the speed of the weld torch within regions of a layer pattern, and/or the spacing between in-fill pattern lines.

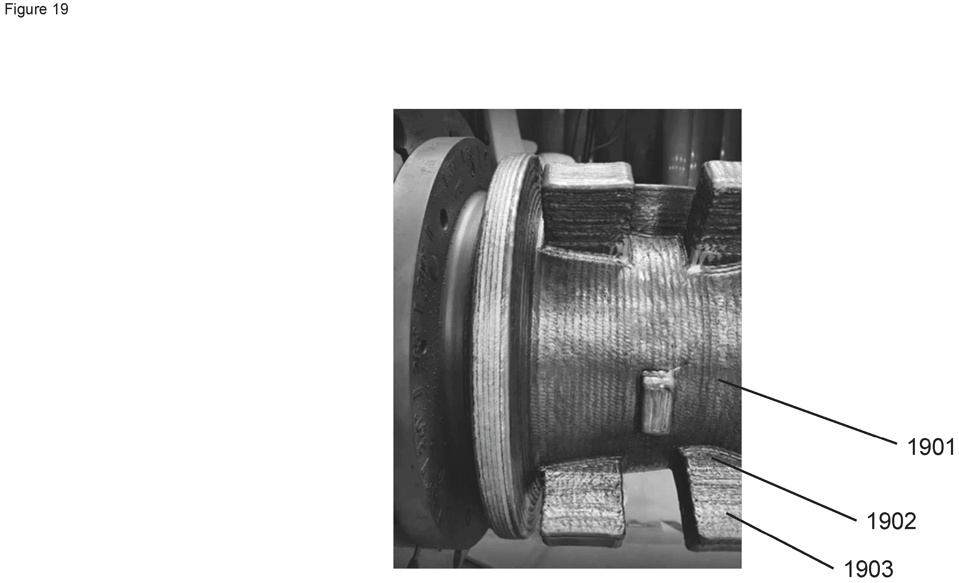

Aspects of this invention are directed towards determining a series of deposition layers based on the desired component's physical parameters and additional external factors such as the build plate geometry and predicted defects and distortions. In some embodiments the build plate geometry, or a previously-printed part serving as a build plate or build substrate, is curved but the desired component has flat edges. In many embodiments, the determined series of individual deposition layers accounts for the curved build plate. The determined series of deposition layers may adjust the area of the layer deposited. Figure 19 depicts an AM feature component deposited on a curved previously-printed part 1901. The initial deposition layers 1902 have a smaller area than the final deposition layers 1903. In some embodiments, the system comprises an image sensor. The process comprises determining the surface geometry of the build plate. The surface geometry of the build plate is incorporated in the determination of the series of deposition layers.

An automated AM system may comprise movable components. The build plate may be mounted on a moveable (including but not limited to) platform, track, pulley system, and/or arm. The weld torch and/or feedstock may be mounted on a movable (including but not limited to) platform, track, pully system, and/or arm. In some embodiments, the system is configured to move the build plate and/or the weld torch during the printing process. The movement of the build plate and/or weld torch may be coordinated by the AM system. The AM system may coordinate the movement and orientation of the build plate and weld torch simultaneously. In some embodiments the AM system has a dual-axis positioner orientation, wherein the weld torch orientation and position is on a separate axis than the build plate orientation and position. The coordinated movement can improve efficiency and the quality of the print. In some embodiments, more than one component may be printed during a single print process. The coordinated movement between the build plate and the weld torch allows the efficiency of the deposition to be improved and ensures quality through optimizing the positioning of the build plate with respect to the weld torch. In several embodiments, the individual deposition layers may vary based on movement of the build plate and/or weld torch. In some embodiments, the movement of the build plate and/or weld torch is pre-determined. In some embodiments, the movement of the build plate and/or weld torch is adjusted during the printing process. In many embodiments, the movement of the build plate and/or weld torch is controlled by a technician. A technician may manually adjust the position and movement of the build plate and/or weld torch based on a pre-determined path and/or in-print adjustments. In some embodiments, the movement of the build plate and/or weld torch may be automated. The build plate and/or weld torch may be programmed to move based on a pre-determined path and/or during the printing process. The coordinated movement between the build plate and/or weld torch may be as described in "Control Architecture for Additive Manufacturing Robotic Systems" U.S. Patent Application No. 18/791,302, "Modular Metal 3-D Printer Build Plate" U.S. Patent Application No. 18/352,995, "Systems for Horizontal Additive Manufacturing and Methods Thereof" U.S. Patent Application No. 18/352,992, "Additive Manufacturing Modular End Effector Assembly" PCT Application No. PCT/US2023/076486, and "Printing Heads and Associated Methods" U.S. Patent Application No. 18/330,987, hereby in their entireties incorporated by reference.

In some embodiments, there may be more than one build plate provided in the system. In case there are multiple build plates, the multiple build plates may be the same build plate. Alternately, the multiple build plates may be different build plates. In various embodiments, one or more weld torches may be configured to move between multiple build plates to print multiple components within a single print session. The multiple components printed on the multiple build plates may be the same component. The multiple components printed on the multiple build plates may be different components. The incorporation of more than one build plate allows for increased efficiency to print low volume components quickly, particularly when the multiple components printed are different components. The ordered deposition pattern system described herein may be configured to print multiple different components through ordered, partial deposition. The ordered deposition pattern system may be configured to print multiple different components on different build plates to allow for production of various components (at low volume for each individual component) at high production manufacturing rates, by producing multiple components according to a single order of deposition patterns. In some embodiments, the multiple components may be printed with the same material. In several embodiments, the weld torch is configured to switch between various feed stock materials such that the multiple components printed are made of different materials.

In various embodiments, the multiple build plates may be positioned on a moveable device. The moveable device may be a (including but not limited to) platform, track, conveyor belt, build arm, cart, pulley system, carousel, and/or rails system. The multiple build plates may optionally be attached to the moveable device by (including but not limited to) mounting, bolting, clamping, and/or tying. The moveable device may comprise multiple discrete moveable platforms to hold one or more build plates. For example, one or more build plates may be clamped to one or more carts. The one or more carts may further be mounted on a track, such that the carts reposition the build plates along the track. The one or more moveable devices may further be configured to independently incorporate coordinated movement as configured by the order of deposition patterns as described herein, including but not limited to tilting, rotating, and/or translocating. In several embodiments the one or more moveable devices may be configured to reposition the multiple build plates with respect to another moveable device, or with respect to the weld torch, or with respect to both, such that the weld torch is able to print multiple components on the multiple build plates. In several embodiments, the multiple build plates are commonly grounded. In some embodiments, the common grounding is through connection with the moveable device.

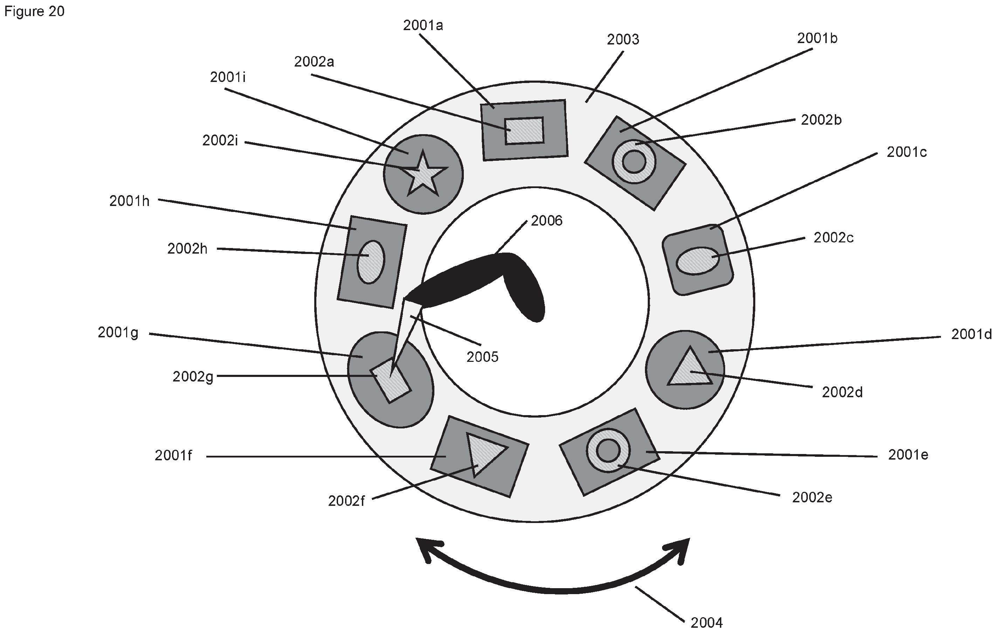

Figure 20 provides an example of multiple build plates 2001a-2001i configured to print different components 2002a-2002i. The build plates 2001a-2001i may have varied characteristics. The build plates can have the same characteristics (e.g., 2001a and 2001b) or different characteristics (e.g., 2001d and 2001h). Multiple components 2002a-2002i may be manufactured on respective build plates 2001a-2001i. In many embodiments, more than one component can be printed on a single build plate. The multiple components manufactured may be entirely homogeneous, entirely heterogeneous, or a combination of both. As depicted in Figure 20, component 2001a and component 2001b have different geometries. The one or more build plates may be in connection with a positioner such as moveable platform 2003. As depicted in Figure 20, the movable platform 2003 is circular to allow the build plates 2001a-2001i to be rotated such that each build plate 2001a-2001i is brought near the weld torch 2005. The moveable platform 2003 may be rotated in either direction 2004, or the moveable arm 2006 may be moved, or both may be rotated and moved, as configured by a master path system according to the techniques discussed herein. In particular, even if the geometry, parameters, and other characteristics of components 2002a-2002i and/or of build plates 2001a-2001i have been created in isolation from each other, a master path system can generate a master path according to which weld torch 2005 can additively manufacture all of components 2002a-2002i in a single operational run, according to the techniques discussed herein. In Figure 20, the weld torch 2005 is positioned within a space defined by the movable platform 2003. It should be understood the weld torch 2005 and/or moveable arm 2006 may be positioned next to the moveable platform 2003, positioned off center within the moveable platform 2003, and/or may be positioned above the moveable platform 2003. The weld torch 2005 may be in connection with a moveable arm 2006 to allow the weld torch 2005 to change position and/or height with respect to the build plates 2001a-2001i. The rotation of the moveable platform 2003 allows the weld torch 2005 to print sequences of the multiple components 2002a-2002i according to the master path by switching between the build plates 2001a-2001i, without requiring an equivalent rotation of moveable arm 2006. It should be understood that the techniques discussed herein can be used to generate master paths for building multiple homogenous or even heterogenous components in a single operational run, regardless of the type of additive weld torch, moveable arm, and positioner used.

Various AM components may be produced using more than one wire feed type. One or more AM components may be produced using multiple types of wire feed. Some AM components switch from a first feed material to a second feed material and finish with the first feed material. An automated AM system may utilize an automatic feed material system as described in "Additive Manufacturing Using Multiple Metallic Materials" U.S. Patent Application No. 18/607,251, hereby incorporated by reference in its entirety.

In various embodiments, the series of individual deposition layers is based on the physical measurements and/or parameters of the desired component and predictions of defects and distortions. In some embodiments, the determination of deposition layers accounts for predicted defects and distortions. As described above, some distortions and defects are inherent in AM components. Since some defects and distortions can be predicted, alterations between deposition layers can counteract these predicted defects and distortions. Defects and distortions in individual layers may not result in significant deformations of the finished component. However, when a defect or distortion accumulates in a similar spot across multiple layers, the finished component exhibits significant sagging and/or bumping. In many embodiments, the determination of a series of deposition layers can account for the accumulation of defects. The individual deposition layers within the series may be rotated to adjust the start and end point to prevent accumulation of defects inherent in the start and end point of AM techniques. The individual deposition layers within the series may be programmed to deposit adjust based on a wavy surface deviation from the original CAD to account for distortions and/or nonplanar deposition profiles. In many embodiments, the individual deposition layers within the series incorporate layer patterns as described above.

An automated AM system in accordance with various embodiments may comprise a path distortion and control system. The path distortion and control system may be used to predict potential defects or distortions within a print. The path distortion and control system may be used to detect defects as they form during the printing process. The path distortion and control system can correct the detected defects and distortions within a print during the printing process. Defects and distortions can be identified and quantified by physical measurements of a printed component. Defects and distortions can be predicted before, during, or after the printing process. Defect and distortion identification, path distortion, and control systems as described in "Deliberate Defect Introduction in Additive Manufacturing" U.S. Provisional Patent Application No. 63/716,673, "Automated Defect Recognition and Determinations of Pore Cluster Compliance" U.S. Patent Application No. 18/929,462, "Real-Time Adaptive Control of Additive Manufacturing Processes Using Machine Learning" U.S. Patent Application No. 15/604,473, "Control Architecture for Additive Manufacturing Robotic Systems" U.S. Provisional Patent Application No. 63/552,610, "Methods and Systems for Fabrication of Three-Dimensional Objects" U.S. Patent Application No. 16/683,760, and "Systems and Methods for Three-Dimensional Printing" U.S. Patent Application No. 17/378,875, hereby incorporated in their entireties by reference.

In some embodiments, the print may be paused after a number of individual deposition layers are deposited. The partial print may be evaluated to determine the physical parameters of the component being printed. The later deposition layers may be adjusted based on the printed component parameters if the printed component parameters, when paused, do not match the predicted component parameters at the pause point. The evaluation may determine the formation of potential defects and/or distortions not accounted for in the original determination of series of deposition layers. The evaluation may determine predicted defects and/or distortions have not formed. The further deposition layers may be altered before being deposited.

In some embodiments, the adjusted parameters and part parameters evaluated during the printing process may be saved as a part of the printing process data file. The adjusted parameters may be used to better predict distortions and defects in subsequent productions of other components. The evaluated parameters may be incorporated in the prediction determination of potential defects and distortions. Through this feedback loop, the system described herein improves the determination of a series of deposition layers.

In many embodiments, the evaluation during the printing process may be controlled by a technician. The pause point during the printing process may be determined before the print begins, or it may be determined by a technician during the printing process. The parameter adjustment during the printing process may be determined by the technician's evaluation of the component's parameters. The technician may manually adjust future deposition layer parameters based on the evaluation. In some embodiments, the WAAM consumables may be swapped during a pause point to ensure the print quality is maintained. In some embodiments, the feedstock material may be changed during a pause point.

In several embodiments, the evaluation during the printing process may be conducted automatically. The system may further comprise an image sensor to evaluate a component during the printing process. The image sensor may determine the component's physical parameters during the pre-determined pause point. The image sensor may be configured to continually monitor the component's physical parameters and initiate a print pause. During a print pause, the image sensor may determine the component's physical parameters. In many embodiments, the system is configured to determine changes to further deposition layers based on the evaluation. In many embodiments the process may comprise both technician and automated evaluation and adjustments.

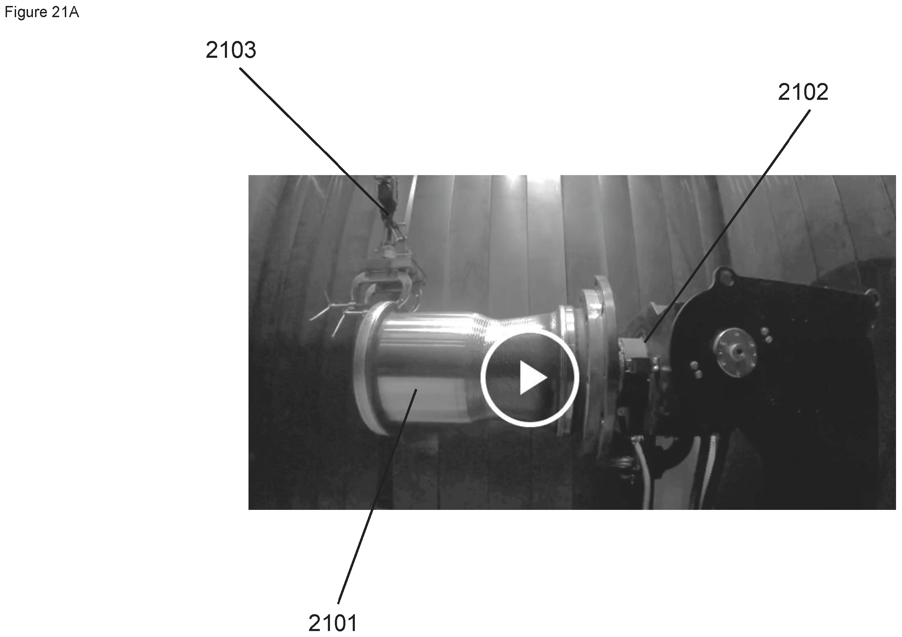

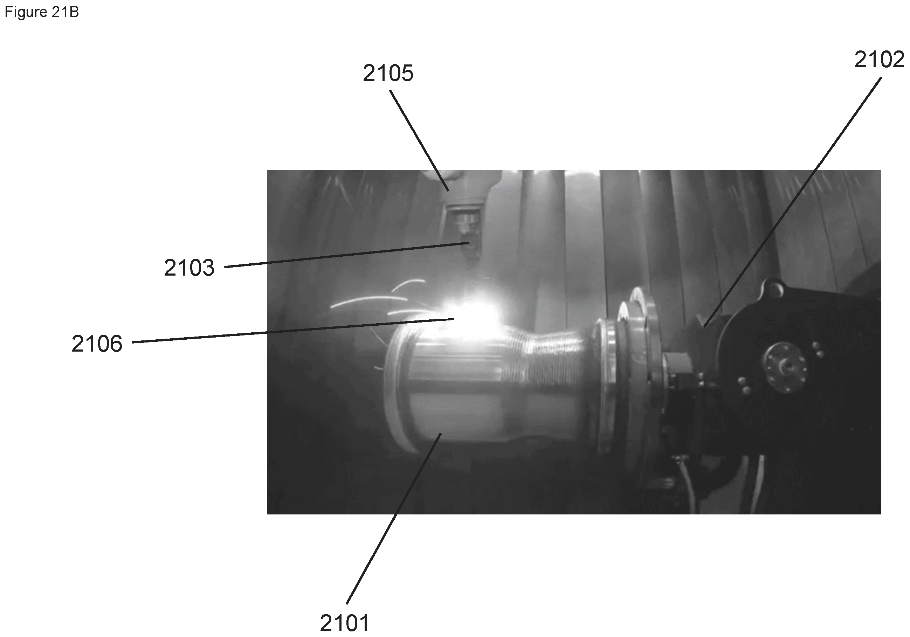

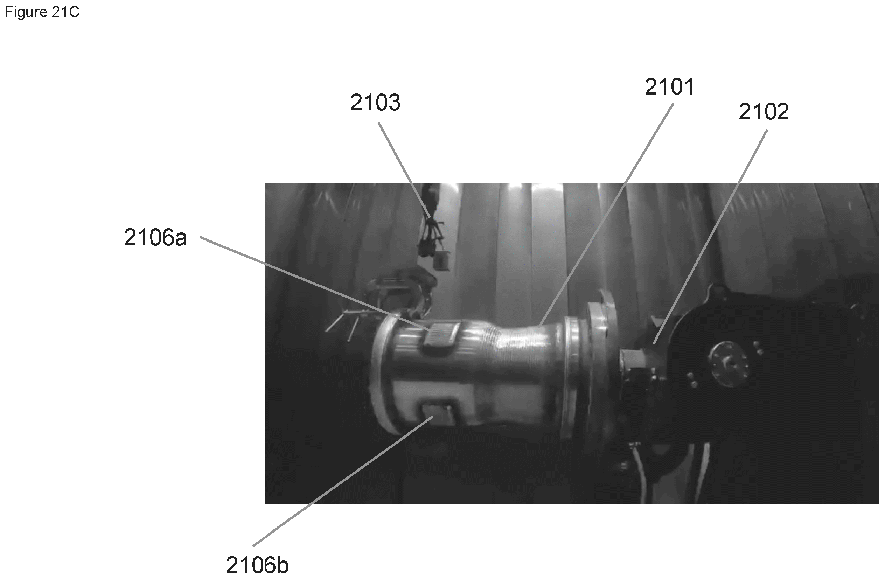

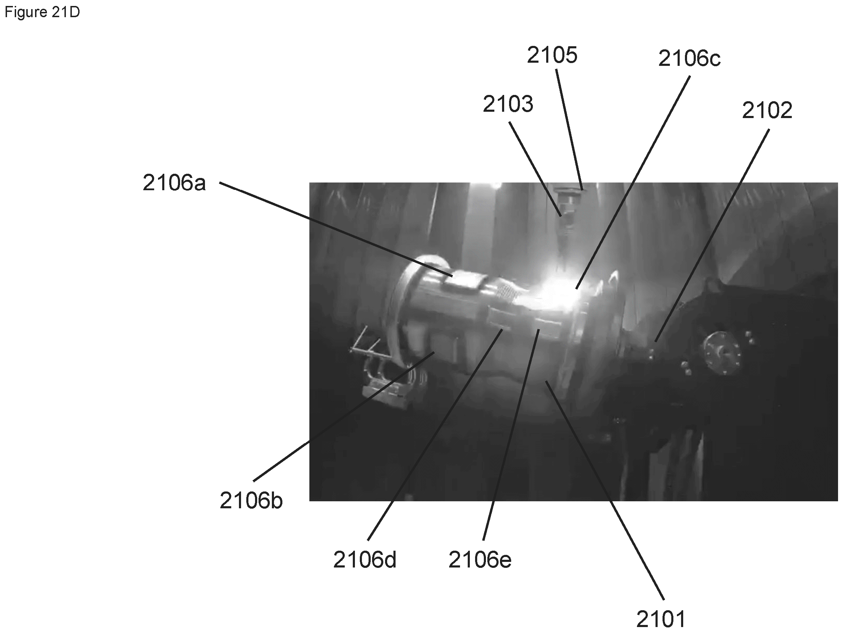

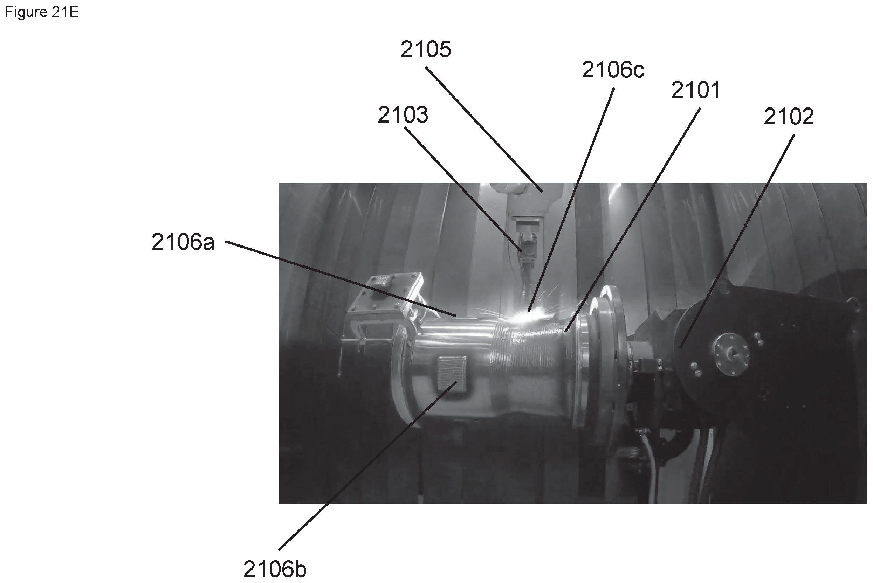

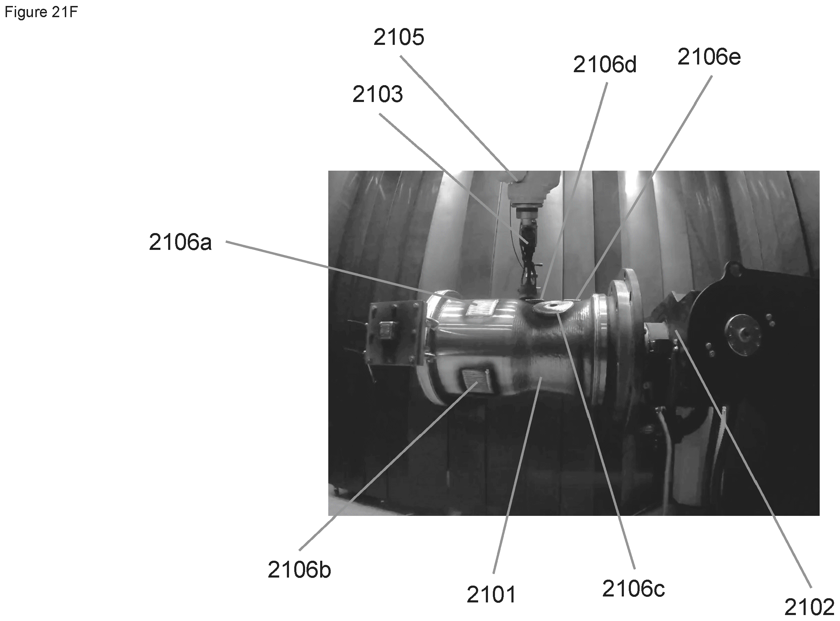

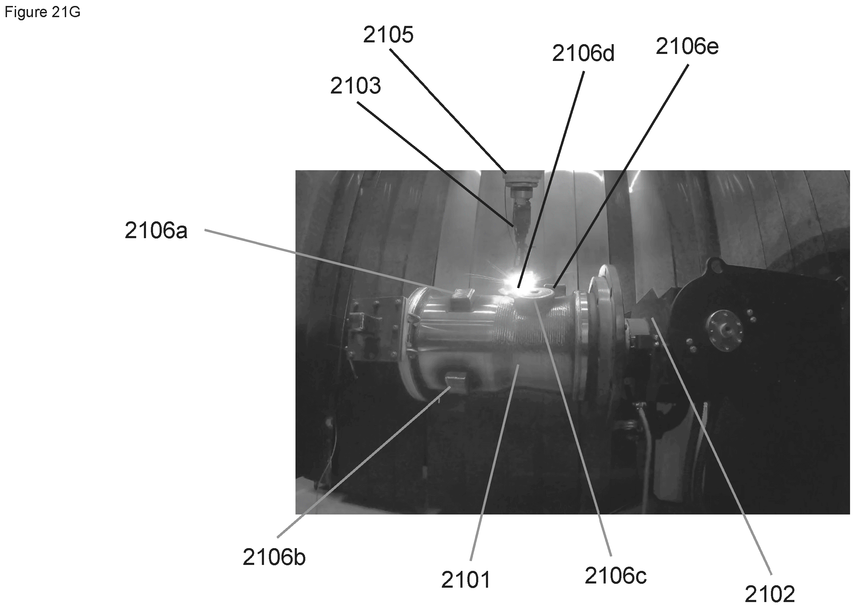

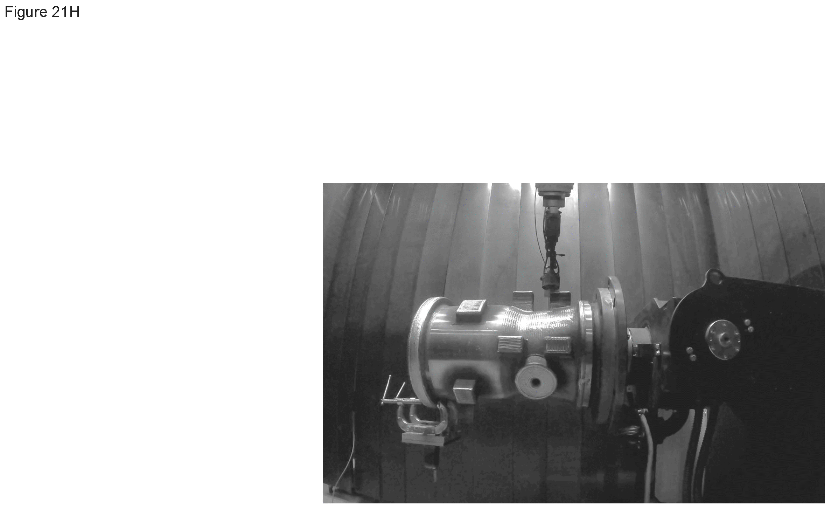

Figures 21A to 21H depict an example of an iterative AM system to print AM feature components printed on a part in accordance with an embodiment. Figures 21A to 21H comprise a witness coupon fixture to print a witness coupon as a feature component as described in more detail below. Though Figures 21A to 21H incorporate a witness coupon, it should be understood an iterative AM system may not require a witness coupon. Figure 21A depicts a curved part 2101 without any feature components mounted on a positioner 2102. The weld torch 2103 is also mounted on a movable arm 2105 (as shown in a following Figure). Figure 21B depicts the initial printing of a feature component 2106. Figure 21C depicts two feature components 2106a, 2106b mid print. Figure 6D illustrates the coordinated movement as additional feature components 2106c, 2106d, and 2106e are printed. The deposition of additional feature components is optimized by the tilting and rotation of the part 2101 by the positioner 2102 and the movement of the weld torch 2103 by the movable arm 2105. Figures 21E to 21G depict how during the overall printing process, the AM system may move from one feature component to another utilizing a master path. Figure 21E depicts the weld torch 2103 depositing material on a first feature component 2106c. Figure 21F depicts the weld torch 2103 moved by the movable arm 2105 in coordination with the rotation of the part 2101 by the positioner 2102 to deposit material on a second feature component 2106d. Figure 21G depicts the growth of feature component 2106c after several passes between various feature components in accordance with the order of interleaved deposition patterns. The feature components 2106a, 2106b have grown significantly in comparison with Figure 21A and Figure 21G. Figure 21H depicts the finished feature components. Figures 21B to 21H show the movement and repositioning of the weld torch between different feature components as it follows the order of interleaved deposition patterns of each of the different feature components. The weld torch moves back and forth between printing different feature components in accordance with this master path. The printing process shown in Figures 21A to 21G follows a master path to determine the rotation of the part, the retraction of the weld torch, and the orientation of the printing process as the individual feature components are printed incrementally. During the printing process, the weld torch can be seen to move from one feature component to another between Figures 21B and 21D.

### Witness Coupons

A witness coupon is a representative sample of material that undergoes manufacturing processes the same as, or at least similar to, the final article that it "witnesses." The witness coupon can function as a surrogate to the final article so that the manufacturing process can be validated and monitored while limiting, or avoiding altogether, the need for costly, time, and resource-consuming destructive testing of the final article. Utilizing witness coupons can improve quality control by monitoring and validating various production steps of the manufactured article, such as casting, forging, wrought plate rolling, coating, welding, heat treatment, and additive manufacturing without damaging the final product. As a result, witness coupons are indispensable for manufacturing and quality control in many industries.

Examples of use cases for witness coupons include welding, where a coupon welded alongside pipeline joints is tested for cracks or porosity; coatings, where a coupon coated with the same material as automotive parts is checked for thickness and corrosion resistance; and additive manufacturing (AM), where AM printed coupons are tested to verify mechanical properties like strength and ductility.

Witness coupons allow for non-destructive part and process quality assurance by enabling destructive testing to verify process quality without sacrificing the actual product, such as tests for tensile strength, hardness, and coatings that damage, destroy, or otherwise modify the coupon instead of the product. For example, an aerospace component or medical implant often cannot be cut or stressed during testing without damaging the article. In many such cases, witness coupons provide a safe alternative. The witness coupon can be utilized to confirm that critical parameters were correctly applied and processed, such as temperature, heat treatment, pressure, and duration, as well as environmental conditions in the manufacturing environment or the process parameters themselves used to manufacture a product. For example, if a heat-treatment coupon shows improper hardness, the batch or article for which it is standing can be further investigated before defective parts reach customers. Additionally testing coupons reduce waste and costs that would be associated with testing and scrapping high-value products. The witness coupon can be representative of an entire batch, saving time and resources. Furthermore, many industries, such as automotive, aerospace, and medical devices, require coupons as part of many of their regulatory standards, such as NASA and ISO standards or ASTM test procedures.

In many applications, witness coupon testing can provide records and auditable proof that the production processes meet the requisite specifications. As such, the witness coupon test data over the course of a production run or production campaign can be compared against other historical production runs, providing a historical record of process stability and how any individual run or campaign aligns with the statistics. Furthermore, deviations in the witness coupon test results can be used to flag potential issues such as equipment wear, material deviations, and changes in the operator's procedures. In addition, if a product fails or an incident occurs where a product may have been the cause, witness coupons from the same batch can be analyzed to help determine whether the product was the root cause and, if so, whether a material defect, a process error, environmental or other factor are to blame. For safety-critical applications, where the failure of components can lead to severe injury or loss of life, such as in nuclear reactors and aerospace components like aircraft and rocket engines, witness coupons often play a crucial role in ensuring that strict quality standards are upheld and prevent catastrophic failures.

Coupons are often standardized in size and shape to ensure consistent testing. They are labeled with batch numbers, dates, and process details, enabling traceability back to specific production runs. By acting as a "witness" to the manufacturing process, these coupons ensure quality, reduce risks, and uphold trust in high-stakes industries.

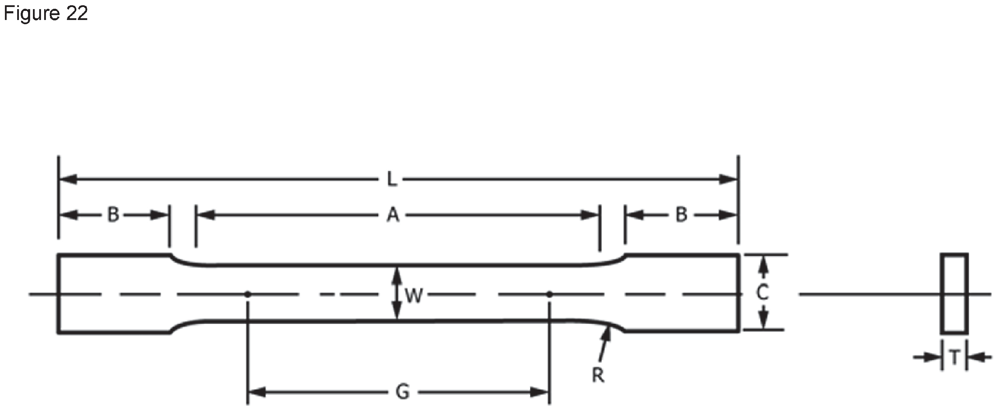

The ASTM E8/E8M (E8) standard is one of the standards most often utilized for testing metallic materials. The E8 standard outlines procedures for accurately determining key mechanical properties such as yield strength, tensile strength, elongation, and reduction of area. A key aspect of the standard is the meticulous preparation of the test specimens. The test specimens are produced from the same material batch and subjected to identical processing conditions as the final component, such as from a witness coupon manufactured alongside the manufactured component, ensuring that the test results accurately reflect the component material's performance in its real-world applications. Additionally, the E8 standard specifies precise dimensions for specimens; as shown in Figure 22. Attention to surface finish is also essential, as any irregularities can lead to stress concentrations that might adversely affect the test outcomes.

The E8 testing procedures stipulate stringent test parameters, which are vital for obtaining reliable yield and tensile strength measurements. The E8 procedures facilitate rigorous quality control, certification, and failure analysis by providing comprehensive test reports that document all critical material properties. In safety-critical industries such as aerospace and nuclear energy, adherence to the ASTM E8/E8M standard is considered indispensable for ensuring that materials can withstand operational stresses and perform reliably under extreme conditions. By maintaining compliance with E8 standardized testing methods, manufacturers can ensure that their components consistently meet design specifications and regulatory requirements.

Although the following discussion will focus on the use of WAAM techniques for aerospace applications generally and rocket engine parts and components more specifically, it will be understood that many such techniques could be used in accordance with various applications and AM techniques. WAAM uses an arc to melt metal wire, depositing layers to build large, complex components such as aerospace parts and ship propellers. However, the WAAM process introduces unique challenges, such as thermal gradients, residual stresses, and anisotropy. Witness coupons help analyze and address these WAAM manufacturing challenges but require careful design and testing.

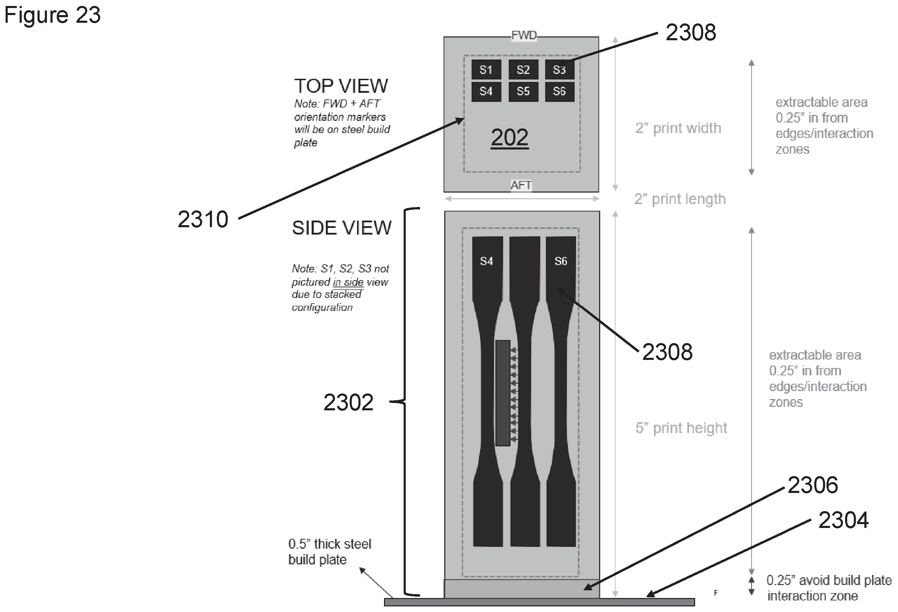

Aspects of the disclosure provide for AM witness coupons, manufacturing methods for their production, and associated devices and apparatus thereto. In various aspects, AM witness coupons may utilize a variety of AM processes, including but not limited to WAAM, to produce witness coupons alongside AM parts with varying dimensional requirements. Figure 23 shows a schematic of a witness coupon 2302 additively manufactured on a build plate 2304 in accordance with some embodiments. The coupon 2302 is built up the build plate 2304 by depositing a first layer plate 2304 forming an interaction zone 2306 of the witness coupon 2302. Additional layers are subsequently deposited, in conjunction with layers building deposited for a part that the witness coupon is representative of. Once the final layer of the part and coupon is deposited, test samples 2308 can be manufactured from an interior volume 2310 of the witness coupon 2302 which is representative of the manufactured part. The schematic shows an example witness coupon with a 5" x 5" x 2" build volume built in a vertical configuration for the production of six test samples; however, the build volume and orientation can be configured in accordance with many embodiments for any number of test samples and orientations. In many embodiments, the witness coupon orientation and volume are configured for manufacturing samples for standards and testing procedures that would be known to one of skill in the art.

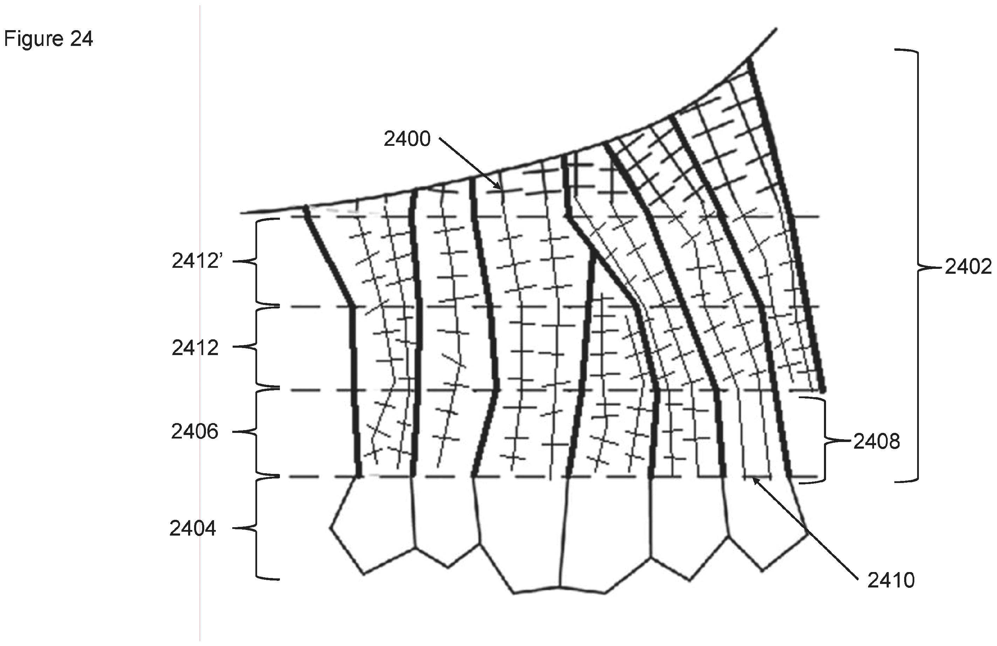

In metal AM, witness coupons can play a critical role in validating process parameters, material properties, and structural integrity. In many embodiments, AM methods may be employed to produce witness coupons with variant dimensional and structural requirements. In many embodiments, AM witness coupons can enable the replication of specific properties of a part sequentially or concurrently manufactured. In many such embodiments, material properties such as grain structures and stress orientations present in a final part can be replicated in a witness coupon. Figure 24 shows grain structures 2400 of a cross-section of an example witness coupon 2402 AM on a build plate 2404 in accordance with some embodiments. The coupon 2402 is built upon a build plate 2404 by depositing a first layer 2406 on the build plate 2404 which forms an interaction zone 2408 between the witness coupon 2402 and the build plate 2404 at starting at the material interface 2410. Additional layers 2412 and 2412' are subsequently deposited in conjunction with layers deposited for the part that the witness coupon is representative of.

In accordance with many embodiments, witness coupon 2402 can be utilized for quality assurance. In many such embodiments, the witness coupon 2402 and samples made from the coupon 2308 can be subjected to various testing procedures, such as mechanical testing, destructive testing, and nondestructive testing.

In numerous embodiments, the witness coupons and the testing of the witness coupons are utilized for manufacturing process validation. Manufacturing witness coupons in accordance with many embodiments enables the production of statistical data for process validation. In many such embodiments, the data can be utilized to build a database of statistical records. In many embodiments, witness coupon data can be utilized to monitor and validate the weld system functionality. In many embodiments, witness coupon data can be utilized to monitor and validate wire consistency and performance. In many embodiments, witness coupon data can be utilized to monitor and validate environmental fluctuations. In many embodiments, witness coupon data can be utilized to monitor and validate equipment issues such as robot wear and fatigue. In many embodiments, witness coupon data can be utilized to monitor and validate welding process parameters such as pass speed, pass weaving, wire feed speed, arc current, and travel speed. In many embodiments, witness coupon data can be utilized to monitor and validate discrepancies and variations between different production cells. In many embodiments, witness coupon data can be utilized to monitor and validate process drift over time. In accordance with numerous embodiments, witness coupon test data can be captured to meet stringent standards, process validation, and statistical requirements for high-stakes applications such as aerospace and manned space flight. In many such embodiments, the data can be used to ensure compliance with compliance standards such as NASA-6030 - Additive Manufacturing Requirements for Spaceflight Systems.

Manufacturing witness coupons in accordance with numerous embodiments can provide a framework for building statistical databases to monitor process consistency and validate part quality across multiple builds. Manufacturing witness coupons, in accordance with numerous embodiments, can provide a framework to monitor process consistency across changing manufacturing variables, such as across production cells and material stock, material changes, operators, operator and shift changes, equipment changes, equipment run time, and environmental factors.

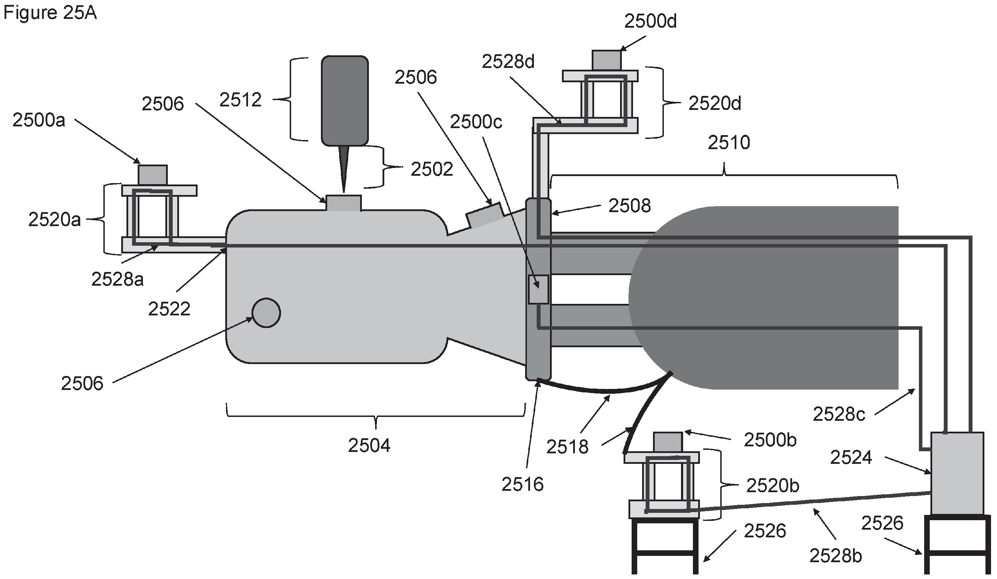

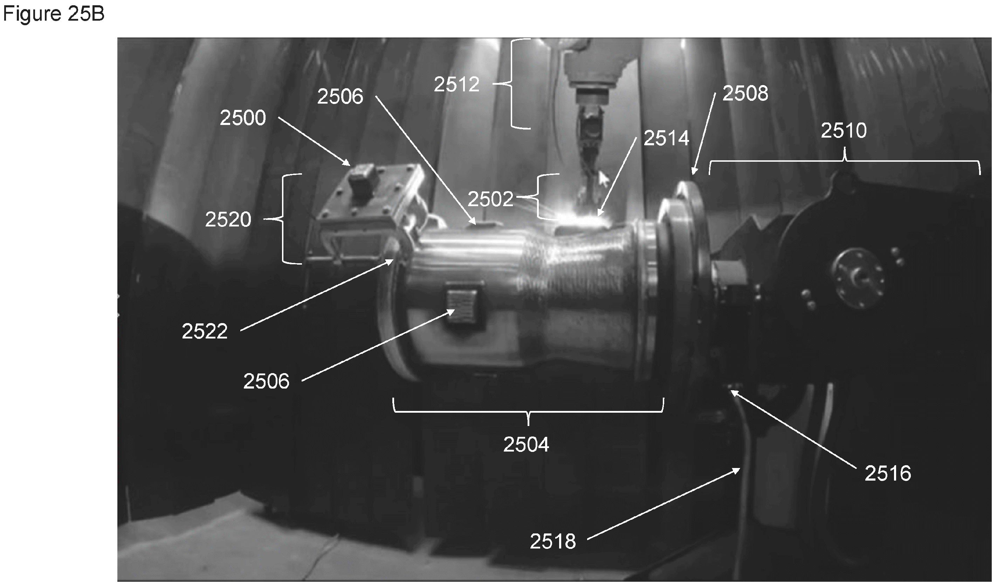

In many embodiments, a part representative witness coupon can be manufactured in a continuous AM processes, such as WAAM. In some embodiments, manufacturing a witness coupon can be incorporated as an additional component within a master path. In various embodiments, the witness coupon can comprise one or more layer patterns to mimic components comprising layer patterns. Figure 25A schematically illustrates witness coupons manufactured in a continuous AM process. Figure 25B illustrates an example of a witness coupon manufactured in a continuous WAAM process. WAAM employs arc welding equipment 2502 to build large near-net-shaped part 2504, including its feature components 42506, and efficiently manufacture structural feature components with modest complexity. In many embodiments, prior to the printing of feature components 2506, the previously-printed part 2504 is mounted upon a build plate 2508 itself upon a part fixture 2510. In many embodiments, the part fixture 2510 is able to manipulate the part along at least one part axis. In many embodiments, manipulation is performed by a computer numerically controlled (CNC) system. In many embodiments, the arc welding equipment 2502 is mounted upon an equipment manipulation device 2512, such as a robot arm. In many such embodiments, the equipment manipulation device 2512 is configured to manipulate the arc welding equipment 2502 along at least one axis. In many embodiments, the equipment manipulation device 2512 manipulations are controlled by a CNC system. In some embodiments, the manipulation device is configured to move the arc welding equipment according to the directions of a master path and/or a specific layer pattern as described above. In various embodiments the manipulation of the part and/or build plate follows a master path and/or layer pattern as described above.

In many embodiments energy of an electric arc 2514 or another energy source is employed melting a wire and depositing material layers according to a deposition path to form three-dimensional structures such as feature components 2506 and one or more of witness coupons 2500. In many embodiments, grounding is critical for maintaining a stable electric arc 2514. The part 2504 is electrically coupled to at least one grounding point 2516. In many embodiments, the grounding point 2516 is electrically coupled with a grounding wire 2518 to the ground, such as the negative terminal of the power supply, while the welding torch 2502 is connected to the positive terminal. In many embodiments, poor grounding can cause an unstable arc 2514. In many such embodiments, inconsistent grounding can cause arc instability, leading to uneven deposition, defects, or incomplete fusion between layers. In many embodiments, improper grounding can lead to heat distribution issues. In many such embodiments improper grounding may result in uneven heat distribution, causing warping, residual stresses, or distortion in the part. In many embodiments, inadequate grounding can introduce electrical noise, affecting the precision of the deposition process and the quality of the final part 2504.

Figure 25A shows part-representative witness coupons 2500a, 2500b, 2500c, and 2500d, each of which may be part-representative to a different degree. In various embodiments, any one or more of these four coupons 2500a, 2500b, 2500c, and 2500d may be printed with feature components 2506. In some embodiments, feature components 2506 and witness coupons 2500a, 2500b, 2500c, and 2500d can be printed in accordance with a master path as described above. Figure 25A also shows several coupon fixtures 2520, including fixture 2520a coupled to part 2504 and configured so that witness coupon 2500a is at the extremity of the electrical path. In many embodiments, the coupon fixture 2520a is coupled to the part 2504 at a coupling point 2522 distal to the grounding point 2516. Witness coupon 2500b can be printed on a separate coupon fixture 2520b not coupled to part 2504. In many embodiments, the coupon fixture 2520b is electrically coupled with the part 2504 and the grounding point 2516. Witness coupon 2500b can be placed near part 2504 on an external support 2526, such as a pedestal, cart, or shelf. Witness coupon 2500c is printed directly on the build plate 2508 without a coupon fixture. Witness coupon 2500c is electrically coupled with the build plate 2508 and the grounding point 2516. Witness coupon 2500d is printed on a coupon fixture 2520d coupled directly to the build plate 2508. Witness coupon 2500d can be electrically coupled to the build plate 2508 and grounding point 2516 by electrically coupling coupon fixture 2520d to the build plate 2508.

In many embodiments, the witness coupons 2500 are configured to be representative of conditions that are less ideal than conditions in various areas of part 2504, such as feature components 2506. In many such embodiments, the conditions at the extremity of the electrical path result in worse properties, such as an increase in porosity. In embodiments, multiple fixtures 2520 are coupled directly to the part, to other aspects of the environment, or a combination of both. To give some examples, in one embodiment a pair of fixtures 2520a (although only one is depicted on Figure 25A) may be directly coupled to two different areas of the part, in another embodiment a pair of fixtures 2520b (although only one is depicted on Figure 25A) may be coupled to two different external supports, while in yet another embodiment a pair of fixtures 2520d (although only one is depicted on Figure 25A) may be coupled to two different areas of the build plate 2508; similarly in another embodiment a pair of coupons 2500c (although only one is depicted on Figure 25A) may be printed on two different areas of the build plate 2508. In many such embodiments, each fixture 2520 and/or coupon 2500 is configured to capture a better condition or worse condition than the manufactured part 2504 such that a comparison of the resulting witness coupons 2500 would be representative of a range that encompasses the conditions experienced by the part. In many embodiments, the coupon fixtures 2520 are configured so there is clearance between the coupon fixtures 2520 and welding head 2502 so that the coupon fixtures 2520 do not impede the welding head 2502 during manufacturing.

In some embodiments, the temperature of the coupon fixture and/or witness coupon can be adjusted. During a manufacturing process, the part and/or build plate can have a different temperature than the fixture, resulting in a temperature differential between the feature components and the witness coupon. The part can have a larger mass than the fixture causing the part to cool feature components at a different rate than the witness coupon on the coupon fixture. The different temperature of the feature components and the coupons can result in changes in porosity or other characteristics of the material such that the witness coupon is less representative of the feature components. The material being printed can have a temperature limit, that when violated can lead to printed material failure. Thus, incorporating a heating and/or cooling apparatus can enable materials to be printed with an adequately-representative witness coupon in accordance with various embodiments. In some embodiments, the temperature of the part, coupon fixture, and/or witness coupon can be controlled by manufacturing according to a master path as described above. The movement between feature components and witness coupons can be configured to prevent overheating of the part and/or coupon fixture. In various embodiments, the order of deposition according to the master path can account for the application of a heating and/or cooling apparatus. In many embodiments, the temperature of the part, coupon fixture, and/or witness coupon can be controlled by depositing according to layer pattern techniques described above. The feature components and/or witness coupons can be manufactured according to specific layer patterns to minimize overheating. In some embodiments, the application of a heating and/or cooling apparatus can be coordinated with the configuration of each layer pattern.

In many embodiments, a cooling apparatus 2524 comprising one or more cooling apparatus channels 2528a, 2528b, 2528c, 2528d can be incorporated into AM systems to cool the witness coupons 2500 to mimic the temperature of the feature components 2506. In other words, the cooling apparatus 2524 can ensure that the coupon fixture 2520 exhibits representative thermal exchange for the witness coupon 2500, as the part 2504 exhibits for the feature components 2506. The cooling apparatus 2524 can be configured to modify the temperature of the fixture 2520 to correspond to the temperature of the part 2504. The cooling apparatus 2524 can be connected to the coupon 25420 and/or coupon fixture 2520 via one or more channels 2528a, 2528b, 2528c, 2528d. The cooling apparatus channels 2528a, 2528b, 2528c, and 2528d can be adjacent to the feature component, coupon, and/or part being AM to promote thermal exchange between the feature component, coupon, and/or part and the cooling apparatus. In some embodiments, the cooling apparatus channel 2528a is connected to the cooling apparatus 2524 and run through part 2504 to cool the part. The cooling apparatus 2528a can be configured to connect to the part 2504 to provide temperature regulation of the part 2504. In certain embodiments, the witness coupon 2500b and/or coupon fixture 2520b is not physically attached to part 2504, but mounted on an external support 2526, such as a pedestal. The cooling apparatus 2524 can be connected to the coupon fixture 2520b via a direct cooling apparatus channel 2528b. In some embodiments, the cooling apparatus channel 2528c can be connected and/or adjacent to part fixture 2510 and build plate 2508 to cool the part fixture 2510 and build plate 2508. As the part 2504 heats, the thermal load from the part 2504 can be transferred to the build plate 2508 and/or part fixture 2510. The increase in thermal load on the build plate 2508 and/or part fixture 2510 can impart material wear and/or stress. For example, the increased thermal load can put wear and/or stress on the connections between the part 2504, build plate 2508, and/or part fixture 2510. In some embodiments, wear on the connections can result in slip in the system and reduce the accuracy of the print orientations. In many embodiments, the connections comprise bearings and lubricants sensitive to temperature.

In some embodiments, separate cooling apparatuses can be incorporated within the system. For example, the witness coupon may not be in connection with the part such that a witness coupon cooling apparatus would be configured to cool the fixture but not the part. In certain embodiments, a part fixture cooling apparatus can be included in the part fixture and a separate witness coupon cooling apparatus can be included in a part-attached fixture. In many embodiments, the coupon fixture can be at least partially hollow such that the cooling apparatus and/or cooling apparatus channels can be encased within the coupon fixture. In some embodiments, the part comprises one or more channels such that the cooling apparatus channels can be disposed within the part. The channels in the part may remain in the part after manufacturing is complete; for example, for later use as cooling channels during part operation. Alternatively, the channels in the part may be solely for the purpose of cooling during manufacturing, and may thus remain unused during part operation, or even machined away prior to part operation. The cooling apparatus can be attached to the part and/or fixture such that the cooling apparatus is adjacent to the part and/or fixture. A cooling apparatus can be a rotary union cooling system, a water cooling system, and/or any cooling system. Though labeled a cooling apparatus, it should be understood the cooling apparatus can be configured to provide temperature adjustment to cool and/or heat the system based on the materials and/or application.

In accordance with many embodiments, witness coupon manufacturing is integrated into an AM print path. In several embodiments, the AM print path is a weld path plan such as master path described above. Though it should be understood witness coupons, in accordance with certain embodiments, can be manufactured with any AM print path. In some embodiments the AM print path can comprise layer patterns for each layer of deposition of the witness coupon. In many embodiments, the manufacturing process is configured to form a witness coupon with an orientation optimized for printing and to replicate the properties of a concurrently printed component. In accordance with many embodiments, coupons printed with excessive heat input may show porosity or cracking, prompting parameter adjustments. In some embodiments, coupons are printed in different orientations to test tensile strength, fatigue resistance, and ductility. In accordance with many embodiments, coupons manufactured in different orientations can exhibit different properties. For example, a vertical coupon may show weaker interlayer bonding compared to a horizontal one. In many embodiments, the coupon orientation is configured to highlight potential failure points in the part.

In many embodiments, the path planning, inserts layers of a witness coupon into a sequence of layers for the part. In many embodiments, the path plan for a print includes layers of the part as well as layers of the witness coupon. Layers for the witness coupon are inserted by interleaving them. In many such embodiments, a first layer of the part is printed and a first layer of the coupon is printed, then a subsequent layer of the part and a subsequent coupon layer is printed. In many such embodiments, the layer interweave is repeated for each sequential layer. In many embodiments interleaving produces greater representativeness of the coupon. In some embodiments, the interleaving can be replaced by appending such as printing the coupon entirely last. In some such embodiments the coupon is appended so that other factors and material properties can be represented in the coupon. In various embodiments, the witness coupon and part layers are interleaved according to a master path as described above. Interleaving layers between the witness coupon, the part, the components, and/or the feature components can be planned according to a master path to efficiently switch between the witness coupon, the part, the components and/or the feature components.

In many embodiments, the witness coupon and the part are configured to be close to each other, physically. In some embodiments, the coupon and the part are configured to be close to each other electrically. In many embodiments, the coupon and the part are configured to be close to each other by mounting an electrically conductive fixture to the part upon which the coupon is printed. In many embodiments, the part and the coupon share an electrical ground. In many such embodiments, sharing an electrical ground increases the representativeness of the coupon and the part. In many embodiments, physical proximity and shared space increases the print speed. In many such embodiments, the print head travels a shorter distance between the part and the coupon. In some embodiments, the fixture thermally isolates the witness coupon from the part. In some such embodiments, the thermal distance is configured for the thermal management of the part.

In many embodiments, the orientation of the witness coupon, the fixture, or both are configured in an orientation and direction with respect to the part such as horizontal or vertical. In many embodiments, the sizing of the coupon, the fixture platform, or both, are configured in a ratio to the part. In many embodiments, the part, coupon, and fixture are configured in alternate orientations and sizes, alternate layer deposition schemes, and travel times and delays as would be known to one skilled to enhance the representativeness of the resulting witness coupon.

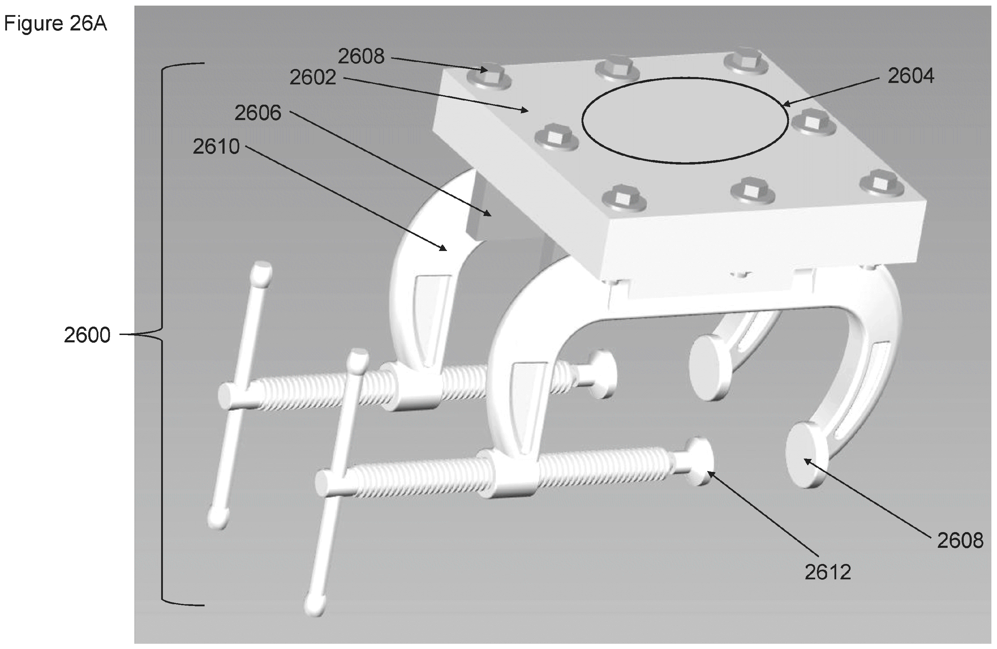

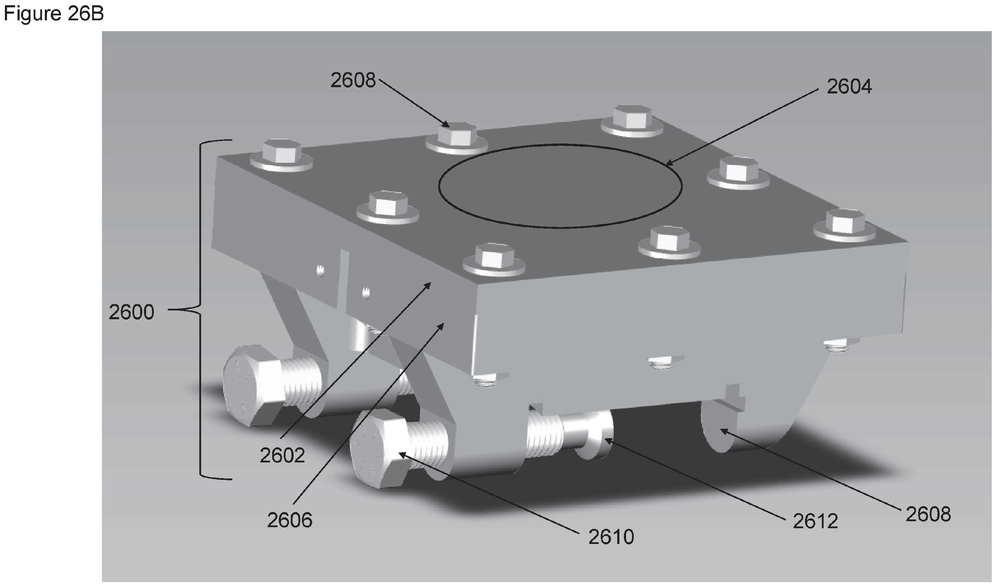

Figure 26A and Figure 26B show example witness coupon fixtures. In many embodiments, the witness coupon fixture 2600 has a build plate 2602 upon which the witness coupon is deposited in build area 2604. In many embodiments, the build plate 2602 is coupled to a fixture structure 2606. In some embodiments, the build plate 2602 is coupled to the structure 2606 with a plurality of fasteners 2608 such as bolts. In many embodiments, the build plate 2602 is configured to be decoupled from the structure 2606 so that the build plate 2602 can be rapidly replaced and the coupon removed. In many embodiments, the structure 2606 is configured with a coupling point 2608. In many embodiments, the coupling point 2608 is configured to electrically couple the fixture 2600 to a part. In some embodiments, the coupling point 2608 is configured to thermally couple the fixture 2600 to a part. In some embodiments, the coupling point 2608 is configured to thermally isolate the fixture 2600 from a part. In many embodiments, a clamping device 2610 is disposed on the structure 2606. In many such embodiments, the clamping device 2610 is configured with a clamping point 2612 such that when the clamping device 2610 is actuated the clamping point 2612 can apply a force to a part disposed between the clamping point 2612 and the coupling point 2608 securing and coupling the fixture 2600 to the part.

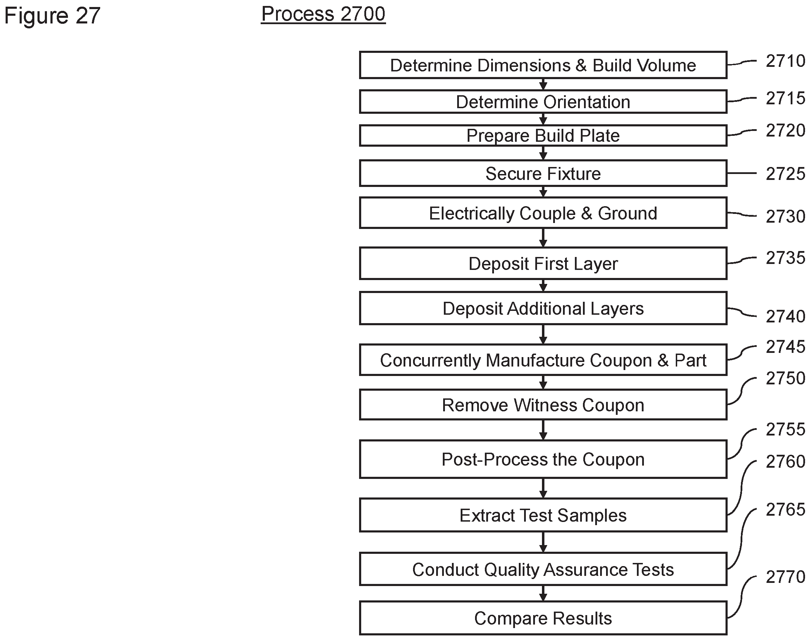

Figure 27 depicts process 2700 of AM witness coupons. At step 2710, the dimensions and build volume of the witness coupon are determined based on the testing standard and requirements of the part it represents. At step 2715, the orientation of the coupon (e.g., vertical or horizontal) to replicate the part's properties, such as grain structure and stress orientations, are determined. At step 2720, the build plate upon which the witness coupon is to be manufactured is prepared for the AM process. At step 2725, the fixture is secured to the AM system, either by securing it to a previously-printed part on a build plate or by securing it to the build plate directly. At step 2730, the fixture and AM system are electrically coupled and ground. At step 2735, a first layer of material is deposited onto the build plate, forming the interaction zone and interface between the witness coupon and the build plate. At step 2740, additional sequential layers of material are deposited, representative of the process parameters of the part, or components, the coupon represents such as, heat input, deposition rate, and cooling. At step 2745, the coupon is concurrently manufactured layer by layers with the part it replicates. At step 2750, the witness coupon is removed from the fixture. At step 2755, the witness coupon is post-processed to match the part's post-processing conditions such as heat treatment. At step 2760, test samples are extracted from the witness coupon. At step 2765, the test samples are subjected to quality assurance test such as NDE and destructive testing. At step 2770, results from the witness coupon are compared to with the expected properties of the part and to validate the additive manufacturing process and ensure the part meets required specifications.

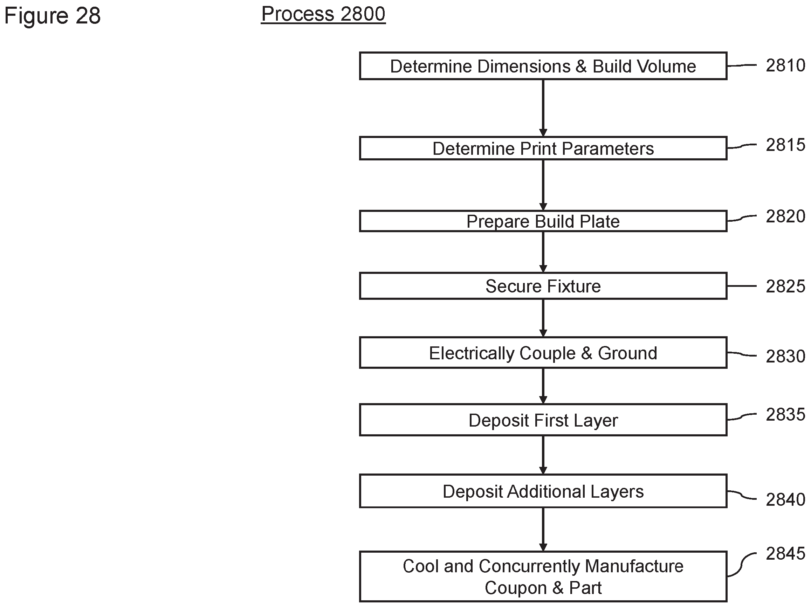

Figure 28 depicts process 2800 of printing a witness coupon incorporating a cooling apparatus. At step 2810, the dimensions and build volume of the witness coupon are determined based on the testing standard and requirements of the part it represents. At step 2815, the print parameters of the coupon are determined to replicate the part's properties, such as grain structure, stress orientations, and/or material failure temperature. The AM system can incorporate a cooling apparatus such that the temperature of the witness coupon is reduced, such as by regulating it to mimic the temperature of the components being printed. At step 2820, the build plate upon which the witness coupon is to be manufactured is prepared for the AM process. At step 2825, the fixture is secured to the AM system, either by securing it to a previously-printed part on a build plate, to the build plate directly, or to external supports. In embodiments where the witness coupon is printed directly on the same build plate as the part, step 2825 may be omitted. In some embodiments, the build plate for the witness coupon is separated from the part and/or part build plate. At step 2830, the fixture and AM system are electrically coupled and ground. In many embodiments, the fixture and AM system are electrically coupled and grounded by electrically coupling the fixture to the part. In certain embodiments, the fixture and AM system are electrically coupled and grounded by electrically coupling the separate fixture to the ground point of the part. In various embodiments, the build plate of the witness coupon is attached to the build plate of the part such that the witness coupon and the part are electrically coupled and grounded. At step 2835, a first layer of material is deposited onto the build plate, forming the interaction zone and interface between the witness coupon and the build plate. At step 2840, additional sequential layers of material are deposited, representative of the process parameters of the part, or components, the coupon represents such as, heat input, deposition rate, and cooling. At step 2845, the coupon is cooled and concurrently manufactured layer by layer with the part it represents. In numerous embodiments, the coupon is cooled via a cooling apparatus in connection with the build plate, part, and/or fixture. The cooling apparatus can cool the fixture and/or the part during the manufacture process such that the temperature of the fixture replicates the temperature of the part. In certain embodiments, the part can incorporate cooling apparatus channels to cool the part during the manufacturing process, and such channel may variously be left in the part for later use during part operation, left in the part although not for later use, or even machined off after process 2800 is complete.

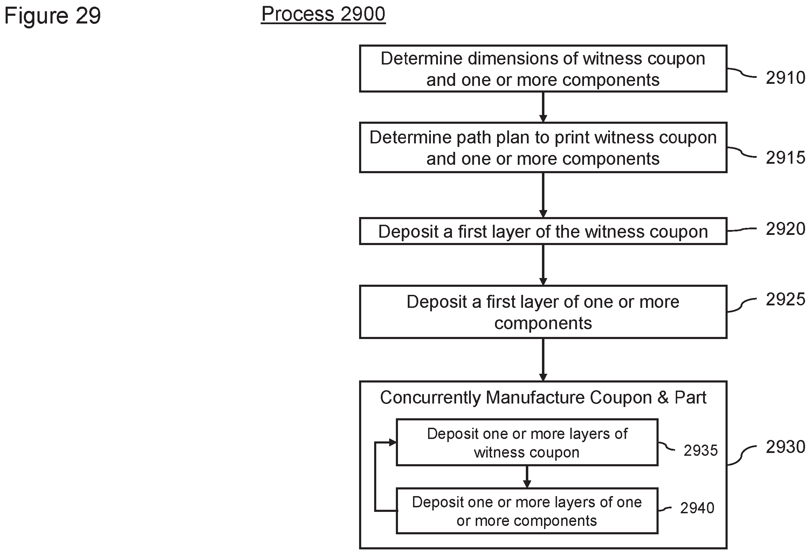

Figure 29 depicts process 2900 for path planning to AM a witness coupon and components. At step 2910, the dimensions of the witness coupon and one or more components are determined. The dimensions of each component can be different. In several embodiments, the dimensions of the witness coupon are representative of one or more components based on the testing standard and requirements of the part it represents. At step 2915, the path plan to print the witness coupon and the one or more components is determined. The path plan, as described herein, relates to the order of deposition of one or more layers of material within the AM process. The path plan can be configured to deposit material layers for different components and witness coupons concurrently, such that each component and witness coupon is manufactured piecemeal. In some embodiments, the determined path plan can incorporate orientation changes of the part to determine the order of concurrent manufacture of one or more components and witness coupon. At step 2920, a first layer of material is deposited onto the build plate according to the path plan, forming the interaction zone and interface between the witness coupon and the build plate. At step 2925, a first layer of each of the one or more components is deposited according to the path plan. At step 2930, the witness coupon and one or more components are concurrently manufactured according to the path plan. The path plan can direct (2935) deposition of one or more layers of the witness coupon and direct (2940) deposition of one or more layers of each component to provide concurrent piecemeal manufacturing until the one or more components and witness coupon are complete. In various embodiments, the path plan follows a master path as described above. The master path can be configured to interleave one or more deposition layers of the coupon and the one or more components during the AM process. In some embodiments the path plan comprises one or more layer patterns as described above such that each layer of deposition follows a specific layer pattern. The path plan for manufacturing a coupon with one or more components can follow a master path comprising one or more layer patterns.

Although specific embodiments of the invention have been described and illustrated, the invention is not to be limited to the specific forms or arrangements of parts so described and illustrated. The scope of the invention is to be defined by the claims appended hereto and their equivalents.

Although the operations of the method(s) herein are shown and described in a particular order, the order of the operations of each method may be altered so that certain operations may be performed in an inverse order or so that certain operations may be performed, at least in part, concurrently with other operations. Instructions or sub-operations of distinct operations may be implemented in an intermittent and/or alternating manner.

It should also be noted that at least some of the operations for the methods described herein may be implemented using software instructions stored on a computer usable storage medium for execution by a computer. As an example, an embodiment of a computer program product includes a computer usable storage medium to store a computer readable program.

The computer-usable or computer-readable storage medium can be an electronic, magnetic, optical, electromagnetic, infrared, or semiconductor system (or apparatus or device). Examples of non-transitory computer-usable and computer-readable storage media include a semiconductor or solid-state memory, magnetic tape, a removable computer diskette, a random-access memory (RAM), a read-only memory (ROM), a rigid magnetic disk, and an optical disk. Current examples of optical disks include a compact disk with read only memory (CD-ROM), a compact disk with read/write (CD-R/W), and a digital video disk (DVD).

The coordinated movement between the build plate and the weld torch may be as described in the following patent applications: "Control Architecture for Additive Manufacturing Robotic Systems" (U.S. Patent Application No. 18/791,302), "Modular Metal 3-D Printer Build Plate" (U.S. Patent Application No. 18/352,995), "Systems for Horizontal Additive Manufacturing and Methods Thereof" (U.S. Patent Application No. 18/352,992), "Additive Manufacturing Modular End Effector Assembly" (PCT Application No. PCT/US2023/076486), and "Printing Heads and Associated Methods" (U.S. Patent Application No. 18/330,987); These documents are hereby incorporated by reference in their entirety.

Defect and distortion identification, path distortion, and control systems are described in the following applications: "Deliberate Defect Introduction in Additive Manufacturing" (U.S. Provisional Patent Application No. 63/716,673), "Automated Defect Recognition and Determination of Pore Cluster Compliance" (U.S. Patent Application No. 18/929,462), "Real-Time Adaptive Control of Additive Manufacturing Processes Using Machine Learning" (U.S. Patent Application No. 15/604,473), "Control Architecture for Additive Manufacturing Robotic Systems" (U.S. Provisional Patent Application No. 63/552,610), "Methods and Systems for Fabrication of Three-Dimensional Objects" (U.S. Patent Application No. 16/683,760), and "Systems and Methods for Three-Dimensional Printing" (U.S. Patent Application No. 17/378,875); These documents are also incorporated by reference in their entirety.

After one or more components have been printed, defects and distortions may be identified as described above and in "Additively Manufactured Combustion Chambers, Manifold Structures and Hybrid Additive Processes Related Thereto" (U.S. Application No. 18/515,033), which is hereby incorporated by reference in its entirety.

An automated additive manufacturing system may utilize an automatic feed material system as described in "Additive Manufacturing Using Multiple Metallic Materials" (U.S. Patent Application No. 18/607,251), which is also incorporated by reference in its entirety.

Although layer pattern techniques, weld path planning with master path, and witness coupons are described concurrently, it should be understood layer pattern techniques, weld path planning with master path, and witness coupons can be utilized independently. Layer patterning techniques, weld path planning with master path, and witness coupons can operate without incorporation of another aspect of this disclosure. Further, it will be appreciated that any or all of the aspects/embodiments related to layer pattern techniques, weld path planning with master path, and witness coupons can be combined in any suitable matter. For example, all three aspects/embodiments can be combined, any two of the aspects/embodiments can be combined, or as mentioned, each aspect/embodiment can operate independently.

### DOCTRINE OF EQUIVALENTS

This description of the invention has been presented for the purposes of illustration and description. It is not intended to be exhaustive or to limit the invention to the precise form described, and many modifications and variations are possible in light of the teaching above. The embodiments were chosen and described in order to best explain the principles of the invention and its practical applications. This description will enable others skilled in the art to best utilize and practice the invention in various embodiments and with various modifications as are suited to a particular use. The scope of the invention is defined by the following claims.

As used herein, the singular terms "a," "an," and "the," may include plural referents unless the context clearly dictates otherwise. Reference to an object in the singular is not intended to mean "one and only one" unless explicitly so stated, but rather "one or more."

As used herein, the terms "approximately" and "about" are used to describe and account for small variations. When used in conjunction with an event or circumstance, the terms can refer to instances in which the event or circumstance occurs precisely as well as instances in which the event or circumstance occurs to a close approximation. When used in conjunction with a numerical value, the terms can refer to a range of variation of less than or equal to ± 10% of that numerical value, such as less than or equal to ±5%, less than or equal to ±4%, less than or equal to ±3%, less than or equal to ±2%, less than or equal to ±1 %, less than or equal to ±0.5%, less than or equal to ±0.1 %, or less than or equal to ±0.05%.

Additionally, amounts, ratios, and other numerical values may sometimes be presented herein in a range format. It is to be understood that such range format is used for convenience and brevity and should be understood flexibly to include numerical values explicitly specified as limits of a range, but also to include all individual numerical values or sub-ranges encompassed within that range as if each numerical value and sub-range is explicitly specified. Where ranges are described, the range should be understood to include the endpoints of the ranges, and the endpoints of such ranges are also contemplated to stand on their own as inventive, individual data points and to form the endpoints of other ranges. For example, a ratio in the range of about 1 to about 200 should be understood to include the explicitly recited limits of about 1 and about 200, but also to include individual ratios such as about 2, about 3, and about 4, sub-ranges such as about 1 to about 10, about 10 to about 50, about 20 to about 100, about 100 to about 200, and so forth, and related ranges such as greater than about 1 or less than about 200.

### Example Clauses

Examples are set out in the following clauses:
1. A method for depositing a layer pattern comprising:
   defining a perimeter pattern polygon, wherein the perimeter pattern polygon comprises a first portion and a second portion;
   depositing the first portion of the perimeter pattern polygon, wherein depositing the first portion of the perimeter pattern polygon comprises depositing a first tail portion outside the area defined by the perimeter pattern polygon, wherein the first tail portion extends from a start point on the first portion of the perimeter pattern polygon;
   depositing an in-fill pattern within an area defined by the perimeter pattern polygon, wherein depositing the in-fill pattern within the area defined by the perimeter pattern polygon ends near the start point; and
   depositing the second portion of the perimeter pattern polygon, wherein depositing the second portion of the perimeter pattern polygon comprises depositing a second tail portion outside the area defined by the perimeter pattern polygon, wherein the second tail portion extends from an end point on the second portion of the perimeter pattern polygon.
2. The method of clause 1, further comprising depositing a second layer pattern on top of a first layer pattern, wherein depositing the first portion of the perimeter pattern polygon of the second layer pattern is different than a start point of the first layer pattern.
3. The method of clause 1, wherein depositing the first portion of the perimeter pattern polygon, depositing the in-fill pattern, and depositing the second portion of the perimeter pattern polygon comprises depositing a material at a feed rate; wherein the feed rate is dynamically changed.
4. The method of clause 3, wherein the feed rate of depositing the in-fill pattern is greater than the feed rate of depositing the first portion and the second portion of the perimeter pattern polygon.
5. The method of clause 3, wherein the feed rate of depositing the in-fill pattern is less than the feed rate of depositing the first portion and the second portion of the perimeter pattern polygon.
6. The method of clause 1, wherein the perimeter pattern polygon comprises a first corner and a second corner, wherein the step of deposition the first portion of the perimeter pattern polygon begins at the first corner.
7. The method of clause 6, further comprising depositing a second layer pattern comprising depositing the first portion of the perimeter polygon of the second layer pattern begins at the second corner.
8. The method of clause 6, wherein the in-fill lines are at an offset angle from the in-fill lines of the second layer pattern.
9. The method of clause 8, wherein the first corner and the second corner are adjacent corners within the perimeter pattern polygon, wherein the offset angle is equal to an interior angle of the perimeter pattern polygon.
10. A system for weld path planning comprising:
   a controller comprising a processor and a memory, wherein the memory comprises an application configured to direct the processor to perform a method for determining a layer pattern comprising:
      determining a perimeter pattern, comprising a first portion and a second portion; and
      determining an in-fill pattern within an area defined by the perimeter pattern;
      wherein the layer pattern is a portion of a weld path plan that runs continuously from the first portion into the in-fill pattern and from the in-fill pattern into the second portion.
11. The system of clause 10, wherein the first portion of the perimeter pattern further comprises a first tail portion, wherein the first tail portion is outside the area defined by the perimeter pattern, wherein the second portion of the perimeter pattern further comprises a second tail portion, wherein the second tail portion is outside the area defined by the perimeter pattern.
12. The system of clause 10, wherein the in-fill pattern comprises a plurality of in-fill lines and a plurality of turn regions, and wherein the in-fill lines are approximately parallel.
13. The system of clause 12, wherein the first portion of the perimeter pattern comprises a first side and a second side, wherein the second portion of the perimeter pattern comprises a third side and a fourth side, and wherein the second side and the fourth side are approximately parallel to the in-fill lines.
14. The system of clause 12, wherein the in-fill lines are separated by an in-fill space, and wherein the turn region has a radius greater than the in-fill space.
15. The system of clause 10, wherein the in-fill pattern fills the area defined by the perimeter pattern.
16. A system comprising:
   a controller comprising a processor and a memory, wherein the memory comprises an application configured to direct the processor to perform a method, the method comprising:
   determining a plurality of layer patterns, wherein each layer pattern comprises a continuous deposition, wherein each layer pattern comprises:
      a perimeter pattern, comprising a first portion and a second portion; and
      an in-fill pattern within an area defined by the perimeter pattern, wherein the in-fill pattern comprises a plurality of in-fill lines and a plurality of turn regions, and wherein the in-fill lines are approximately parallel;
   wherein the plurality of layer patterns are stacked, wherein a first layer pattern and a second layer pattern are adjacent in the stack, and wherein the in-fill lines of the first layer pattern are at an offset angle from the in-fill lines of the second layer pattern.
17. The system of clause 16, wherein each layer pattern comprises a start point, wherein the start point is at a corner of the perimeter pattern.
18. The system of clause 17, wherein the start point of the first layer pattern is at a first corner of the perimeter pattern, wherein the start point of the second layer pattern is at a second corner of the perimeter pattern.
19. The system of clause 18, wherein the first corner and the second corner are adjacent corners within the perimeter pattern, wherein the offset angle is equal to an interior angle of the perimeter pattern.
20. The system of clause 16, wherein the first portion of the perimeter pattern of each layer pattern in the plurality of layer patterns comprises a first side and a second side;
   wherein the second portion of the perimeter pattern comprises a third side and a fourth side; and
   wherein the at least one of the first side, the second side, the third side, or the fourth side of the perimeter pattern of the first layer pattern is different than at least one of the first side, the second side, the third side, or the fourth side of the perimeter pattern of the second layer pattern.
21. A process of additive manufacturing comprising:
   providing a geometry of a component to be printed;
   providing a substrate;
   acquiring a surface geometry of the substrate;
   determining a series of individual deposition layers;
   printing the component according to the series of individual deposition layers;
   pausing the printing of the component with remaining unprinted individual deposition layers in the series;
   evaluating a physical characteristics of the component; and
   adjusting the remaining unprinted individual deposition layers based on the evaluated physical characteristics.
22. The process of clause 21, wherein the step of evaluating the physical characteristics comprises comparing the physical characteristics with the geometry of the component.
23. The process of clause 21, further comprising saving adjustments to the individual deposition layers.
24. The process of clause 23, wherein the step of saving is performed after the step of pausing.
25. The process of clause 23, wherein the step of determining the series of individual deposition layers comprises adjusting the geometry of the component based on a previous step of saving adjustments to the individual deposition layers.
26. The process of clause 21, wherein the step of determining the series of individual deposition layers comprises adjusting the geometry of the component based on the surface geometry of the substrate.
27. A process of additive manufacturing comprising:
   providing one or more component geometries;
   printing one or more articles based on the one or more component geometries;
   adjusting one or more print parameters;
   recording the adjusted one or more print parameters; and
   incorporating the recorded adjusted one or more print parameters into the one or more component geometries.
28. The process of clause 27, wherein the step of adjusting one or more print parameters occurs during the step of printing.
29. The process of clause 28, wherein adjusting one or more print parameters comprises evaluating a physical characteristic of the one or more articles.
30. The process of clause 29, further comprising pausing printing one or more articles to evaluate the physical characteristic of the one or more articles.
31. The process of clause 27, further comprising saving the recorded adjusted one or more print parameters.
32. A process of additive manufacturing comprising:
   providing a part;
   providing one or more component geometries to be incorporated on the part;
   determining a series of individual deposition patterns for each component geometry;
   determine a plurality of depositions, wherein each deposition comprises the series of the deposition patterns, wherein the plurality of depositions incorporates a coordinated movement between a weld torch and the part; and
   printing one or more components on the part by switching between components according to the plurality of depositions.
33. The process of clause 32, further comprising pausing the printing of one or more components to evaluate a physical characteristic of each component.
34. The process of clause 33, further comprising evaluating the physical characteristic each component to adjust one or more print parameters for each component.
35. The process of clause 33, wherein the physical characteristic of each component is saved.
36. The process of clause 35, wherein the saved physical characteristic of each component is compiled to form a print file for each component.
37. The process of clause 36, wherein the print file is incorporated into the component geometry.
38. The process of clause 36, wherein the print file is appended alongside the component geometry.
39. The process of clause 32, wherein the coordinated movement comprises tilting the substrate.
40. The process of clause 32, wherein the coordinated movement comprises tilting the weld torch.
41. A method of additively manufacturing a witness coupon, the method comprising:
   determining a build volume of a witness coupon;
   determining an orientation of the witness coupon to replicate a property of a part;
   preparing a build plate for additive manufacturing the witness coupon;
   securing a fixture to an additive manufacturing system;
   electrically coupling and grounding the fixture and the additive manufacturing system;
   depositing a first layer of a material on the build plate;
   depositing a layer of the material on the part;
   depositing additional sequential layers of the material on the first layer of a material on the build plate forming the witness coupon;
   manufacturing the witness coupon concurrently layer by layer with the part;
   wherein the sequential layers are configured to be representative of at least one property of the concurrently manufactured part.
42. The method of clause 41 further comprising, post-processing the witness coupon to match post-processing conditions of the part.
43. The method of clause 41 further comprising, extracting at least one test sample from the witness coupon.
44. The method of clause 43 further comprising, subjecting the at least one test sample to a quality assurance test selected from the group consisting of non-destructive evaluation, destructive testing, statistical analysis to validate the additive manufacturing process.
45. The method of clause 41 wherein, the build volume of the witness coupon is configured for a testing standard.
46. The method of clause 41 wherein, wherein the at least one property is selected from the group consisting of grain structure and stress orientations.
47. The method of clause 41 wherein, depositing the first layer of the material onto the build plate forms an interaction zone of the coupons and an interface between the witness coupon and the build plate.
48. The method of clause 41 wherein, the additional sequential layers are deposited with a process parameter representative of the part the process parameter is selected from the group consisting of heat input, deposition rate, and cooling.
49. An apparatus for additively manufacturing a witness coupon, the apparatus comprising:
   a fixture secured to an additive manufacturing system, the fixture being electrically coupled and grounded to the additive manufacturing system;
   wherein the fixture comprises a build plate configured to support the deposition of a material for a witness coupon;
   a material deposition system configured to deposit a first layer of the material onto the build plate and additional sequential layers of the material onto the first layer;
   wherein the material deposition system sequentially print layers of the coupon and the part and is configured so that the layers of the coupon are representative of a property of the part; and
   wherein the witness coupon and the part are manufactured concurrently.
50. The apparatus of clause 49 wherein, the property of the part is selected from the group consisting of heat input, deposition rate, cooling, grain structure and stress orientations.
51. The apparatus of clause 49 wherein, an orientation of the witness coupon is optimized for printing and configured to replicate properties of a concurrently printed part.
52. The apparatus of clause 49 wherein, the witness coupon is disposed at an electrical extremity from a grounding point.
53. The apparatus of clause 49 wherein, the fixture is configured so that the witness coupon is located proximal to the part.
54. The apparatus of clause 53 wherein, the fixture location is further configured to decrease a distance between the part and the coupon.
55. A method of additively manufacturing a witness coupon, the method comprising:
   mounting a part to a build plate of an additive manufacturing system, wherein the part is mechanically coupled to the build plate and electrically coupled to the build plate;
   mounting a coupon fixture to the part, wherein the coupon fixture is mechanically coupled to the part and electrically coupled to the part;
   depositing, by the additive manufacturing system, a layer of a feature component on the part by melting a material onto the part using an electrical current flowing through the material, the part, and the build plate; and
   depositing, by the additive manufacturing system, a layer of a witness coupon on the coupon fixture by melting the material onto the coupon fixture using an electrical current flowing through the material, the coupon fixture, the part, and the build plate.
56. The method of clause 55, further comprising repeating the steps of the depositing the layer of the feature component and of the depositing the layer of the witness coupon until the feature component has been additively manufactured and the witness coupon has been additively manufactured.
57. The method of clause 55, further comprising cooling the witness coupon on the coupon fixture by cooling the coupon fixture using coolant flowing through the coupon fixture, the part, and the build plate.
58. The method of clause 55, further comprising:
   mounting a second coupon fixture to the build plate, wherein the second coupon fixture is mechanically coupled to the build plate and electrically coupled to the build plate; and
   depositing, by the additive manufacturing system, a layer of a second witness coupon on the second coupon fixture by melting the material onto the second coupon fixture using an electrical current flowing through the material, the second coupon fixture, and the build plate.
59. The method of clause 55, further comprising:
   mounting a second coupon fixture to an external support, wherein the second coupon fixture is mechanically coupled to the external support; and
   depositing, by the additive manufacturing system, a layer of a second witness coupon on the second coupon fixture by melting the material onto the second coupon fixture using an electrical current flowing through the material and the second coupon fixture.
60. The method of clause 55, further comprising:
   depositing, by the additive manufacturing system, a layer of a second witness coupon on the build plate by melting the material onto the build plate using an electrical current flowing through the material and the build plate.
61. A system or apparatus configured to implement the method/process of any of clauses 1 to 9, 21 to 26, 27 to 31, 32 to 40, 41 to 48 and/or 55 to 60.

## Claims

1. A method of additively manufacturing a witness coupon, the method comprising:
mounting a part to a build plate of an additive manufacturing system, wherein the part is mechanically coupled to the build plate and electrically coupled to the build plate;
mounting a coupon fixture to the part, wherein the coupon fixture is mechanically coupled to the part and electrically coupled to the part;
depositing, by the additive manufacturing system, a layer of a feature component on the part by melting a material onto the part using an electrical current flowing through the material, the part, and the build plate; and
depositing, by the additive manufacturing system, a layer of a witness coupon on the coupon fixture by melting the material onto the coupon fixture using an electrical current flowing through the material, the coupon fixture, the part, and the build plate.

2. The method of claim 1, further comprising repeating the steps of the depositing the layer of the feature component and of the depositing the layer of the witness coupon until the feature component has been additively manufactured and the witness coupon has been additively manufactured.

3. The method of claim 1 or 2, further comprising cooling the witness coupon on the coupon fixture by cooling the coupon fixture using coolant flowing through the coupon fixture, the part, and the build plate.

4. The method of any of claims 1 to 3, further comprising:
mounting a second coupon fixture to the build plate, wherein the second coupon fixture is mechanically coupled to the build plate and electrically coupled to the build plate; and
depositing, by the additive manufacturing system, a layer of a second witness coupon on the second coupon fixture by melting the material onto the second coupon fixture using an electrical current flowing through the material, the second coupon fixture, and the build plate.

5. The method of any of claims 1 to 4, further comprising one of:
mounting a second coupon fixture to an external support, wherein the second coupon fixture is mechanically coupled to the external support, and depositing, by the additive manufacturing system, a layer of a second witness coupon on the second coupon fixture by melting the material onto the second coupon fixture using an electrical current flowing through the material and the second coupon fixture; and
depositing, by the additive manufacturing system, a layer of a second witness coupon on the build plate by melting the material onto the build plate using an electrical current flowing through the material and the build plate.

6. The method of any of claims 1 to 5, further comprising:
determining a build volume of the witness coupon; and
determining an orientation of the witness coupon to replicate a property of the feature component, wherein optionally the orientation of the witness coupon is optimized for printing and configured to replicate properties of the concurrently printed feature component.

7. The method of claim 6, wherein the build volume of the witness coupon is configured for a testing standard.

8. The method of any of claims 1 to 7, further comprising:
manufacturing the witness coupon concurrently layer by layer with the feature component;
wherein sequential layers of the witness coupon are configured to be representative of at least one property of the concurrently manufactured feature component.

9. The method of claim 8, wherein the at least one property is selected from the group consisting of heat input, deposition rate, cooling, grain structure and stress orientations.

10. The method of claim 8 or 9, further comprising, post-processing the witness coupon to match post-processing conditions of the feature component.

11. The method of any of claims 1 to 10, further comprising, extracting at least one test sample from the witness coupon.

12. The method of claim 11, further comprising, subjecting the at least one test sample to a quality assurance test selected from the group consisting of non-destructive evaluation, destructive testing, and statistical analysis to validate the additive manufacturing process.

13. The method of any of claims 1 to 12, wherein the witness coupon is disposed at an electrical extremity from a grounding point.

14. The method of any of claims 1 to 13, wherein the coupon fixture is configured so that the witness coupon is located proximal to the feature component, wherein optionally, the fixture location is further configured to decrease a distance between the feature component and the witness coupon.

15. An apparatus configured to implement the method of any of claims 1 to 14.
